(19) Europäisches Patentamt
European Patent Office
Office européen des brevets

(11) **EP 4 617 534 A1**

(12) **EUROPEAN PATENT APPLICATION**

(43) Date of publication:
**17.09.2025 Bulletin 2025/38**

(21) Application number: **24163559.8**

(22) Date of filing: **14.03.2024**

(51) International Patent Classification (IPC):
**F16K 3/26** (2006.01)        **F16K 3/24** (2006.01)
**F16K 41/10** (2006.01)

(52) Cooperative Patent Classification (CPC):
**F16K 3/246; F16K 3/265; F16K 41/103**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Globalforce IP Limited**
  **Ponsonby, Auckland 1011 (NZ)**
• **Hammerforce UK Limited**
  **London EC2A 4RJ (GB)**
• **Hammerforce Limited**
  **Auckland 1011 (NZ)**
• **Paterson, Ian Craig**
  **London EC2A 4RJ (GB)**
• **McCallum, Bruce**
  **Aucklan 1011 (NZ)**

• **Corsini, Paolo**
  **London EC2A 4RJ (GB)**
• **Pricci, Roberto**
  **London EC2A 4RJ (GB)**

(72) Inventors:
• **Paterson, Ian Craig**
  **London EC2A 4RJ (GB)**
• **McCallum, Bruce**
  **Auckland 1011 (NZ)**
• **Corsini, Paolo**
  **London EC2A 4RJ (GB)**
• **Pricci, Roberto**
  **London EC2A 4RJ (GB)**

(74) Representative: **Pearl Cohen Zedek Latzer Baratz UK LLP**
**The Gridiron Building**
**One Pancras Square**
**London N1C 4AG (GB)**

(54) **IMPROVEMENTS IN, OR RELATING TO VALVES AND METHODS THEREFOR**

(57)    A valve to control flow of a fluid under pressure, comprises: a valve body with a first port, and a second port, to, in part, define a duct therebetween, to duct the flow of the fluid between the first port and the second port; a valve bonnet removably engaged to the valve body between the first port and the second port; a valve member having an endless skirt at least in part controlled by a central stem within the duct from the valve bonnet, the endless skirt, when in the closed position, sealing against the valve bonnet at a first effective sealing diameter; and the endless skirt when in the open position defining an opening between the valve bonnet and endless skirt to allow fluid flow between the first port, via the opening and at least an interior diameter of the endless skirt, and the second port.

Figure 6

EP 4 617 534 A1

**Description**

**TECHNICAL FIELD OF THE INVENTION**

The present invention relates to valves, and methods therefor.

In particular, though not solely, the present invention is directed to valves that are referred to as linear acting valves, globe valves, and balanced globe valves.

**BACKGROUND OF THE INVENTION**

Each valve has its own advantages and disadvantages which are either up or down-weighted during the valve selection process for each specific use case (industry, media, conditions, and specific piping system requirement). When the task the valve must compete is not highly challenging and the valve simply needs to be 'good enough', then the primary selection criteria between valve types will be cost, technician familiarity, or simply preference.

It's important to address that the world of valves is extremely well progressed, valve technology has been advancing since well before the industrial revolution. An example of that change is that globe valves used to represent a much larger proportion of the valve market, but have slowly lost market share, particularly in isolation tasks as more and more valve options have entered the market. A good example was the invention of the ball valve by Crane in the 1940s. Ball valves now represent a significant share of the market in a hugely diverse range of industries, working fluids, sizes, and are paired with several actuation technologies to control them.

Another important characteristic of valves is that they are never 'the point' of a system, and apart from some small domestic use cases, a valve is very infrequently a retail item. The vast majority of valves are sold by companies via distributers, sometimes via an intermediate contractor, to users who then use those valves as part of a system to make some other end product or to deliver some service. If two valves are able to do the same 'good enough' job to enable whatever the value creation task is, then the remaining value proposition differentiator between valve products / types is generally purchase cost, or total cost of ownership.

Apart from cost, the remaining purchasing considerations a buyer will consider are reliability, uptime, weight, size, compliance with standards, response speed and behaviour and more. But generally, it is largely fair to claim that the vast majority of flow control use cases currently have a valve technology available which is at least serviceable - but it is also fair to say that many flow control tasks use valves which have a significant cost and weight associated with the valve and actuator assembly which many users would identify as a problem.

Ball valves, so named as their flow control element is shaped like a ball, are often used for hygienic use cases due to having good sealing properties and having simple operation. However, they also inherently contain cavities (between the ball and valve body) which can be difficult to flush. Some hygienic ball valves have additional ports added to the body to clean these cavities - which adds cost and complexity to the assembly and manufacture. High actuation torque requirements combined with the need to manufacture a very smooth spherical body can also drive significant cost, particularly in large sizes.

A globe valve (unlike most other valves) is named as such due to the globular shape of the valve body. Most other valves are named with reference to the geometry of their flow control element (also known as an obturator). A globe valve has a movable plug element that engages with a valve seat of either a hard or soft (also known as resilient) material. The globe valve normally has a body with at least one inlet and at least one outlet, between which is the plug element and valve seat to start, stop and regulate the flow between the inlet(s) and outlet(s). The plug element is normally attached to a stem or spindle which moves relative to a valve bonnet that engages to the valve body and seals it off. Typically, the valve body is sealed about the stem by a stuffing box. The stem, and hence the plug element, is moved on and off the valve seat normally by the stem engaging with a threaded interface to the bonnet - rotation of the stem moves the stem and hence the plug element up and down to open or close the valve, or vice versa. The rotation of the stem may be by hand, e.g., using a wheel, or by a mechanical actuation means, e.g., a stepper motor or similar, to rotate the stem and hence locate the plug element relative to the valve seat as needed for the control of flow desired. Direct linear actuation methods can also be used which do not include a threaded interface between the bonnet and stem - resulting in solely linear motion rather than helical motion of the stem.

Such valves may have the inlet(s) in line with the outlet(s), or at an angle to each other, and may be used for gasses, fluids, slurries, multiphase fluids or similar - collectively we will use the term fluid, but this may mean any form of flow that requires stopping, starting, or regulating through the valve.

A disadvantage of such globe valves is that high stem forces can be required to create a reliable leak free seal. Any valve seating method needs to create sufficient force (and therefore pressure over the contact area) between the flow control element and the valve seat to exceed the pressure of the flow it is controlling. Unbalanced globe valves (and therefore actuation systems) must additionally overcome the force generated by any differential pressure across the valve. Therefore, for a valve to control a high-pressure fluid the clamping force requirement of the flow control element to the valve seat (valve seat seal pressure) must be very high. Also, the clamping pressure force required to seal the robust stem via the stuffing box (stem seal pressure) must also be very high, adding to the friction of the system, further increasing actuation force. The stem must be robust to both sustain the compressive load required to generate a seal, and to resist buckling, especially in designs requiring long stems. These singularly, or in combination, result in a valve that is stiff to operate, must have seats and seals which are designed to absorb high actuation forces, and can have high wear, or require special materials and frequent maintenance.

A balanced piston/cage guided globe valve, often referred to as flow modulating control valves (so called as the overall workings are similar to a globe with the flow control element moving within the valve body to stop/start and regulate flow within a windowed cylinder, called a cage), use pressure balancing to significantly reduce the actuation force required to actuate the valve. The pressure associated with the process fluid does not have any large pressure areas to act against in the direction of actuation, meaning that precise control can be achieved without the need for large and powerful actuation or for the seat/seal to sustain such high loads or valve seat seal pressures. These control valves use a cage which is housed between the valve bonnet and body to retain the seat and guide the flow control element. The use of the cage as the guiding element means the internal surface of the cage must be machined to closely match the piston diameter, and therefore drives significant cost for these control valves and makes them incompatible with many use cases simply from a cost perspective. Simply eliminating the cage or using a cage which is not precisely machined is not a real option for these valves as the piston needs to be guided through its movement, or a heavy and stiff stem with significant guidance must be used, or there would no longer be a means of creating a pressure balanced action. Cages can be used to protect the obturator from damaging inclusions in the flow, in these cases (E.g. Choke valves) the cages are made to be extremely strong, but are large, heavy, and restrict flow. The heavy wall is critical as any deflection of the cylindrical cage would result in reduced sealability between the moving obturator and the cage.

By rotating the balanced piston globe valve stem direction to be on-axis with the flow in a straight-through valve an 'axial flow' valve is created. The most common design for this is the design pioneered by Mokveld. These valves exhibit several benefits in packaging size and flow capacity over 'Z' body style balanced piston control valves - but have the significant drawback of requiring a complex and expensive to produce internal gearbox or hydraulic system (in the case of the Oxford flow design) to control the flow control element's movement.

Butterfly (Including double-, triple-, quad-, or V-offset) valves include a rotating disk which seals against a resilient seat (generally in the case of 0-, single-, or double-offset valves), or a hard insert seat (generally in the case of triple-, quad-, or V-offset valves) when the face of the disc faces the axis of flow. Butterfly valves have been displacing ball valves in several applications in recent decades due to their lower material costs (especially at larger sizes) but have the significant drawback of having poor flow capacity, especially where thicker discs are used in higher pressure applications. The seating torque of these valves can be significant, and when in a partially open state the flow control element can experience high hydrodynamic forces - meaning that while smaller actuators are generally usable for butterfly valves than for ball valves, the actuation forces in some applications are still relatively high.

A further disadvantage these valve types is their size, especially when actuated valves are considered. Ball valves and Butterfly valves in many applications require actuators that are frequently much larger than the valve itself, and for pneumatic operation generally require integrated gearboxes (generally rack and pinion or scotch yolk) to transfer linear motion into rotary action which add to the cost of the total system. Actuated globe valve assemblies are very tall and long compared to the valve size. In addition to material usage, weight, packaging, and transport for such a size, the equipment or system which the valve assembly is installed into must have room for such size, physical support for its mass, and additional clearance around the valve assembly for maintenance and disassembly.

In time or process critical installations, or large valves, it is often not efficient or desirable to unbolt the valve from the flow conduits, e.g., pipes, to which it is attached. Rather the bonnet may be removed and the flow control element, stuffing box, valve body and actuator are serviced as needed, reassembled, and then loaded back into the valve body. Therefore, the space around the valve assembly to allow access and disassembly and assembly for such a "tall" component is a clear disadvantage. If a valve is to be removed from pipework, this requires further space around the valve (the space either designed into the system, or "made" at the time of removal by moving/removing other neighbouring components) to provide a path for removal of the valve. Such valves can be heavy and unwieldy. Replacement with a full new valve off the shelf (or purchased in) is expensive and can be time consuming as the process the valve controls must be interrupted until the replacement valve is installed.

For axial valves, ball valves, and triple offset valves unless an additional flanged port (or equivalent port access, e.g. threaded port) is designed into the valve body, the valves can be impossible to service without removal from the process pipework. In some applications this is a significant issue which results in increased service duration and downtime. The addition of a 'top entry' flange to solve this issue can add significant cost to the manufacturing cost of the valve.

Such servicing and maintenance require a specialist knowledge in how to disassemble the subassembly of valve bonnet, stem, stuffing box, cage and flow control element, replenish or repair them, reassemble them, and then reinstall them. Each step in between disassembly and reassembly requires further time and is an opportunity for an error or contamination. At best this may compromise valve function, at worst it may result in failure of the system the valve is connected to, or in.

The known architectures to date of globe type valves have numerous changes in flow direction from inlet(s) to outlet(s) across the flow control element. Often the change in flow direction is across a sharp edge that results in pressure drop, wear, cavitation and turbulence. Wear and cavitation will shorten the intervals between maintenance and inspection. Alleviation of pressure drop and turbulence may be achieved by using a valve with a larger flow path, but this comes at the expense of a large valve, and hence amplifies the issues noted above.

Further the valves of the prior art are manufactured and assembled for a specific application, or are overengineered and not focussed to provide a focussed and efficient valve. Either way, the assembled valves must be kept in stock, or made to order, for each and every application, and thus have a cost in inventory and storage space.

The valves known to date cannot be customised on demand to an application to provide a compact and efficient valve solution, e.g., by changing the flow control element, valve body, or actuator simply and effectively to provide a valve that is easily and quickly configurable.

Globe valves when installed often will handle materials that are dangerous if they leak, and it is desirable to detect such a leak. It is also useful from a maintenance perspective to know if there is a leak also, whether the material the valve handles is dangerous or not. Therefore it would be desirable to be able to detect leaks within such a valve at least at one or more seals, or the major seal boundaries.

The actuators in valves may have to operate very rapidly, and so there is an advantage and desire if there is the ability to prevent build-up of gas or material that would otherwise prevent actuation, such as by compression of such gases or similar.

Valves will often handle material that is dangerous, or that can present issues, for example if left in place for a long time. For example valve that handle food cannot be left uncleaned for health reasons. Valves that handle materials with particulates or similar also need regular cleaning. The most efficient and cost effective way to achieve this is by Clean In Place (CIP) methods where the pipe work or valve line is flushed to remove any remnants and clean the valve and connected pipes and lines. In situations where crevices or similar may be present material may build up, for example between a valve and the valve body, and the material may not be removed by standard CIP techniques. This presents a risk and may require period inspection and teardown to insure there is no risk, which costs time and money.

Actuators for valves come in various forms depending on the force the actuator is required to deliver, the material the valve is controlling and the control architecture in place or chosen to drive the actuator. The valve actuator may be powered electromagnetically, pneumatically, hydraulically, or mechanically, or manually. In some cases the operating media within the flow path can be used to energize the actuator, whether directly or indirectly. This is particularly useful in remote installations where separate actuation force/energy sources are not available. Depending on the energy source, the form factor of the valve and industry preferences and practicalities there also need to different methods to attach it to the valve body.

The valve body, actuator and components, and valve member may be made from differing materials. Depending on the process or pressure that is being controlled there are various methods/designs available to perform sealing of the valve member. There may be a use to have variations in the material behaviours at the sealing interface of the valve member and valve actuator or part thereof.

It can be desirable to ensure the material and process being controlled has a smooth and attached, low turbulent flow as possible through the valve. In this way there is the least drag, cavitation (and resultant damage) and the valve can be made efficient - ie as small as possible for the given flow rate, pressure and material handled.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

It is an object of the present invention to provide an improved valve, with improved flow efficiency for a given size and valve system layout, improved ability to maintain a smaller overall size for a given application, or increased ease to adapt a valve for a given installation, provide improved valve safety including leak detection and ease of operation, ease and confidence in cleaning of valves, provide ease of attachment of actuators and valve bonnets to globe style valves, improve or provide variety in sealing interfaces for globe valves, or to overcome the above shortcomings or address the above desiderata, or to at least provide the public with a useful choice.

## BRIEF DESCRIPTION OF THE INVENTION

In a first aspect the present invention may be said to broadly consist in **a valve** to control flow of a fluid under pressure, comprising,

A valve body with a first port, and a second port, to, in part, define a duct therebetween, to duct the flow of the fluid between the first port and the second port, A valve bonnet removably engaged to the valve body between the first port and the second port, to further define the duct, the valve bonnet having a valve end interior to the duct, and an opposing actuator end exterior to the duct,

A valve member having an endless skirt at least in part controlled by a central stem within the duct from the valve bonnet, the endless skirt having an outer periphery, which the valve body defines an annular chamber about, and the endless skirt having an inner periphery which defines an inner chamber, the valve member having a closed position to prevent flow of fluid, and an open position to allow flow of fluid,

The endless skirt, when in the closed position, sealing against the valve bonnet at a first effective sealing diameter, the endless skirt in co-axially moving supported engagement with the valve body or a part thereof, and the endless skirt in sealing engagement with an interior periphery of the annular chamber at a second effective sealing diameter, the first effective sealing diameter greater than the second effective sealing diameter, a first pressure area defined between the first effective sealing diameter and the second effective sealing diameter, the first pressure area on receipt of fluid under pressure providing a bias toward the closed position,

The endless skirt when in the open position defining an opening between the valve bonnet and endless skirt to allow fluid flow between the first port, via the opening and at least an interior diameter of the endless skirt, and the second port,

the central stem in co-axially moving supported engagement with the valve bonnet or part thereof and the central stem in sealing engagement with the valve bonnet at a third effective sealing diameter, less than the second effective sealing diameter, the third effective sealing diameter defining a second pressure area, the second pressure area on receipt of fluid under pressure providing a bias toward the closed position,

such that a valve is provided that is biased at least by the fluid under pressure towards the closed position when at and in between the open position or closed position when positive pressure is present within the duct.

Preferably the second pressure area is larger than the first pressure area.

Preferably the endless skirt is in sealing engagement at the closed position and with an interior periphery of the annular chamber at a second effective sealing diameter.

Preferably the valve bonnet has an actuator therein for external control of the valve member position.

Preferably in the first pressure area is between 30% and 70% of the second pressure area.

Preferably the first pressure area is approximately 50% of the second pressure area.

Preferably the endless skirt is in sealing engagement at, and between, the open position and the closed position, with the interior periphery of the annular chamber.

Preferably the first pressure area on receipt of fluid under pressure from the outer chamber provides a bias toward the closed position.

Preferably an extension there of the endless skirt seals to the flow conditioner, actuator, bonnet or parts thereof to seal off the fluid flow.

Preferably the valve body has a valve bonnet aperture (41) to which the valve bonnet is operatively connected to seal the duct, other than the first port and second port.

Preferably the seal providing the sealing of, the valve bonnet to the central stem, and or, the endless skirt to the valve body, is achieved by any one or more of a resilient member in sliding sealing engagement with the central stem, or endless skirt, or a flexible diaphragm sealing between the valve bonnet and the central stem, and or, the endless skirt and the valve body. Preferably the valve bonnet contains or holds an actuator for the central stem to move the valve member between the open position and closed position.

Preferably the actuator may be actuated by any one or more of the following, gas, fluid, magnetic, mechanical or electrical.

Preferably the actuator, or part thereof, is held or contained within the valve body by the valve bonnet and extends at least in part into the duct.

Preferably the actuator is integral with the bonnet and valve member.

Preferably the actuator, valve bonnet and valve member are a unitary subassembly that is removable from the valve body.

Preferably, the valve member and sealing elements alone separate the inlet and outlet volumes.

Preferably the endless skirt extends in an axis parallel to a main axis of the central stem and actuator.

Preferably the endless skirt is of constant cross section, at least on that part in sliding and sealing engagement with the interior periphery of the cavity.

Preferably there is a flow conditioner, as an extension into the duct, through which the stem extends, from the actuator or valve bonnet.

Preferably the flow conditioner provides a tangential edge between the valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably, the position at which the stem seal acts on the stem is at least partially encircled by the duct.

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through the endless skirt and keeps the flow attached.

Preferably the flow path through the valve body between the first port and second port is constant cross section, or flow area.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the duct between the first port and the second port has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a duct interior presenting surface of the valve bonnet when in the closed position.

Preferably the endless skirt is supported from the central stem by at least one vane.

Preferably there are a plurality of vanes.

Preferably at least a part of the flow conditioner extends into the endless skirt.

Preferably at least part of the flow conditioner extends either side of the at least one vane when the valve member is in the open or closed position and provides a relief into the flow conditioner which the at least one vane can pass into.

Preferably the valve is biased closed by the pressure of the fluid it is controlling.

Preferably there is a spring which biases the valve closed when no pressure is present.

Preferably the spring force is significantly less than the resultant forces of the pressure areas and design pressures of the valve.

Preferably the spring provides higher pre-load force than the force which would act to open the valve from the presence of vacuum within the valve, and atmospheric pressure acting outside the valve.

Preferably the first port and second port share the same or parallel axes, the valve bonnet and valve member being located at an at an angle between 15 and 75 degrees to the first port and second port axes.

Preferably the only part of the valve bonnet and actuator exposed to the fluid filled region of the duct is the face of the actuator including that part of the actuator the valve member seals to.

Preferably the valve body has no walls that are in fluid contact on either side thereof.

Preferably the valve body is only defined by the outer wall, the interior surface thereof is in contact with the fluid, the exterior surface is not in contact with the fluid.

Preferably there is an actuator at least in part within the valve bonnet which the at least one fluid port allows to equalise with the exterior of the valve body as the actuator moves.

Preferably the at least one fluid tight seal is a primary stem seal to seal between that part of the central stem extending into the duct, and the remainder thereof, the primary stem seal lying between an exterior of the central stem, and an interior of the valve bonnet.

Preferably the at least one fluid port, is in fluid communication above the primary stem seal to enable detection of a leak from the primary stem seal.

Preferably the at least one fluid tight seal is a primary bonnet seal to seal between that part of the valve bonnet extending into the duct, and the remainder thereof, the primary bonnet seal lying between and exterior of the valve bonnet, and the interior of the valve body.

Preferably the at least one fluid port is a second fluid port that allows detection of pressure or fluid above the primary bonnet seal and therefore determines the presence of a leak of fluid past the primary bonnet seal.

Preferably the at least one fluid port is a third fluid port in fluid communication between the primary stem seal and the second fluid port to enable detection of a leak from either of both of the primary stem seal or primary bonnet seal.

Preferably there is a secondary stem seal up from the primary stem seal.

Preferably the at least one fluid port can detect a leak from the primary and the secondary stem seals.

Preferably the third fluid port is in fluid communication between the primary stem seal and the secondary stem seal.

Preferably the at least one flushing channel is provided by a removable insert.

Preferably the removable insert is the same or smaller diameter than the valve bonnet and so can be extracted in the same direction from the valve body as the valve bonnet.

Preferably the removable insert is threadwise, pushfit, interference fit or otherwise secured in the valve body.

Preferably there are a plurality of flushing channels.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the only net pressure force the valve bonnet and actuator experience from the fluid is a net force in the axial direction of the valve bonnet and actuator.

Preferably the sealing perimeter of the valve member substantially matches the outer diameter of the valve bonnet, actuator and/or flow conditioner, such that when the valve member is in the closed position there is very little or none of the valve bonnet, actuator and/or flow conditioner exposed to the fluid, but so the sub assembly of the valve bonnet, actuator, and valve member can be removed from the valve body as the sub-assembly

Preferably the first sealing perimeter substantially matches the outer diameter of the valve bonnet, and the valve bonnet's outer diameter does not significantly deviate from that of the valve member's sealing parameter, such that there are no significant pressure areas (Net or otherwise) able to be acted upon by annular chamber pressure.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the valve bonnet is retained to the valve body by any one or more of the following, a plurality of bolts, for example in a circular array, an internal circlip to over-engage the valve bonnet, and under engage the valve body, threading of the valve bonnet into the valve body, an external collar to over engage the valve bonnet, and under engage the valve body, an internal collar to over engage the valve bonnet, and under engage the valve body.

In a second aspect the present invention consists in a **valve** (1) to control flow of a fluid, comprising,

A valve body (2) with a first port (3) and a second port (4), the valve body being only defined by an outer wall (43) running between the first port (3) and the second port, the outer wall having an exterior surface (44), and through the thickness of the outer wall (43), directly opposite the exterior surface (44), the outer wall (43) has an interior surface (45), the interior surface defining a duct (25) between the first port (3) and the second port (4), and in use the interior surface (45) is in contact with the fluid, and the exterior surface (44) is not in contact with the fluid,

A valve bonnet (5) removably engaged to the valve body (2) between the first port (3) and second port (4), partly enclosing the duct (25) therebetween,

A valve member (6) having a closed position and an open position, with an endless skirt (7) supported from a central stem (8) within the duct (25), the central stem (8) in sliding and sealing engagement with the valve bonnet (5), the endless skirt (7) in sliding and sealing engagement at, and between, the open position and the closed position, with an interior periphery (9) of the duct, the endless skirt (7) to also engage and seal to the valve bonnet (5) when in the closed position, and define an opening (10) between the valve bonnet (5) and endless skirt (7) when in the open position, and when in the open position, fluid can flow through the opening (10) and through an interior diameter (30) of the endless skirt 7).

Preferably the valve (1) has a smooth flow through the cavity and valve member.

In another aspect the present invention consists in a **valve** to control flow of a fluid, comprising,

A valve body with a first port and a second port, the valve body being defined by an outer wall that defines a duct between the first port and the second port, the outer wall having an interior surface that is in fluid contact with the fluid, and through the thickness of the wall, directly opposing the interior surface, the outer wall has an exterior surface, the exterior surface not being in fluid contact with the fluid, the valve body having no walls that are in fluid contact on either side thereof,

A valve bonnet removably engaged to the valve body between the first port and second port, partly enclosing the duct therebetween,

A valve member having a closed position and an open position, with an endless skirt supported from a central stem within the duct, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt.

Preferably the valve body has no walls that are in fluid contact on either side thereof.

Preferably the valve body is only defined by the outer wall, the interior surface thereof is in contact with the fluid, the exterior surface is not in contact with the fluid.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the valve bonnet is retained to the valve body by any one or more of the following, a plurality of bolts, for example in a circular array, an internal circlip to over-engage the valve bonnet, and under engage the valve body, threading of the valve bonnet into the valve body, an external collar to over engage the valve bonnet, and under engage the valve body, an internal collar to over engage the valve bonnet, and under engage the valve body.

Preferably there is a flow conditioner, as an extension into the duct, through which the stem extends, from the actuator or valve bonnet.

Preferably the flow conditioner provides a tangential edge between the valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through the endless skirt and keeps the flow attached.

Preferably the flow path through the valve body between the first port and second port is constant cross section, or flow area.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the duct between the first port and the second port has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a duct interior presenting surface of the valve bonnet when in the closed position.

Preferably the endless skirt is supported from the central stem by at least one vane.

Preferably there are a plurality of vanes.

Preferably at least a part of the flow conditioner extends into the endless skirt.

Preferably at least part of the flow conditioner extends either side of the at least one vane when the valve member is in the open or closed position and provides a relief into the flow conditioner which the at least one vane can pass into.

In another aspect the present invention consists in **a valve** to control flow of a fluid, comprising or including,

A valve body with a first port, and a second port,
A valve bonnet removably engaged to the valve body between the first port and the second port, defining a duct with the valve body therebetween,
A valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt,
At least one fluid tight seal between an exterior of the central stem and an interior of the valve bonnet, or between an exterior of the valve bonnet and an interior of the valve body, and
At least one fluid port from an exterior of the valve body to any one or more of the interior of the valve bonnet, or the exterior of the valve bonnet, to equalise the interior of the valve bonnet with the exterior of the valve body, or to detect a fluid leak past the at least one seal.

Preferable there is an actuator at least in part within the valve bonnet which the at least one fluid port allows to equalise with the exterior of the valve body as the actuator moves.

Preferably the at least one fluid tight seal is a primary stem seal to seal between that part of the central stem extending into the duct, and the remainder thereof, the primary stem seal lying between an exterior of the central stem, and an interior of the valve bonnet.

Preferably the at least one fluid port, is in fluid communication above the primary stem seal to enable detection of a leak from the primary stem seal.

Preferably the at least one fluid tight seal is a primary bonnet seal to seal between that part of the valve bonnet extending into the duct, and the remainder thereof, the primary bonnet seal lying between and exterior of the valve bonnet, and the interior of the valve body.

Preferably the at least one fluid port is a second fluid port that allows detection of pressure or fluid above the primary bonnet seal and therefore determines the presence of a leak of fluid past the primary bonnet seal

Preferably the at least one fluid port is a third fluid port in fluid communication between the primary stem seal and the second fluid port to enable detection of a leak from either of both of the primary stem seal or primary bonnet seal.

Preferably there is a secondary stem seal up from the primary stem seal.

Preferably the at least one fluid port can detect a leak from the primary and the secondary stem seals.

Preferably the third fluid port is in fluid communication between the primary stem seal and the secondary stem seal.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the valve bonnet is retained to the valve body by any one or more of the following, a plurality of bolts, for example in a circular array, an internal circlip to over-engage the valve bonnet, and under engage the valve body, threading of the valve bonnet into the valve body, an external collar to over engage the valve bonnet, and under engage the valve body, an internal collar to over engage the valve bonnet, and under engage the valve body.

Preferably there is a flow conditioner, as an extension into the duct, through which the stem extends, from the actuator or valve bonnet.

Preferably the flow conditioner provides a tangential edge between the valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through the endless skirt and keeps the flow attached.

Preferably the flow path through the valve body between the first port and second port is constant cross section, or flow area.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the duct between the first port and the second port has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a duct interior presenting surface of the valve bonnet when in the closed position.

Preferably the endless skirt is supported from the central stem by at least one vane.

Preferably there are a plurality of vanes.

Preferably at least a part of the flow conditioner extends into the endless skirt.

Preferably at least part of the flow conditioner extends either side of the at least one vane when the valve member is in the open or closed position and provides a relief into the flow conditioner which the at least one vane can pass into.

In another aspect the present invention consists in **a valve** to control flow of a fluid, comprising or including,

A valve body with a first port, and a second port,
A valve bonnet removably engaged to the valve body between the first port and the second port, defining a duct therebetween,
A valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt,
At least one flushing channel that is in fluid communication from upstream of the endless skirt to downstream of the endless skirt, when in the open position, between the interior periphery of the duct and an external periphery of the endless skirt.

Preferably the at least one flushing channel is provided by a removable insert.

Preferably the removable insert is the same or smaller diameter than the valve bonnet and so can be extracted in the same direction from the valve body as the valve bonnet.

Preferably the removable insert is threadwise, pushfit, interference fit or otherwise secured in the valve body.

Preferably there are a plurality of flushing channels.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the valve bonnet is retained to the valve body by any one or more of the following, a plurality of bolts, for example in a circular array, an internal circlip to over-engage the valve bonnet, and under engage the valve body, threading of the valve bonnet into the valve body, an external collar to over engage the valve bonnet, and under engage the valve body, an internal collar to over engage the valve bonnet, and under engage the valve body.

Preferably there is a flow conditioner, as an extension into the duct, through which the stem extends, from the actuator or valve bonnet.

Preferably the flow conditioner provides a tangential edge between the valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through the endless skirt and keeps the flow attached.

Preferably the flow path through the valve body between the first port and second port is constant cross section, or flow area.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the duct between the first port and the second port has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a duct interior presenting surface of the valve bonnet when in the closed position.

Preferably the endless skirt is supported from the central stem by at least one vane.

Preferably there are a plurality of vanes.

Preferably at least a part of the flow conditioner extends into the endless skirt.

Preferably at least part of the flow conditioner extends either side of the at least one vane when the valve member is in the open or closed position, and provides a relief into the flow conditioner which the at least one vane can pass into.

In yet another aspect the present invention consists in **a valve** to control flow of a fluid, comprising or including,

A valve body with at least one inlet, and at least one outlet,

A valve bonnet removably engaged to the valve body between the at least one inlet and at least one outlet, defining a cavity therebetween,

A valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the cavity, the endless skirt to also engage and seal to the valve bonnet when in a closed position, and define an opening between the valve bonnet and endless skirt when in an open position, and when in the open position, fluid can flow through the opening and through an interior diameter of the endless skirt,

The valve member when in the open position presenting a tangential edge between any one or more of,

An uppermost stream edge of the endless skirt,

A downmost stream edge of the endless skirt, and/or

A downstream edge of the valve bonnet transition to the stem,

Such that a valve is provided that has a smooth flow through the cavity and valve member.

Preferably the interior diameter defines an inner chamber.

Preferably the downstream pressure area defined by the stem seal diameter is larger, but not more than 20% larger, than the downstream facing pressure area, paired with a actuator bias that is of sufficient force to hold the valve closed against a vacuum condition in the inner chamber.

Preferably the valve body and valve bonnet or actuator define an annular chamber that is fluidly connected to the inner chamber when the valve member is in the open position.

In one form of the present invention the annular chamber is in the inlet volume and leads to the valve member when in the open position, and the inner chamber leads to the outlet volume. However in other configurations this may be the opposite and the inlet volume leads to the inner chamber, and this in turn, when the valve is in the open position leads to the annular chamber which is in the outlet volume.

Preferably the seal pack, which seals between the process media and atmosphere, is affixed into the valve bonnet from the fluid side of the valve bonnet.

Preferably no part of the annular chamber the valve member slides in resides within the diameter of a seal between the valve body and valve member.

Preferably pressure of the fluid acts on an overall surface area of the valve member to bias it open, or an overall surface area of the valve member to bias it closed, or there is an overall balance of surface areas of the valve member such that is it neutrally biased by the pressure of the fluid.

Preferably the overall surface area is provided by an upstream facing surface on an outside diameter of the endless member.

Preferably the overall surface area is provided by a downstream facing surface on an outside diameter of the endless member.

Preferably the valve is biased closed by the pressure of the fluid it is controlling.

Alternatively, the valve is balanced as to enable easier opening.

Preferably the first pressure area defined by the frontal area (for example, diameter) of the stem is matched to the second pressure area defined by the difference between the face sealing diameter and the seal between the body and endless skirt, such that the valve member is unbiased by the fluid pressure upstream and downstream of it.

Alternatively, the first pressure area defined by the frontal area of the stem (for example the diameter) is larger than the second pressure area defined by the difference between the face sealing diameter and the seal between the body and endless skirt to ensure pressure assisted closing of the valve member when the larger pressure is on either side of the valve.

Preferably the stem allows fluid to flow (whether the same or different) through its interior, into, or towards, the interior diameter.

Preferably the valve member defines a sealing surface between the first diameter and a fourth diameter, and the area of the sealing surface is chosen for a given fluid pressure, and material hardnesses of the valve bonnet and valve member such that when in the closed position either or both of the valve bonnet and valve member undergo elastic, transient (localised plastic) or plastic deformation at least on the sealing surface.

Preferably the valve bonnet is retained to the valve body by any one or more of the following, a plurality of bolts, for example in a circular array, an internal circlip to over-engage the valve bonnet, and under engage the valve body, threading of the valve bonnet into the valve body, an external collar to over engage the valve bonnet, and under engage the valve body, an internal collar to over engage the valve bonnet, and under engage the valve body.

Preferably there is a flow conditioner, as an extension into the duct, through which the stem extends, from the actuator or valve bonnet.

Preferably the flow conditioner provides a tangential edge between the valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through the endless skirt and keeps the flow attached.

Preferably the flow path through the valve body between the first port and second port is constant cross section, or flow area.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the duct between the first port and the second port has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a duct interior presenting surface of the valve bonnet when in the closed position.

Preferably the endless skirt is supported from the central stem by at least one vane.

Preferably there are a plurality of vanes.

Preferably at least a part of the flow conditioner extends into the endless skirt.

Preferably at least part of the flow conditioner extends either side of the at least one vane when the valve member is in the open or closed position.

In an alternative design, the face sealing diameter and seal between the skirt and body are matched as to not result generate a pressure area, an additional seal between the skirt and valve body is included - the difference in pressure areas between the two body-skirt seals matching the stem seal area - resulting in a totally neutrally balanced valve member.

With the exception of the flow deflector and sealing system mounted to the wetted side of the bonnet, preferably there are no bolted or threaded connections between the face of the bonnet exposed to the inner chamber, and the mounting connection of the bonnet to the valve body.

In another aspect the present invention may be said to broadly consist in **a valve** to control flow of a fluid, comprising or including,

A valve body with at least one inlet, and at least one outlet,

A valve bonnet removably engaged to the valve body between the at least one inlet and at least one outlet, defining a cavity therebetween,

A valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the cavity, the endless skirt to also engage and seal to the valve bonnet when in a closed position, and define an opening between the valve bonnet and endless skirt when in an open position, and when in the open position, fluid can flow through the opening and through an interior diameter of the endless skirt,

Such that a valve is provided that has a smooth flow through the cavity and valve member, and wherein, the at least one inlet and the at least one outlet share the same or parallel axes, the valve bonnet and valve member being located at an at an angle between 15 and 75 degrees to the inlet and outlet axes.

In another aspect the present invention consists in a **method of providing a valve** (1) to control flow of a fluid under pressure, comprising,

Providing a valve body (2) with a first port (3), and a second port (4), to, in part, define a duct (25) therebetween, to duct the flow of the fluid between the first port and the second port,

Providing a valve bonnet (5) removably engaged to the valve body (2) between the first port and the second port, to further define the duct,

Providing a valve member (6) having an endless skirt (7) supported by a central stem (8) within the duct from the valve bonnet (5), the endless skirt (7) having an outer periphery, which the valve body (2) defines an annular chamber (38) about, and the endless skirt (7) having an inner periphery (9) which defines an inner chamber (42), the valve member (6) having a closed position to prevent flow of fluid, and an open position to allow flow of fluid,

Configuring the endless skirt (7), when in the closed position, to seal against the valve bonnet at a first sealing diameter (D1), the endless skirt in sliding and sealing engagement at, and between, the open position and the closed position, with an interior periphery of the annular chamber at a second sealing diameter (D2), the first sealing diameter (D1) greater than the second sealing diameter (D2), a first pressure area defined between the first sealing diameter and the second sealing diameter, the first pressure area on receipt of fluid under pressure providing a bias toward the closed position,

The endless skirt when in the open position defining an opening between the valve bonnet and endless skirt to allow fluid flow between the first port, via the opening and an interior diameter of the endless skirt, and the second port,

the central stem in sliding and sealing engagement with the valve bonnet at a third sealing diameter (D3), less than the second sealing diameter, the third sealing diameter (D3)

defining a second pressure area, the second pressure area on receipt of fluid under pressure providing a bias toward the closed position,

such that a valve is provided that is biased towards the closed position when in either the open position or closed position.

In another aspect the present invention consists in **a method of operating a valve** (1) to control flow of a fluid, comprising,

Providing a valve body (2) with a first port (3) and a second port (4), the valve body being only defined by an outer wall (43) running between the first port (3) and the second port, the outer wall having an exterior surface (44), and through the thickness of the outer wall (43), directly opposite the exterior surface (44), the outer wall (43) has an interior surface (45), the interior surface defining a duct (25) between the first port (3) and the second port (4), and in use the interior surface (45) is in contact with the fluid, and the exterior surface (44) is not in contact with the fluid,

Providing a valve bonnet (5) removably engaged to the valve body (2) between the first port (3) and second port (4), partly enclosing the duct (25) therebetween,

Providing a valve member (6) having a closed position and an open position, with an endless skirt (7) supported from a central stem (8) within the duct (25), the central stem (8) in sliding and sealing engagement with the valve bonnet (5), the endless skirt (7) in sliding and sealing engagement at, and between, the open position and the closed position, with an interior periphery (9) of the duct, the endless skirt (7) to also engage and seal to the valve bonnet (5) when in the closed position, and define an opening (10) between the valve bonnet (5) and endless skirt (7) when in the open position, and when in the open position, fluid can flow through the opening (10) and through an interior diameter (30) of the endless skirt 7),

Such that a valve (1) is provided that has a smooth flow through the cavity and valve member.

In another aspect the present invention consists in **a method of operating a valve** to control flow of a fluid, comprising,

Providing a valve body with a first port and a second port, the valve body being defined by an outer wall that defines a duct between the first port and the second port, the outer wall having an interior surface that is in fluid contact with the fluid, and through the thickness of the wall, directly opposing the interior surface, the outer wall has an exterior surface, the exterior surface not being in fluid contact with the fluid, the valve body having no walls that are in fluid contact on either side thereof,

Providing a valve bonnet removably engaged to the valve body between the first port and second port, partly enclosing the duct therebetween,

Providing a valve member having a closed position and an open position, with an endless skirt supported from a central stem within the duct, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt,

Such that a valve is provided that has a smooth flow through the cavity and valve member.

In another aspect the present invention consists in **a method of operating a valve** to control flow of a fluid, comprising or including,

Providing a valve body with a first port, and a second port,

Providing a valve bonnet removably engaged to the valve body between the first port and the second port, defining a duct with the valve body therebetween,

Providing a valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt,

Providing at least one fluid tight seal between an exterior of the central stem and an interior of the valve bonnet, or between an exterior of the valve bonnet and an interior of the valve body, and

Providing at least one fluid port from an exterior of the valve body to any one or more of the interior of the valve bonnet, or the exterior of the valve bonnet, to equalise the interior of the valve bonnet with the exterior of the valve body, or to detect a fluid leak past the at least one seal.

In another aspect the present invention consists in **a method of operating a valve** to control flow of a fluid, comprising or including,

Providing a valve body with a first port, and a second port,

Providing a valve bonnet removably engaged to the valve body between the first port and the second port, defining a duct therebetween,

Providing a valve member having a closed position and an open position, with an endless skirt supported from a central stem within the cavity, the central stem in sliding and sealing engagement with the valve bonnet, the endless skirt in sliding and sealing engagement at, and between, the open position and the closed position, with an interior periphery of the duct, the endless skirt to also engage and seal to the valve bonnet when in a closed position, and define an opening between the valve bonnet and endless skirt when in an open position, and when in the open position, fluid can flow through the opening and through an interior diameter of the endless skirt,

At least one flushing channel that is in fluid communication from upstream of the endless skirt to downstream of the endless skirt, when in the open position, between the interior periphery of the duct and an external periphery of the endless skirt.

In another aspect the present invention consists **in a method of providing a valve** to control flow of a fluid, comprising or including,

Providing a valve body with at least one inlet, and at least one outlet,

Providing a valve bonnet removably engaged to the valve body between the at least one inlet and at least one outlet, defining a cavity therebetween,

Providing a valve member having a closed position and an open position, with an endless skirt of constant outer cross-section, supported from a central stem within the cavity, the central stem in sliding and sealing engagement with the valve bonnet, the endless skirt in sliding and sealing engagement at, and between, the open position and the closed position, with an interior periphery of the cavity, the endless skirt to also engage and seal to the valve bonnet when in a closed position, and define an opening between the valve bonnet and endless skirt when in an open position, and when in the open position, fluid can flow through the opening and through an interior diameter of the endless skirt,

the valve member when in the open position presents a tangential edge between anyone or more of,

An uppermost stream edge of the endless skirt,

A downmost stream edge of the endless skirt, and/or

A downstream edge of the valve bonnet transition to the stem,

Such that a valve is provided that has a smooth flow through the cavity and valve member.

Preferably the valve body has a valve bonnet aperture to which the valve bonnet is operatively connected to seal the cavity, other than the at least one inlet and at least one outlet.

Preferably the valve bonnet contains or holds an actuator for the stem to move the valve member between the open position and closed position.

Preferably the actuator may be actuated by any one or more of the following, gas, fluid, magnetic, mechanical or electrical.

Preferably the actuator, or part thereof, is held or contained within the valve body by the valve bonnet and extends at least in part into the cavity.

Preferably the actuator is integral with the bonnet and valve member.

Preferably the actuator, valve bonnet and valve member are a unitary subassembly that is removable from the valve body.

Preferably the valve body and valve bonnet or actuator define an annular chamber that is fluidly connected to the inner chamber when the valve member is in the open position.

In one form of the present invention the annular chamber is in the inlet volume and leads to the valve member when in the open position, and the inner chamber leads to the outlet volume. However in other configurations this may be the opposite and the inlet volume leads to the inner chamber, and this in turn, when the valve is in the open position leads to the annular chamber which is in the outlet volume.

Preferably, the valve member and sealing elements alone separate the inlet and outlet volumes.

Preferably there is a flow conditioner, as an extension into the cavity through which the stem extends, from the actuator or valve bonnet.

Preferably the flow conditioner provides the tangential edge between valve bonnet, or actuator, and the stem.

Preferably there is an aperture in the flow conditioner through which the stem extends.

Preferably there is a stem seal in the aperture to slidingly seal the stem.

Preferably the stem seal is biased to seal by the pressure of the fluid.

Preferably, the position at which the stem seal acts on the stem is at least partially encircled by the cavity.

Preferably the seal pack, which seals between the process media and atmosphere, is affixed into the valve bonnet from the fluid side of the valve bonnet.

Preferably no part of the annular cavity within which the valve member slides resides within the diameter of a seal between the valve body and valve member

Preferably the flow conditioner can be chosen based on the fluid type, for example dependant on viscosity, phase, inclusions, and the desired effect thereon, e.g. to keep the flow laminar, turbulent, remove or add cavitation, improve mixing or similar.

Preferably the flow conditioner aids in directing the fluid flow through, or from, the endless skirt and keeps the flow attached.

Preferably the flow path through the valve body from the at least one inlet to the at least one outlet is constant cross section.

Preferably when the valve member is an open position there is a continuous curvature provided by the tangential edges between the valve body and the upper most and lower most edges of the endless skirt, and the valve bonnet, via the flow conditioner, and the stem.

Preferably there is a flow splitter adjacent to the valve member, and this may be upstream of the valve member or downstream of the valve member depending on the flow orientation through the valve.

Preferably the cavity between the at least one inlet and the at least one outlet has a continuous curvature with no sharp edges, save for the flow splitter if present.

Preferably the flow splitter splits the flow vertically, or horizontally or both.

Preferably the flow splitter directs the flow to improve the flow through, or from, the endless skirt.

Preferably the endless skirt presents an annular sealing surface to engage and seal to a cavity interior presenting surface of the valve bonnet when in the closed position.

Preferably the endless skirt is supported from the central stem by at least one vane.

Preferably there are a plurality of vanes.

Preferably pressure of the fluid acts on an overall surface area of the valve member to bias it open, or an overall surface area of the valve member to bias it closed, or there is an overall balance of surface areas of the valve member that is it neutrally biased by the pressure of the fluid.

Preferably the overall surface area is provided by an upstream facing surface on an outside diameter of the endless member.

Preferably the overall surface area is provided by a downstream facing surface on an outside diameter of the endless member.

Preferably the valve is biased closed by the pressure of the fluid it is controlling.

Alternatively the valve is balanced as to enable easier opening,

Preferably the first pressure area defined by the frontal area (for example, diameter) of the stem is matched to the second pressure area defined by the difference between the face sealing diameter and the seal between the body and endless skirt, such that the valve member is unbiased by the fluid pressure upstream and downstream of it.

Alternatively, the first pressure area defined by the frontal area of the stem (for example the diameter) is larger than the second pressure area defined by the difference between the face sealing diameter and the seal between the body and endless skirt to ensure pressure assisted closing of the valve member when the larger pressure is on either side of the valve.

In an alternative design, the face sealing diameter and seal between the skirt and body are matched as to not result generate a pressure area, an additional seal between the skirt and valve body is included - the difference in pressure areas between the two body-skirt seals matching the stem seal area - resulting in a totally neutrally balanced valve member.

Preferably the stem allows fluid to flow (whether the same or different) through its interior, into, or towards, or from the interior diameter.

Preferably the at least one inlet and at least one outlet share the same or parallel axes, the valve bonnet and valve member being located at an at an angle between 15 and 75 degrees to the inlet and outlet axes.

Preferably the valve bonnet and actuator are not exposed to the fluid filled region of the cavity save for that part of the face of the actuator the valve member seals to such as the flow conditioner.

Preferably the only net pressure force the valve bonnet and actuator experience from the fluid is a net force in the axial direction of the valve bonnet and actuator.

Preferably the sealing perimeter of the valve member substantially matches the outer diameter of the valve bonnet, actuator and/or flow conditioner, such that when the valve member is in the closed position there is very little or none of the valve bonnet, actuator and/or flow conditioner exposed to the fluid.

In another aspect the present invention consists in **a valve** as described herein with reference to any one or more of the accompanying drawings.

In another aspect the present invention consists in **a method of providing a valve** as described herein with reference to any one or more of the accompanying drawings.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present, but other features can also be present. Related terms such as "comprise" and "comprised" are to be interpreted in the same manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7).

The entire disclosures of all applications, patents and publications, cited above and below, if any, are hereby incorporated by reference.

This invention may also be said broadly to consist in the parts, elements and features referred to or indicated in the specification of the application, individually or collectively, and any or all combinations of any two or more of said parts, elements and features, and where specific integers are mentioned herein which have known equivalents in the art to which this invention relates, such known equivalents are deemed to be incorporated herein as if individually set forth.

Other aspects of the invention may become apparent from the following description which is given by way of example only and with reference to the accompanying drawings.

## BRIEF DESCRIPTION OF THE DRAWINGS

Preferred forms of the present invention will now be described with reference to the accompanying drawings in which;

**Figure 1** Shows an outside side view of an in-line two-way valve in keeping with the present invention,

**Figure 2** Shows a similar view as Figure 1 with the valve bonnet, actuator and valve member removed as a sub-assembly,

**Figure 3** Shows a horizontal cross-section in plan view of the valve in Figure 1, showing the annular chamber about the valve actuator, and the flow splitter,

**Figure 4** Shows an end view of the present invention, which may be an inlet (or outlet) to the valve, showing a flow splitter,

**Figure 5** Shows a vertical cross section in side view of the valve showing the actuator and valve element in the closed position,

**Figure 6** Shows a vertical cross section in side view of the valve showing the actuator and valve element in the open position,

**Figure 7** Shows an isometric end view of the valve element,

**Figure 8** Shows Detail B of Figure 6, a close up cross section of the valve member, and the difference in outside diameter (first diameter) and skirt diameter (second diameter) forming a first pressure area to bias the valve closed,

**Figure 9** Shows a vertical cross section similar to that of Figure 5, showing the first pressure area and second pressure area the fluid pressure acts on,

**Figure 10** Shows a schematic of the pressure areas of Figure 9 and the directions of resulting forces on those areas, in this case for the schematic shown in Figure 20,

**Figure 11** Shows an exploded isometric view, similar to that of Figure 2, of the sub-assembly of the valve bonnet, actuator, valve element and flow conditioner in further exploded view,

**Figure 12** Shows a vertical cross section of the sub-assembly of the valve bonnet, actuator, flow conditioner and valve element in vertical cross section in the closed position,

**Figure 13** Shows a vertical cross section of the sub-assembly of the valve bonnet, actuator, flow conditioner and valve element in vertical cross section in the open position,

**Figure 14** Shows a schematic of the valve of in vertical cross section in the closed position,

**Figure 15** Shows the schematic of the valve of Figure 14 in vertical cross section in the open position,

**Figure 16** Shows an outside side view of a ninety-degree two-way valve variation in keeping with the present invention,

**Figure 17** Shows an isometric side view of a rotary actuator with a helical path to act and move the stem or stem, and

**Figure 18** Shows a cross section of the rotary actuator of Figure 17,

**Figure 19** Shows a schematic of Detail C from Figure 19 when the present invention is configured to be pressure biased closed, an overall pressure surface area is acted on by the pressure fluid to act to close the valve,

**Figure 20** Shows a schematic of Detail C, when the present invention is configured to be fully balanced as to enable easier opening, the inlet and outlet pressures acting on the valve member endless skirt cancelling each other out, the main closing force coming from the pressure acting on the valve stem,

**Figure 21** Shows a schematic of Detail C, when the present invention is configured to be fully neutrally balanced, having an external port to atmosphere to do so,

**Figure 22** Shows a schematic axial cross section of the valve member similar to Detail C, showing the annular chamber, inner chamber, and valve body, showing the resultant pressure peripheries (in this case diameters due to the circular nature of the valve) which define the various pressure areas, to bias the valve member open, closed, or neutral by pressure of the fluid,

**Figure 23** Shows a vertical cross section through a valve, with various ports for pressure relief and leak detection,

**Figure 24** Shows a cross section through a valve showing a replaceable wear insert for flushing,

**Figure 25** Shows a similar view to that of Figure 24 showing a valve with body flushing channels around the periphery of the endless skirt of the valve member,

**Figure 26** Shows a similar view to that of Figure 25 with a valve body seal,

**Figure 27** Shows a similar view to that of Figure 26 with grooves in the endless skirt to allow for flushing the endless skirt periphery when in the open position,

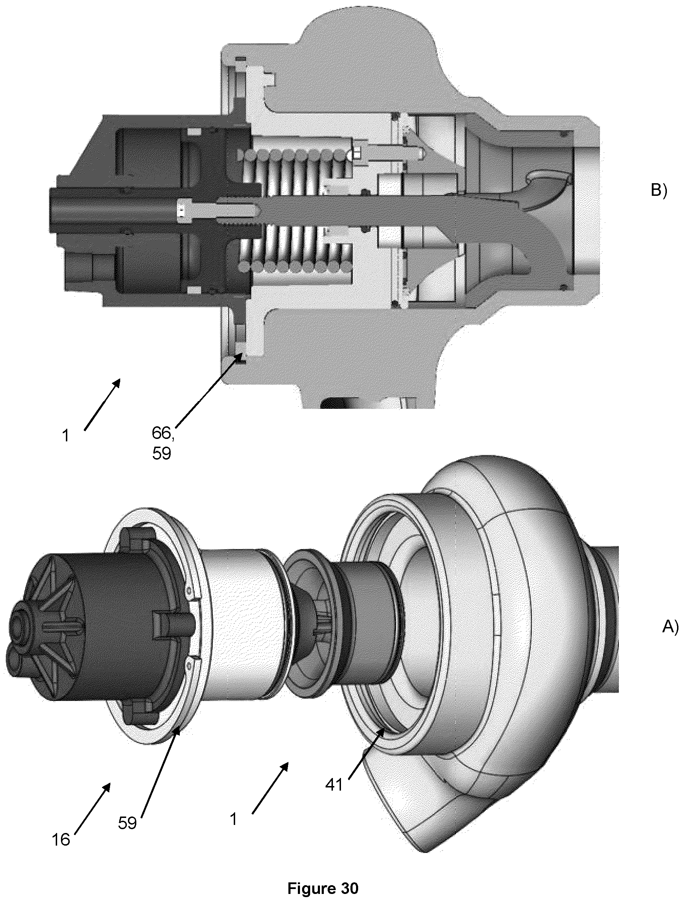

**Figure 28** Shows in cross section detail the valve of Figure 24 in a closed position, and the flushing insert below the valve member,

31 EP 4 617 534 A1 32

as well as the internal circlip bonnet retention of Figure 30, and also shows the flow splitter,

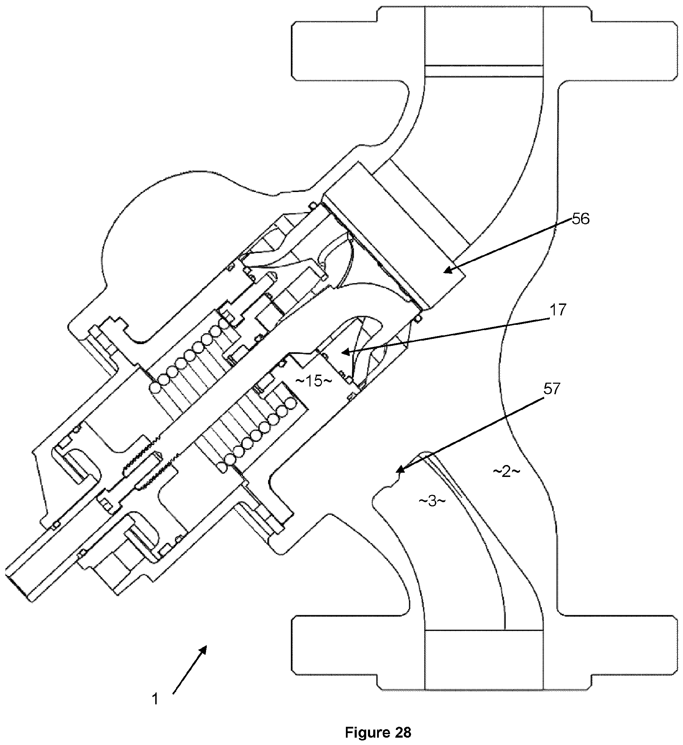

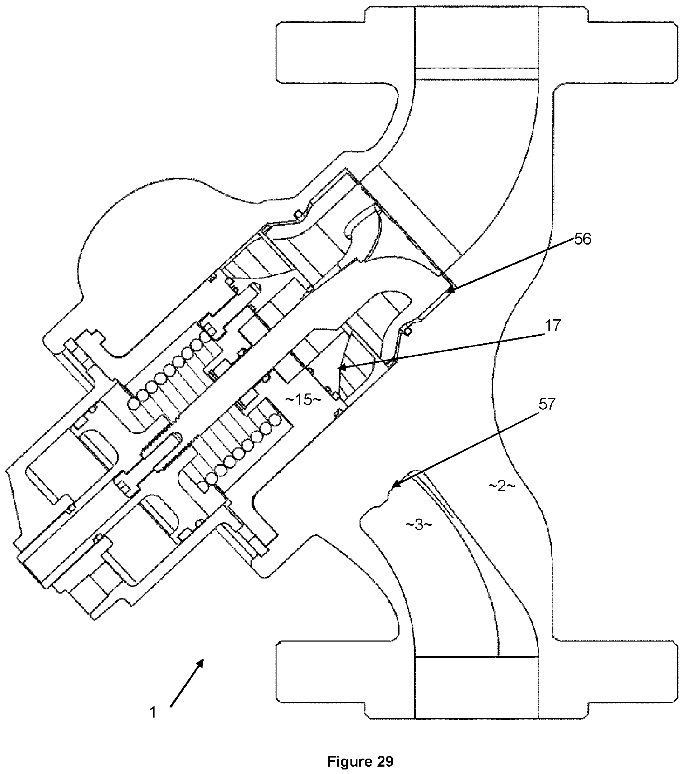

**Figure 29** Shows the valve of Figure 28 with the valve in the open position and the clearance provided to flush around the outer periphery of the valve member, as well as the internal circlip bonnet retention of Figure 30,

**Figure 30** Shows at A) and isometric exploded view, and at B) a vertical cross section view of a valve of the present invention where the valve bonnet as a unitary assembly is retained by an internal circlip,

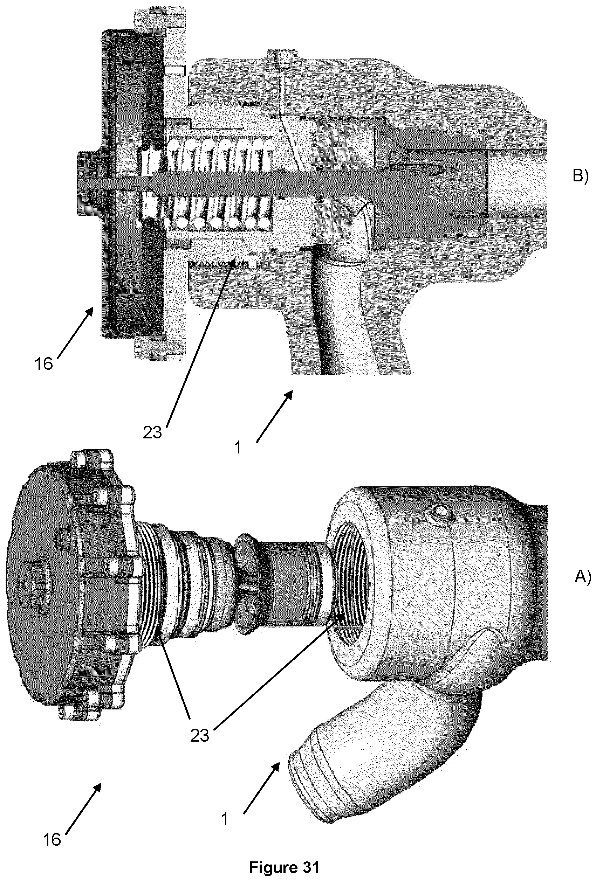

**Figure 31** Shows at A) and isometric exploded view, and at B) a vertical cross section view of a valve of the present invention where the valve bonnet is retained by threaded connection to the valve body,

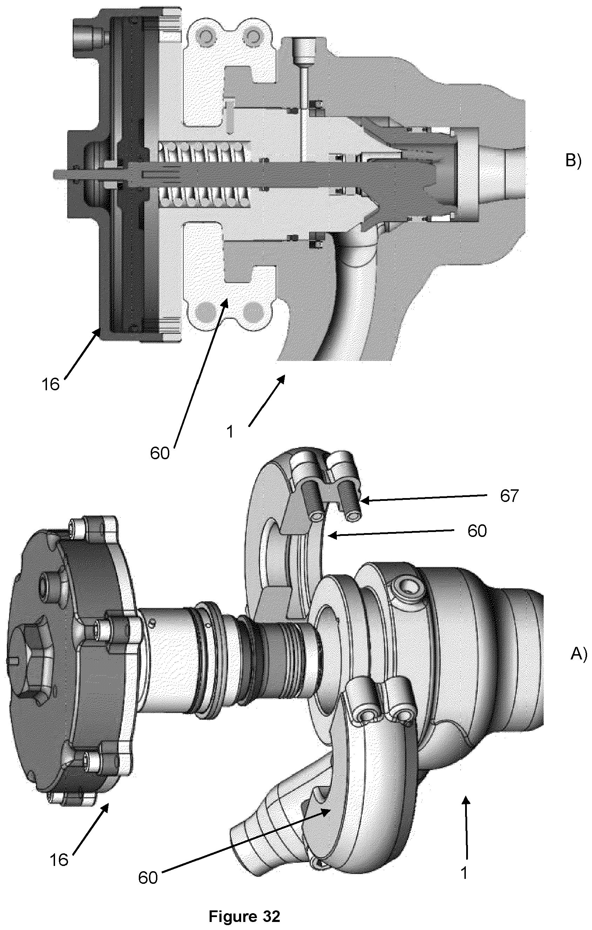

**Figure 32** Shows at A) and isometric exploded view, and at B) a vertical cross section view of a valve of the present invention where the valve bonnet is retained by an external collar,

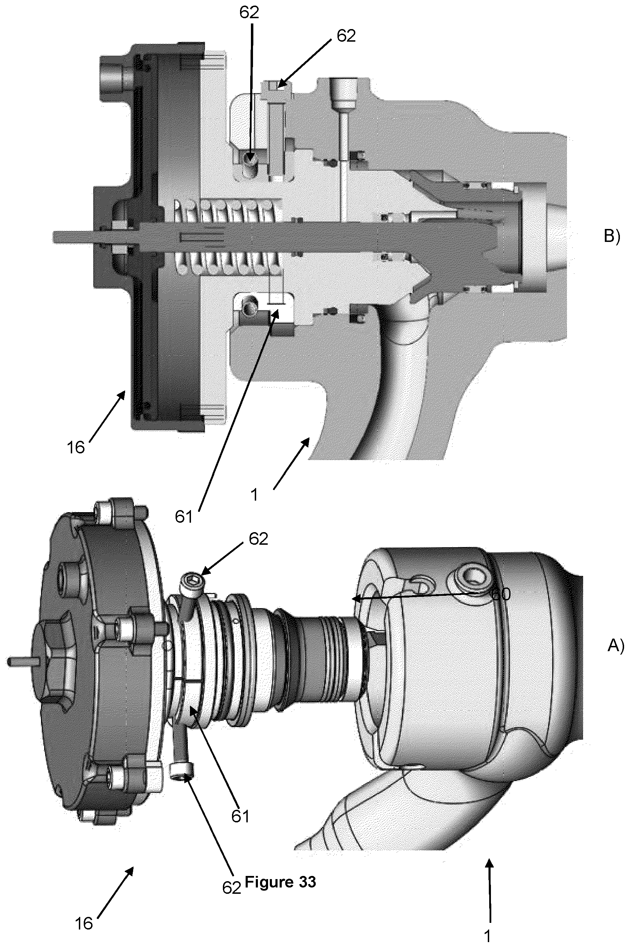

**Figure 33** Shows at A) and isometric exploded view, and at B) a vertical cross section view of a valve of the present invention where the valve bonnet is retained by an internal collar,

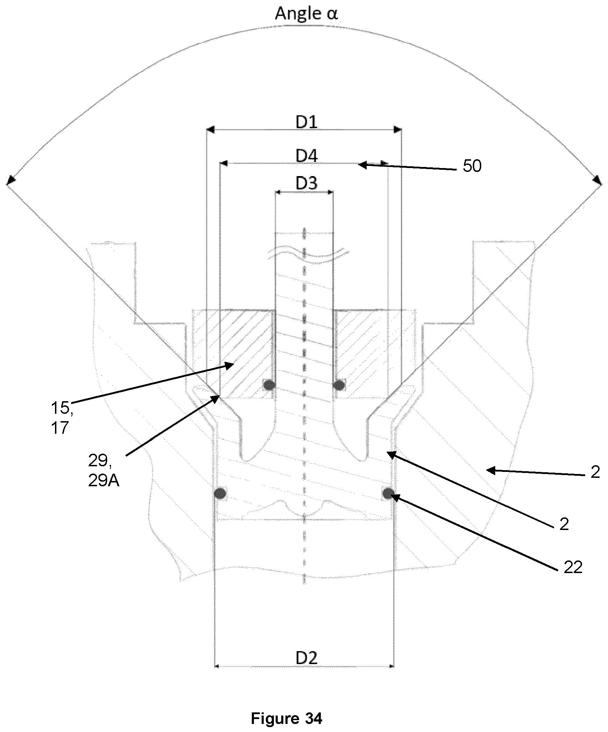

**Figure 34** Shows a close up vertical cross section of the valve member and bonnet interface, the various pressure diameters involved for specific sealing geometries,

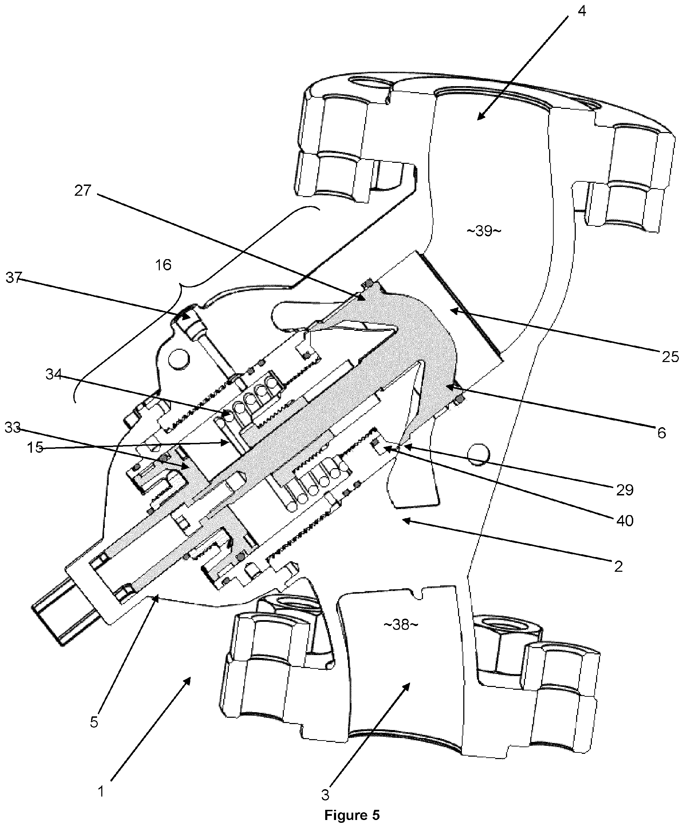

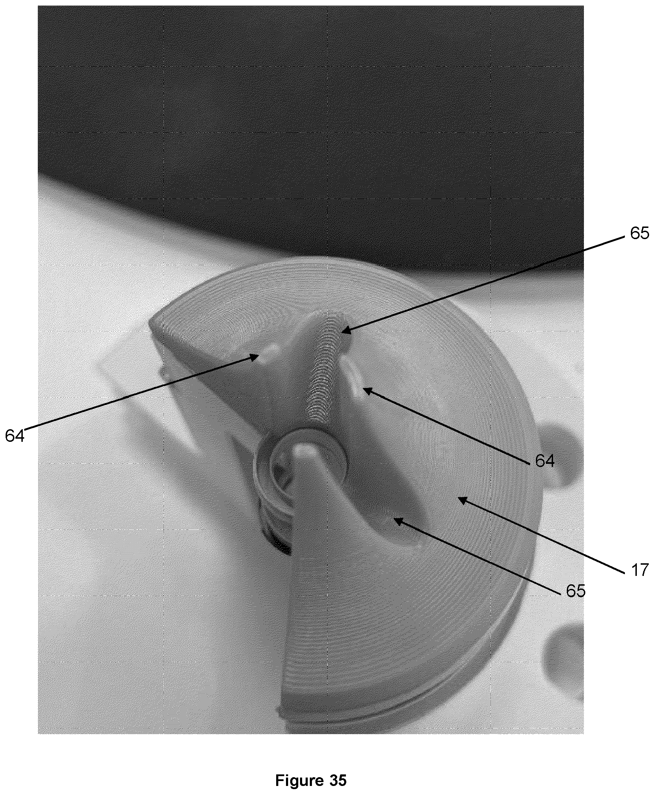

**Figure 35** Shows an end view of the flow conditioner on the end of the valve bonnet when seen in Direction A of Figure 5.

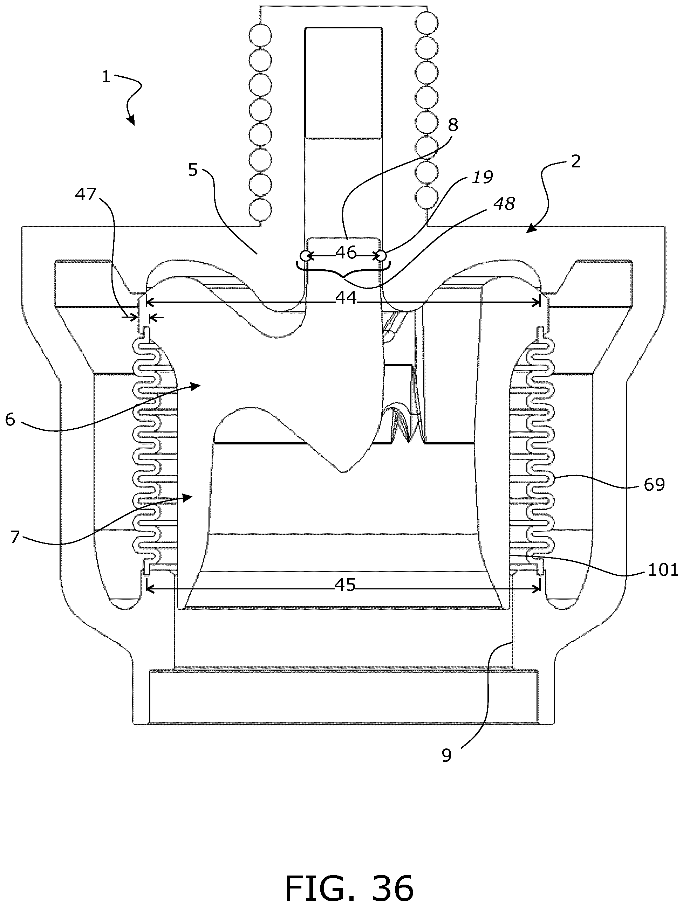

**Figure 36** Shows a longitudinal vertical detail cross section of a valve in keeping with present invention using a flexible diaphragm as a bellows to seal between the endless skirt and the valve body,

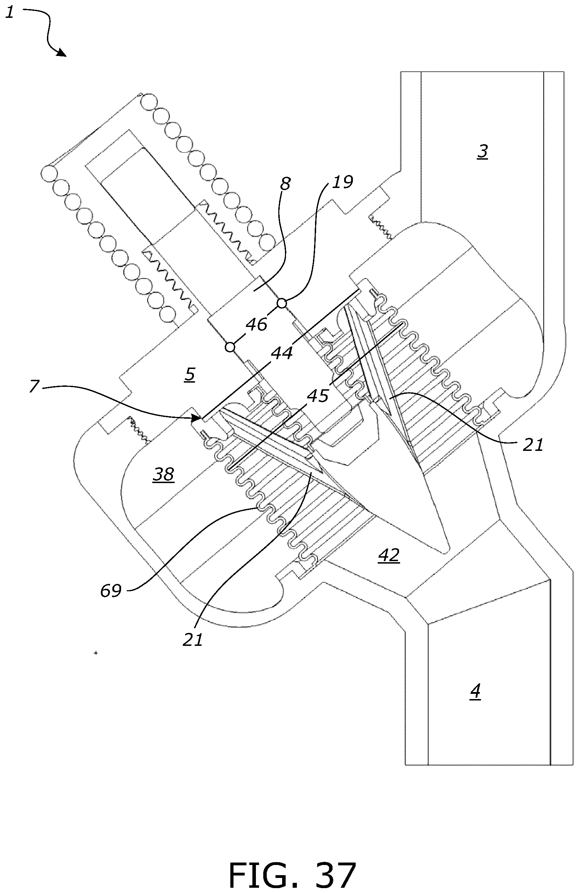

**Figure 37** Is a similar view to Figures 5 and 36 and shows the sealing of the endless skirt to the valve body, and the central stem to the valve bonnet is achieved with a flexible diaphragm,

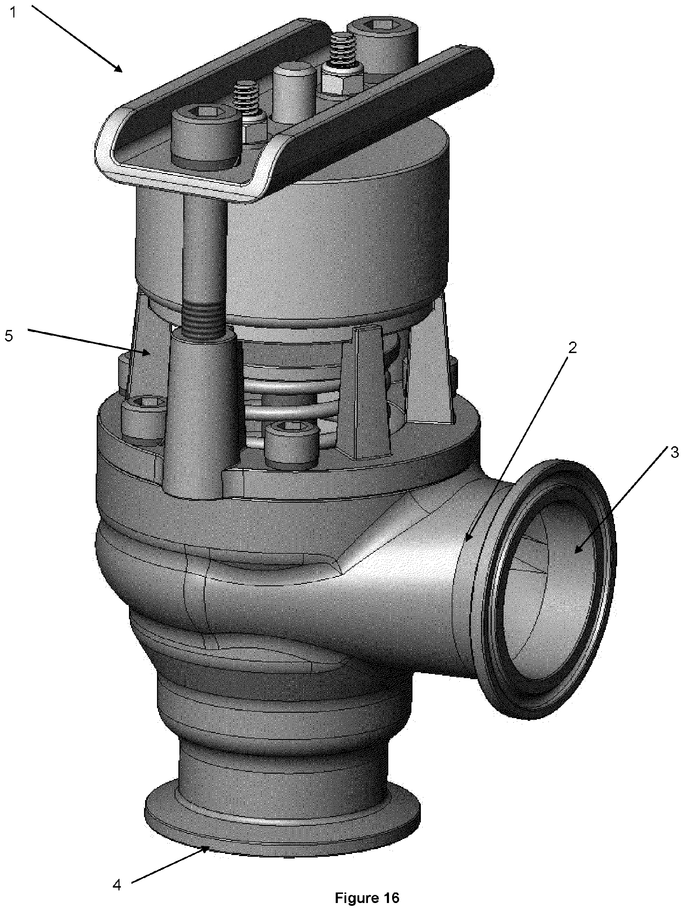

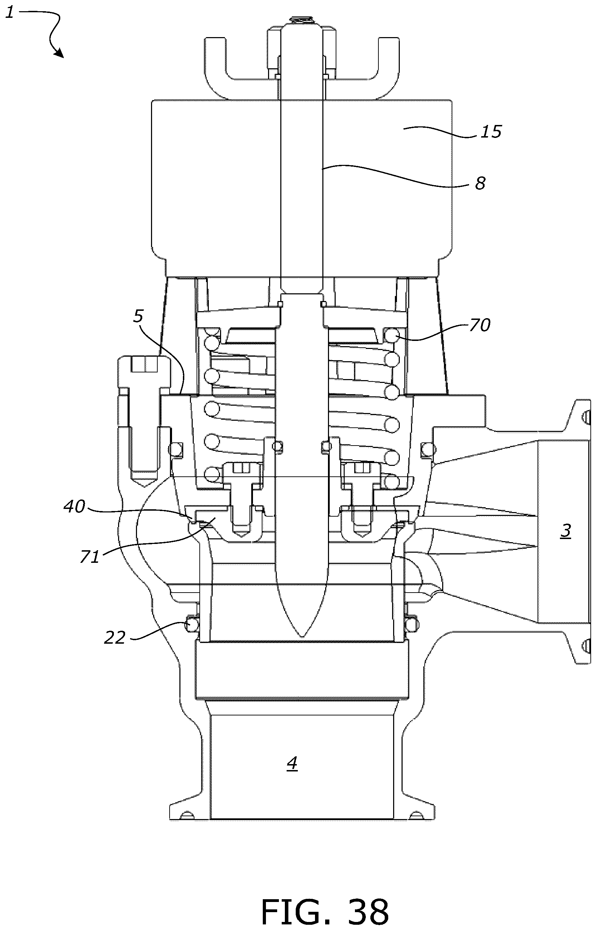

**Figure 38** Shows a side view of the right-angle valve of Figure 16 which uses a solenoid as the actuator for the central stem,

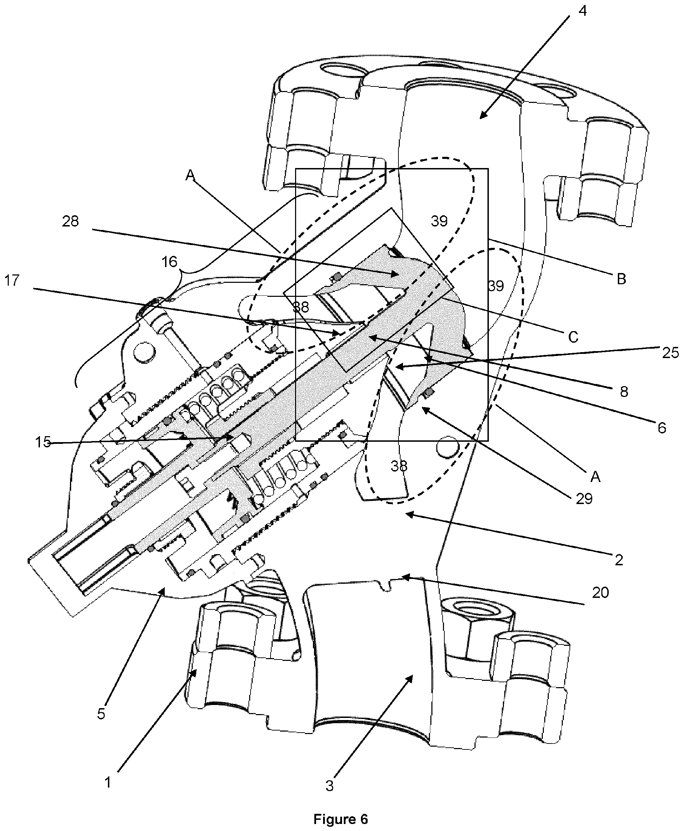

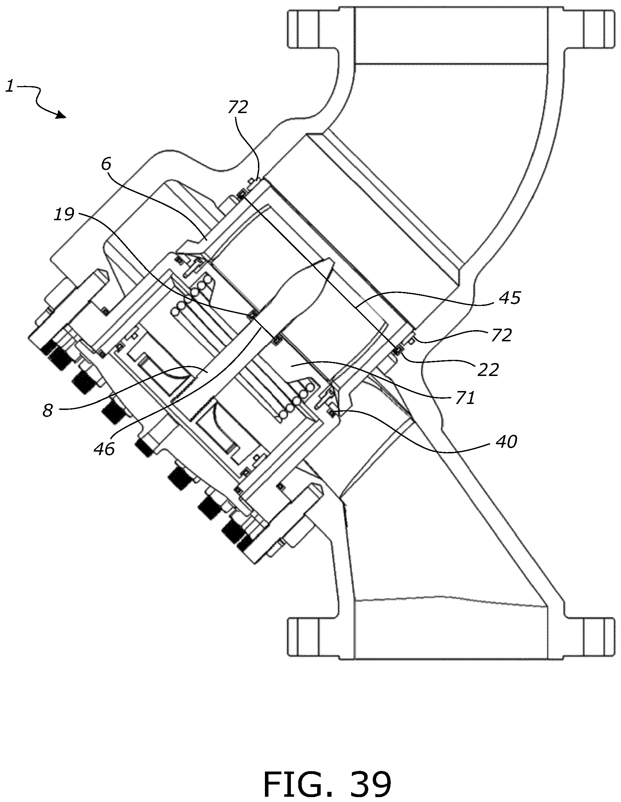

**Figure 39** Shows a view similar to Figure 6 showing use of seals using U cup seals, and energised sliders,

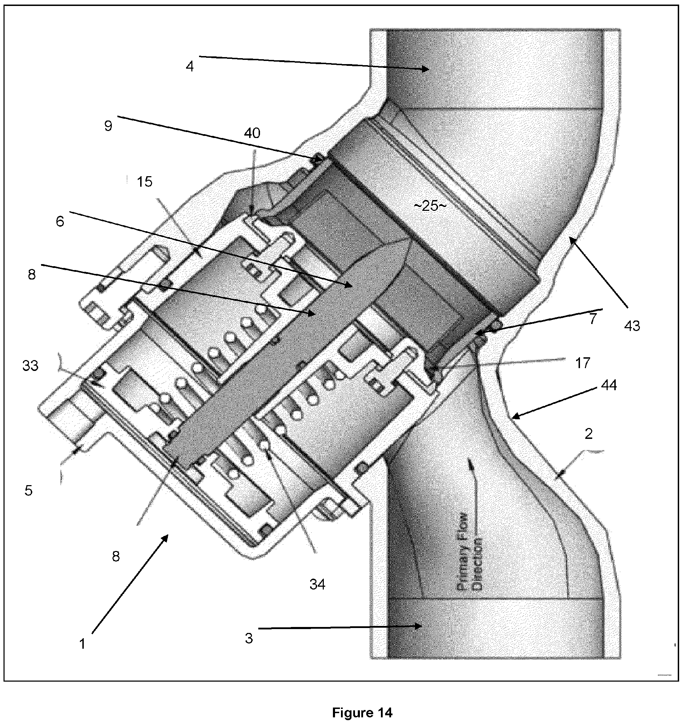

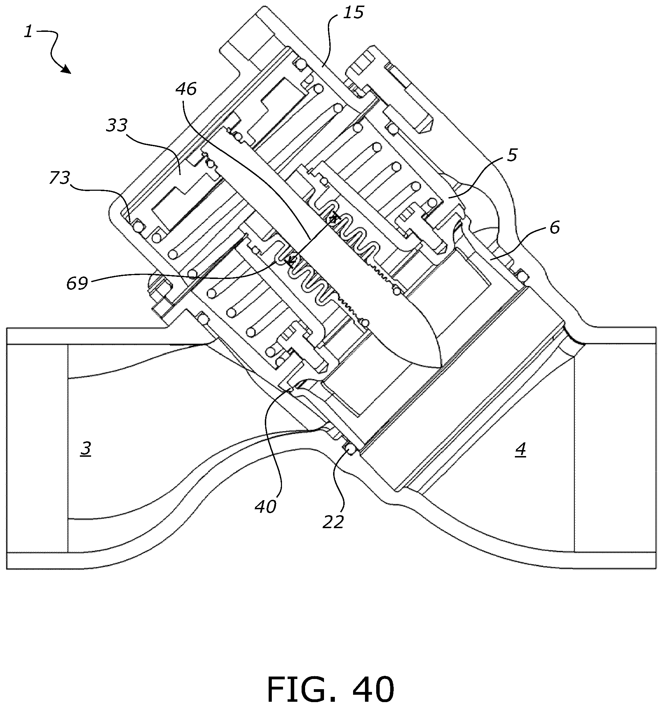

**Figure 40** Shows a view similar to Figure 14 using a flexible diaphragm seal to seal the central stem to the valve bonnet with the sliding engagement with its guidance occurring at the actuator, which is at a different diameter to the third effective sealing diameter of the flexible diaphragm,

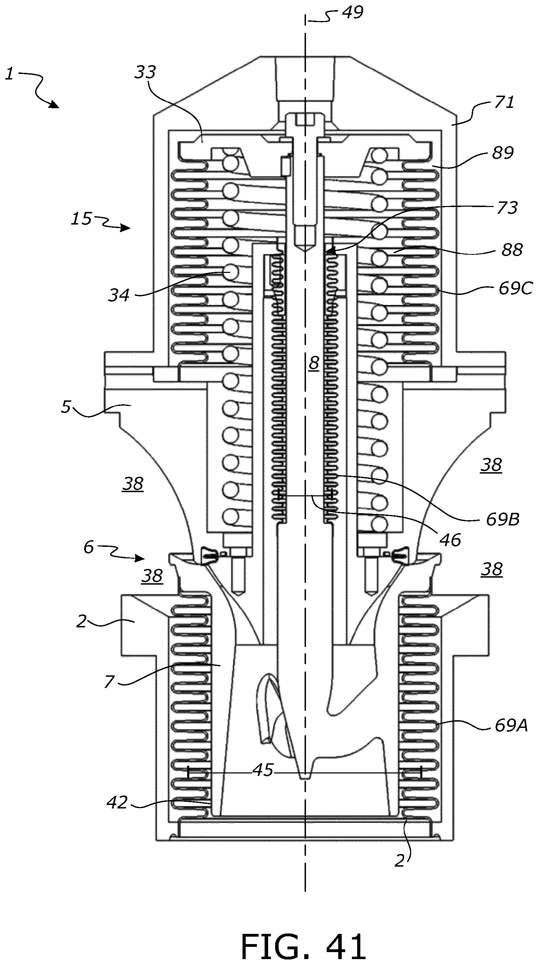

**Figure 41** Shows a detail of the valve bonnet, actuator, central stem, valve member and endless skirt where the sealing of the endless skirt to the valve body, and hence the second effective diameter is achieved and defined by a first flexible diaphragm, and the sealing of the central stem to the valve bonnet, and hence the third effective sealing diameter is achieved by another flexible diaphragm, a third flexible diaphragm is present in the actuator to act as the seal for that component, while the flexible diaphragms here are shown as bellows, they equally could be a rolling diaphragm or similar, and the guiding or sliding occurs at a different diameter to the respective effective sealing diameter, the co-axial moving supported engagement of each occurs at differing diameters respectively,

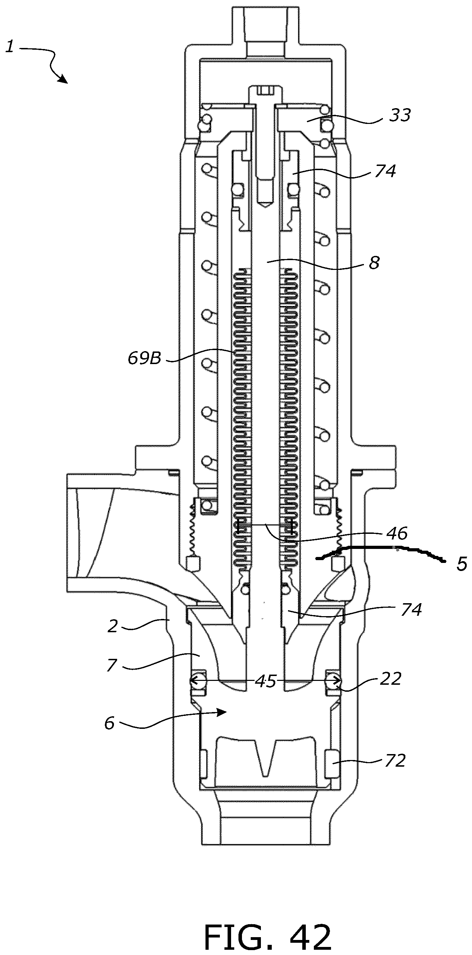

**Figure 42** Shows a similar view and configuration to Figure 38. Here the endless skirt 7 seals to the valve body 2 at the second effective sealing diameter and is supported for movement at a different diameter. Likewise the stem 8 is supported by showing sealing on one diameter and sliding and guidance on another, a flexible diaphragm seals the central stem to the valve bonnet the sliding guidance for the central stem is provided at the actuator, like wise the guidance or sliding for the valve member endless skirt happens at one diameter, and the sealing happens at another diameter,

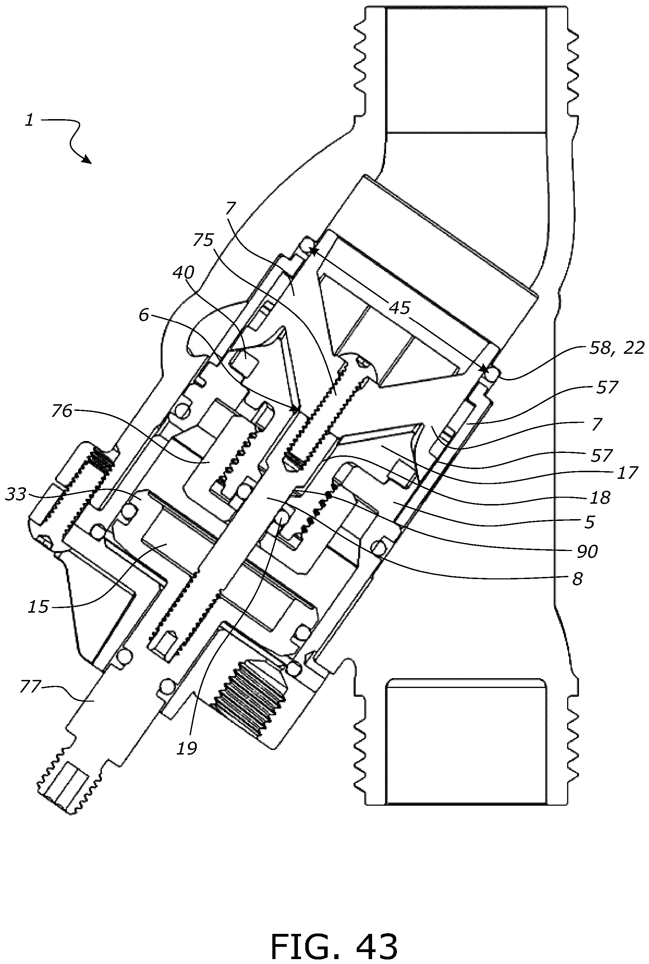

**Figure 43** Shows a similar view to Figure 14 showing use of a non-guiding Cage insert to retain the seal between the endless skirt and the valve body, a central stem fastened to the endless skirt, and a removable actuator to allow servicing of the central stem seal (providing the third effective sealing diameter) in situ from within the actuator cavity, as well as a stepped central stem to

**17**

prevent ejection, and a bonnet assembly method where by the flow conditioner element is inserted through the main bonnet body and retained by a third part, loaded from the opposite side of the bonnet.

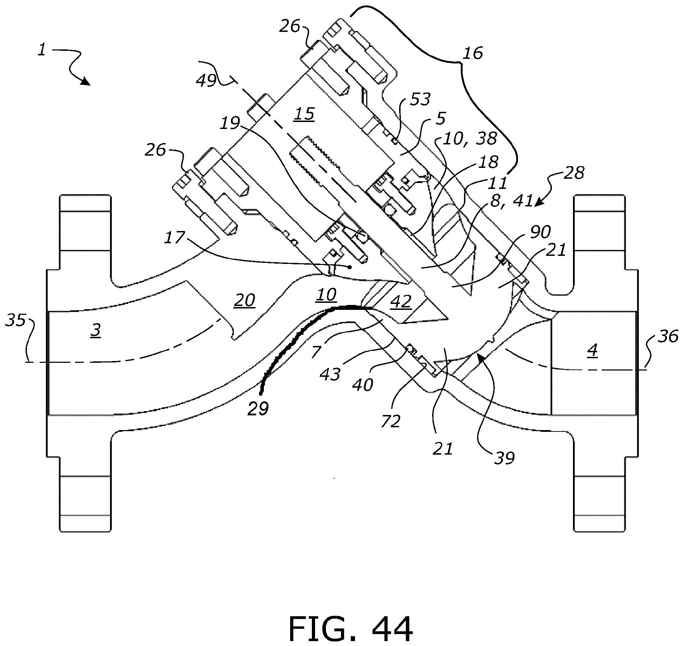

**Figure 44** Shows a similar view to Figure 6 showing multielement sealing on the valve member, and a stepped central stem which would function as an anti-blowout configuration, that is if the central stem broke off the valve member it would still not be ejected from the valve bonnet due to the step on the central stem not fitting through the stem port,

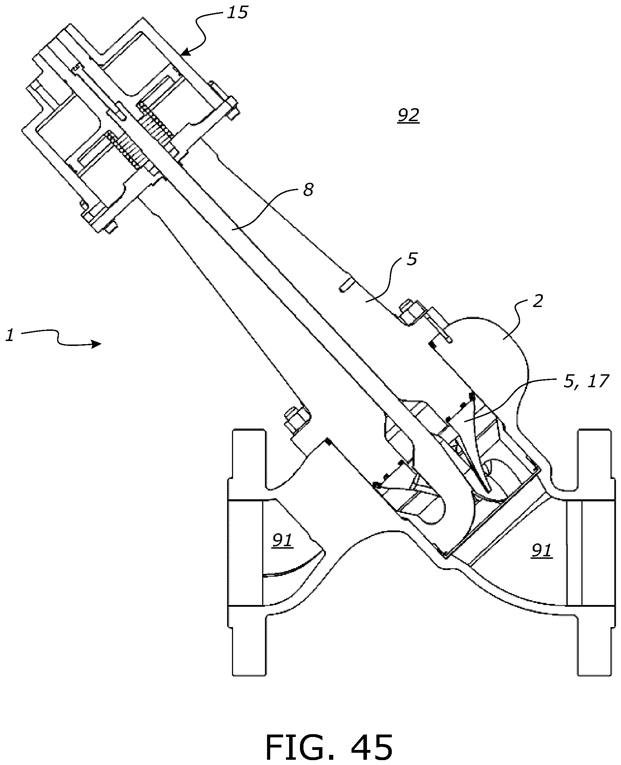

**Figure 45** Shows a similar view to Figure 5 showing an extended valve bonnet to thermally isolate the actuator from the fluid under pressure and vice versa,

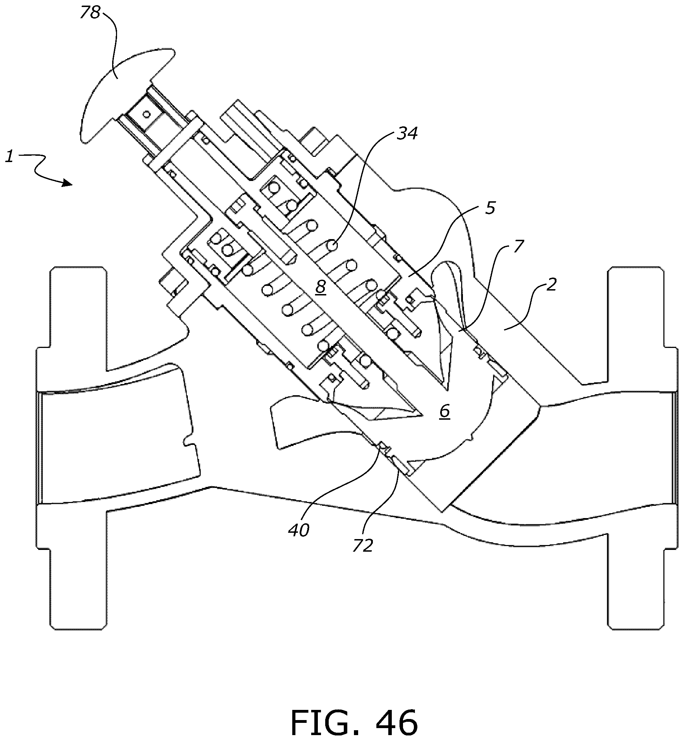

**Figure 46** Shows a similar view to Figure 5 showing a manual actuation of the valve member, and a valve bonnet that largely hides the seal member between it and the endless skirt,

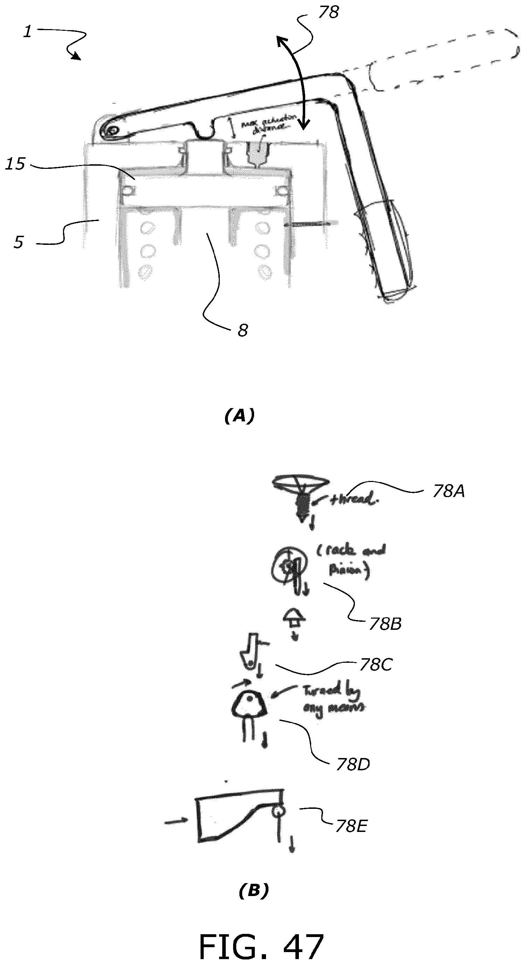

**Figure 47** Shows further detail on Figure 46 at Figure 47(A) a lever handle operated actuation and Figure 47(B) further variations on manual actuation,

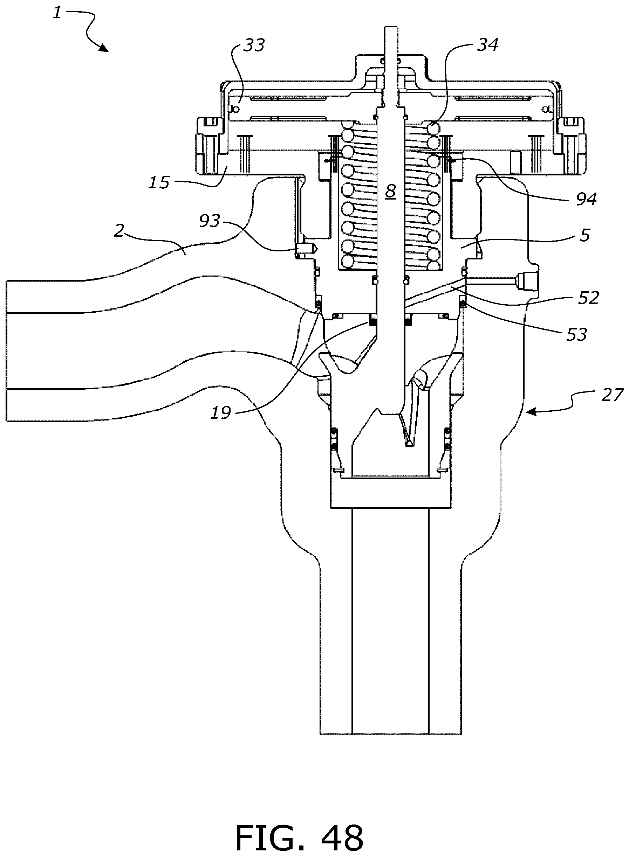

**Figure 48** Shows a similar view to Figure 16 the a composite valve bonnet which is rotationally keyed to the valve body with its actuator component being threadwise installed to the valve body, a circlip allows for removal of the composite valve bonnet when the actuator component is removed,

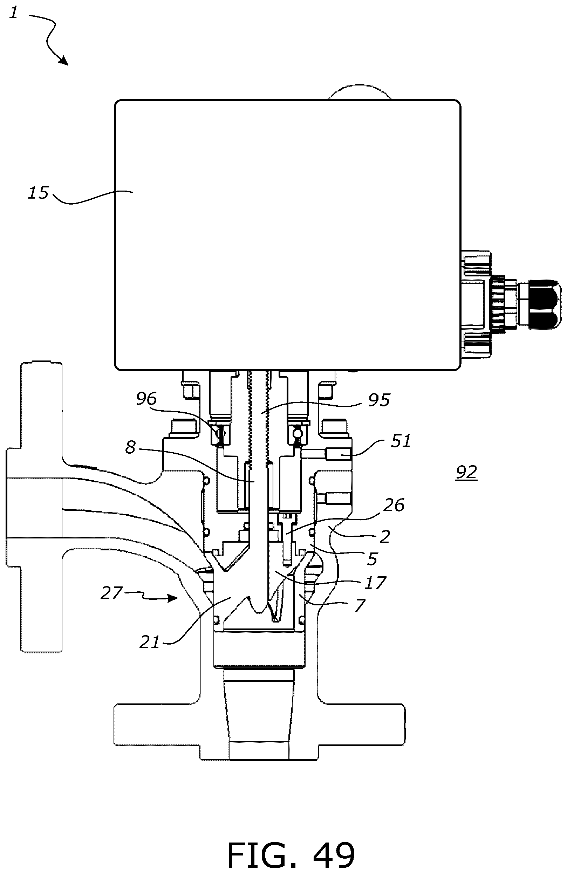

**Figure 49** Shows a similar view to Figure 16 showing a multiturn electric actuator with a coupling to transform multiturn rotational motion into linear action of the valve member,

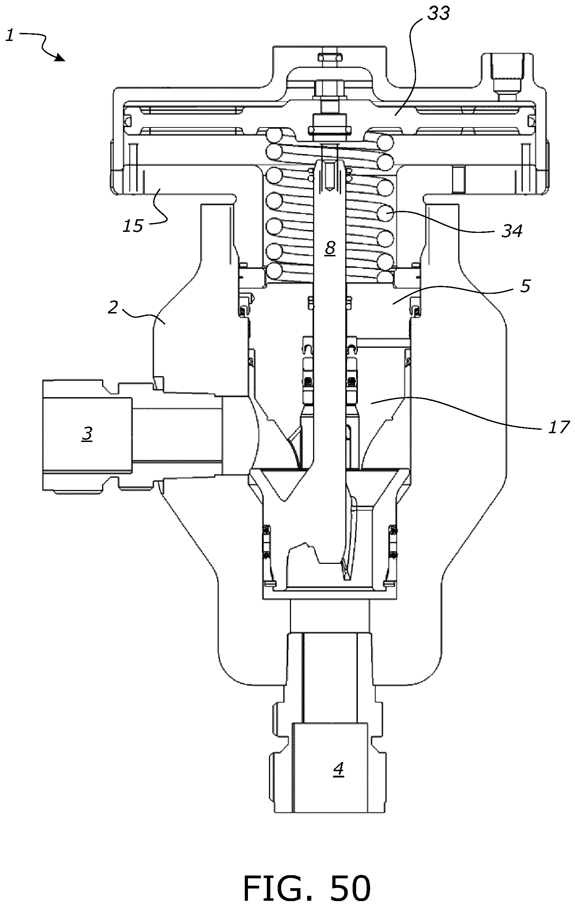

**Figure 50** Shows a side on vertical cross section of a valve in keeping with the present invention of a right-angle configuration with actuator for connection to tubing conduits or similar,

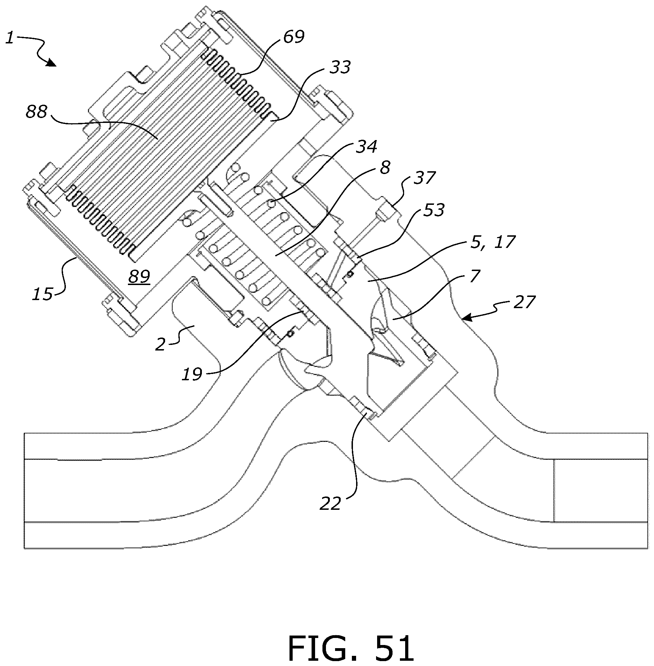

**Figure 51** Shows a view similar to Figure 14 for use in high temperature applications showing a flexible diaphragm driven actuator as a bellows, and separation of guidance or sliding and sealing of the central stem,

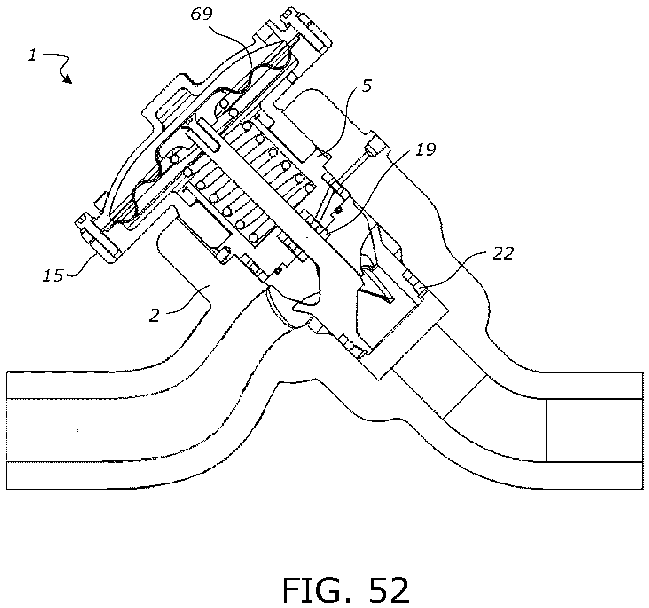

**Figure 52** Shows a view similar to that of Figure 51 for high temperature applications with a variation of the flexible diaphragm actuator as a flexible plate, for example for high temperature applications,

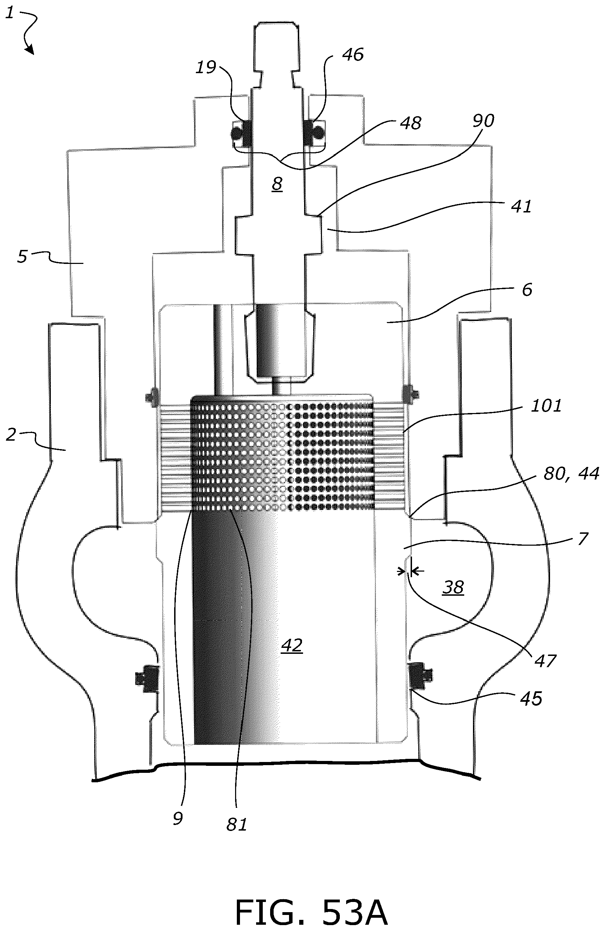

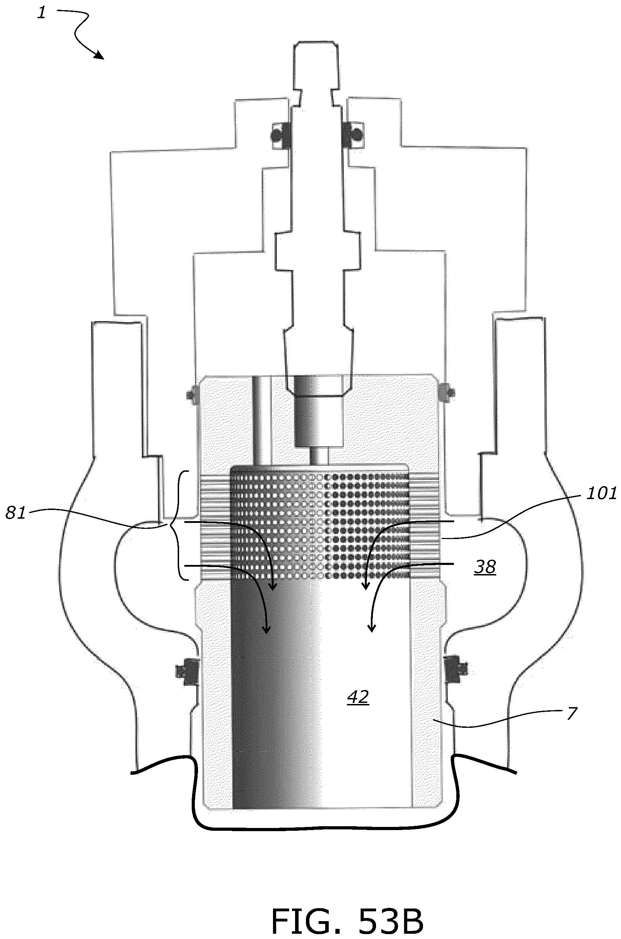

**Figure 53** Shows a variation of valve member at 53A in the closed condition where the valve member has a plurality of passages from the external diameter of the endless skirt to the inside, and at 53B the passages are exposed to the flow as shown by the arrows as the valve opens, to reduce or prevent cavitation of very high pressure flows, the tortuous path slowing the high pressure flow and jets from opposing sides of the valve member can impinge on each other to collapse away from walls or other materials,

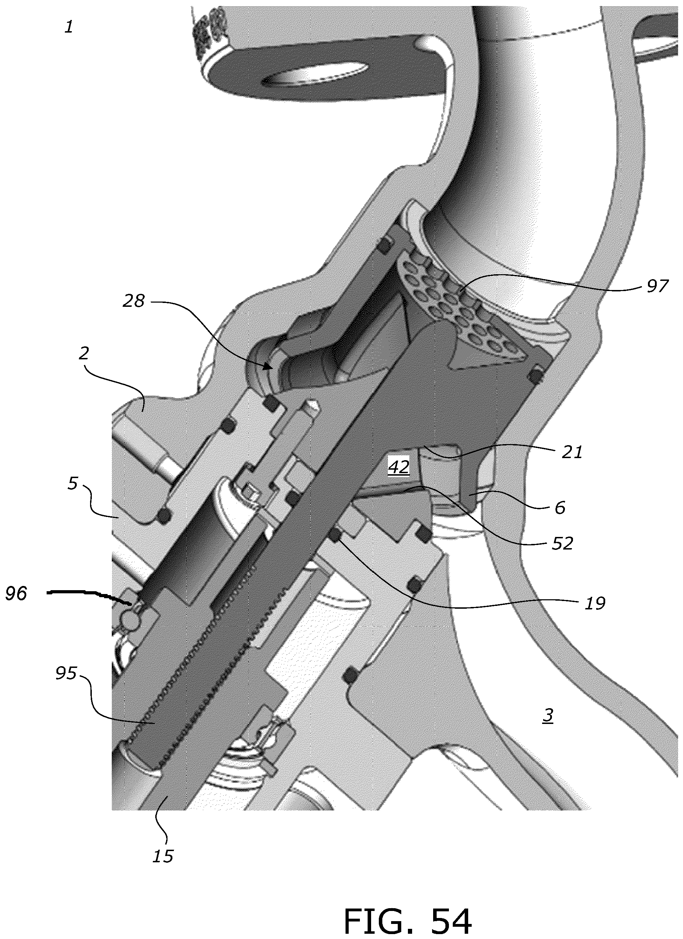

**Figure 54** Shows a variation of the valve member having an inbuilt flow restrictor in the base of the endless skirt to obstruct and diffuse the flow through the valve,

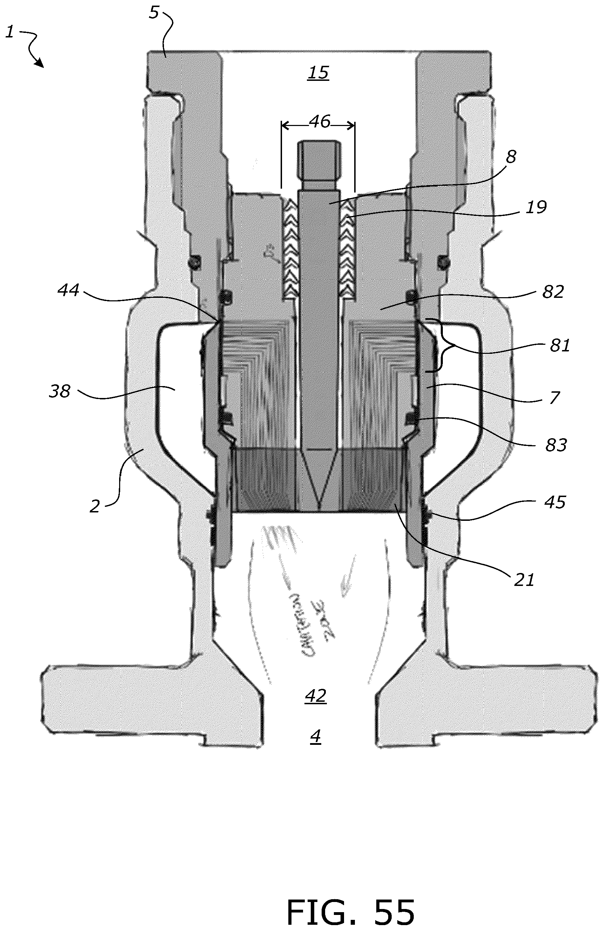

**Figure 55** Shows a vertical cross section with an further anti-cavitation design using a non-moving puck within the valve member mounted to, or as part of the valve bonnet, the puck having passages therethrough to shape the flow, by expansion, contraction or imparting a different direction (e.g. at an angle to the flow to induce rotation or vortex/vortices), the passages are exposed as the endless skirt moves downwardly (in this Figure) away from the valve bonnet),

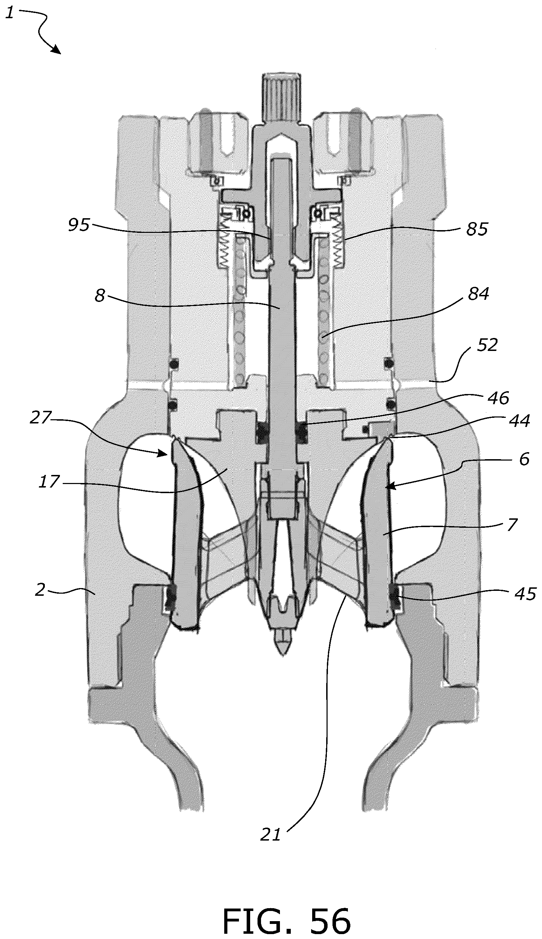

**Figure 56** Shows detail of the valve bonnet and central stem utilising an elastic bias to control the sealing force when the central stem moves the endless skirt into the closed position, in this case a dual spring system,

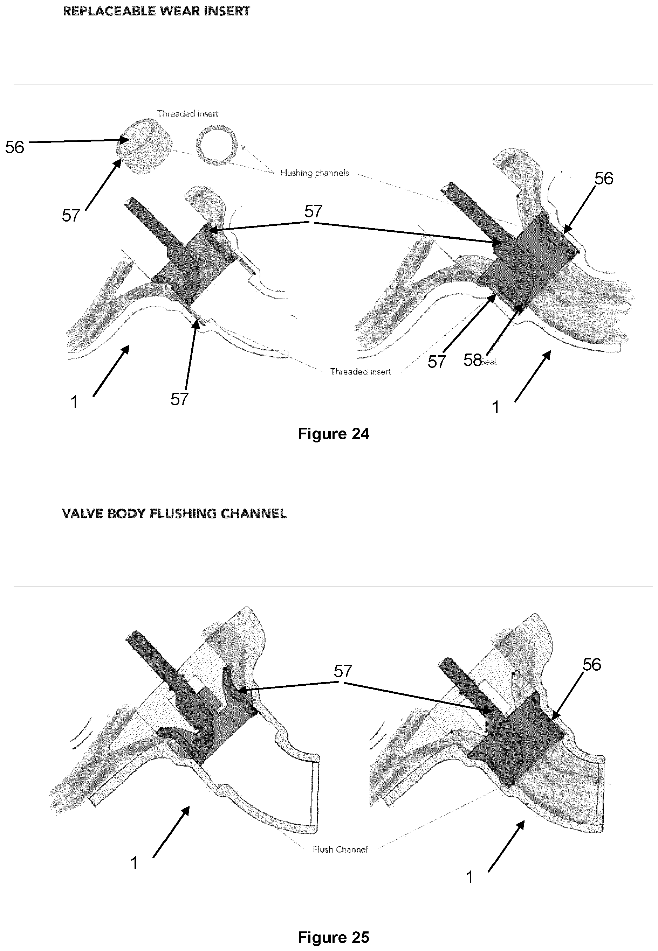

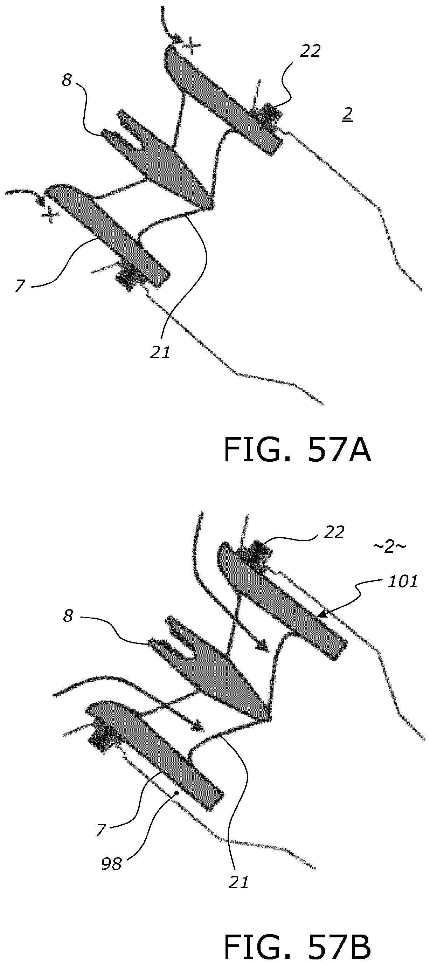

**Figure 57** Shows a view similar to Figure 24 at 57A in the closed state, and at 57B in an open state, the presence of the enlarged region behind the endless skirt allowing for flow when initially opened to scavenge or flush the area enlarged region to remove any debris buildup, such that the valve member is in continuous engagement yet still flushable

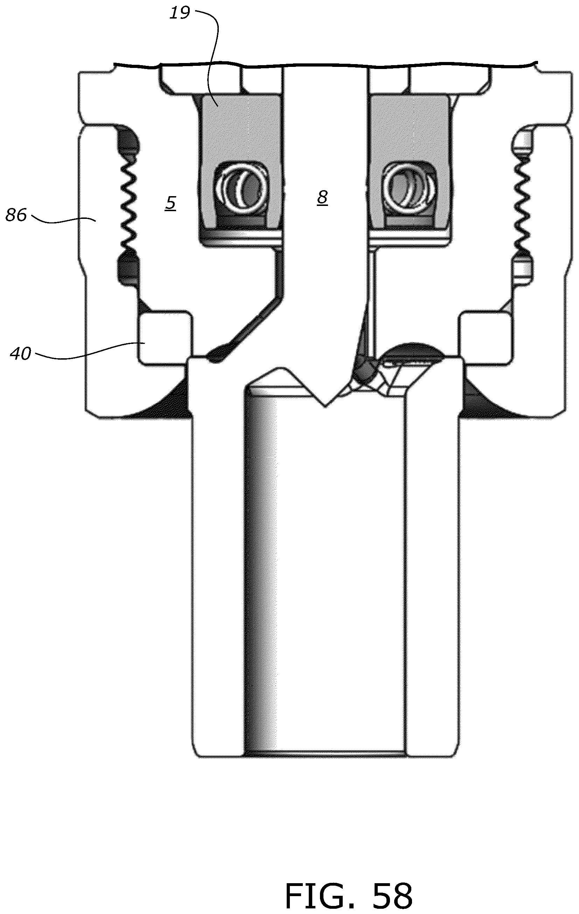

**Figure 58** Shows a close up of a valve bonnet, central stem seal and cap retaining the valve bonnet to endless skirt seal, the central stem seal is energised against the central stem, and the seal to the endless skirt is retained by a cap on the outer diameter of the valve bonnet, such as may be used in a small diameter valve, shown also is a design which can be made to be fire-safe due to having both the soft seal insert, and the hard-face seals available between the bonnet and valve member so that in the case that the soft seal were to fail at high temperature the hard seal is still present,

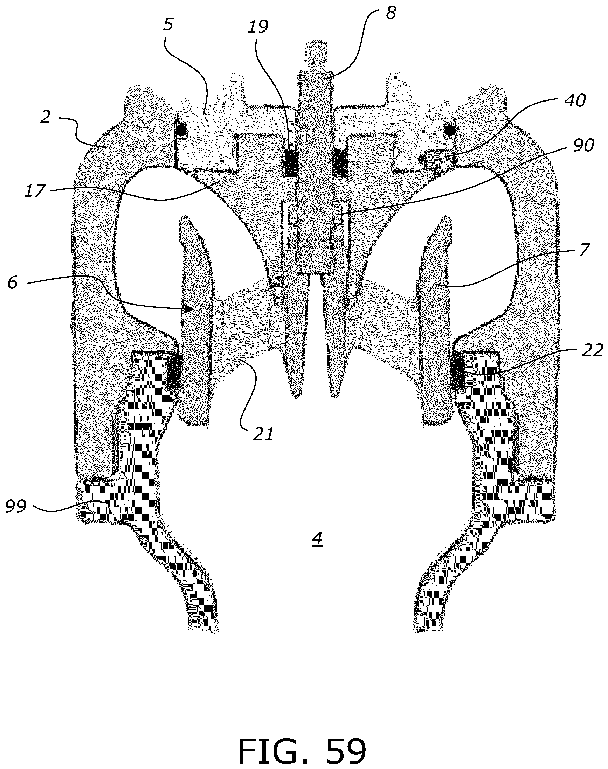

**Figure 59** Shows a close up of the valve member in a variation where the conical or stepped central stem design prevents ejection of the central stem even if fins fail/erode connecting it to the endless skirt erode away, and an adapter fitted to the valve body that also retains the valve body to valve member seal,

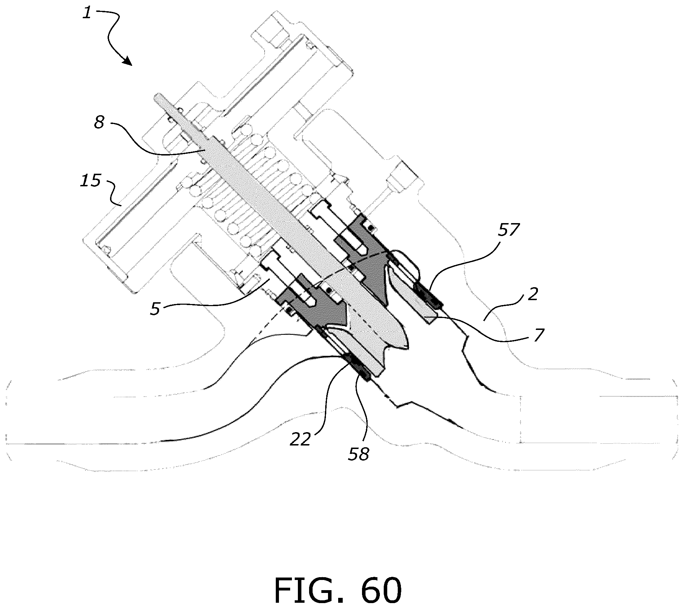

**Figure 60** Shows further detail of Figure 57 using an insert to retain the seal between the endless skirt and valve body,

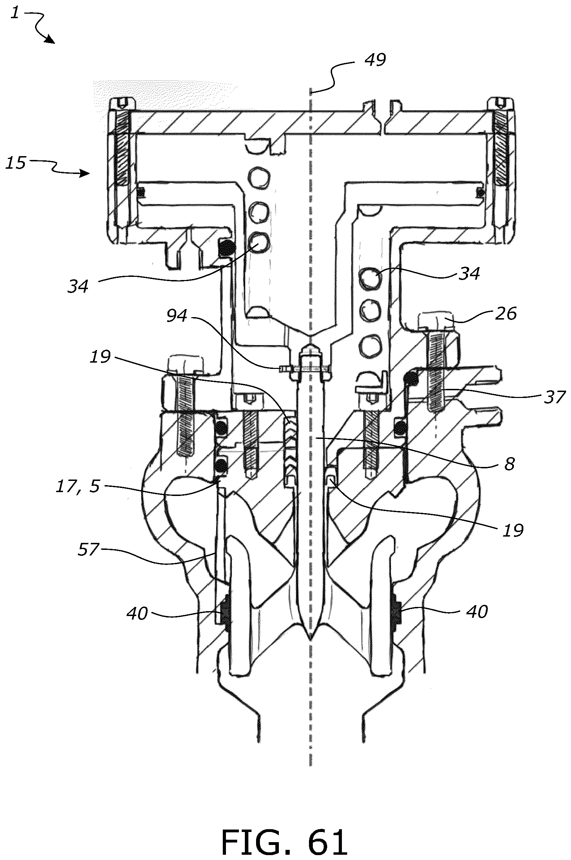

**Figure 61** Shows a valve with two distinct halves, showing several design options including options for fail open valve, a windowed bonnet a multi element stem seal, a circlip stem to actuator connection within the bonnet assembly, an alternative means of making the leak detection port (in between components of the bonnet assembly instead of a drilled port through the bonnet, pneumatic air supply connection for fail open valves, and a seat design which uses a convex conical surface of the valve member to seat against a concave conical surface in the bonnet, and a bonnet design which can house any size actuator internally, while allowing for a bolted mounting system without restriction of access to fasten or unfasten the bolts,

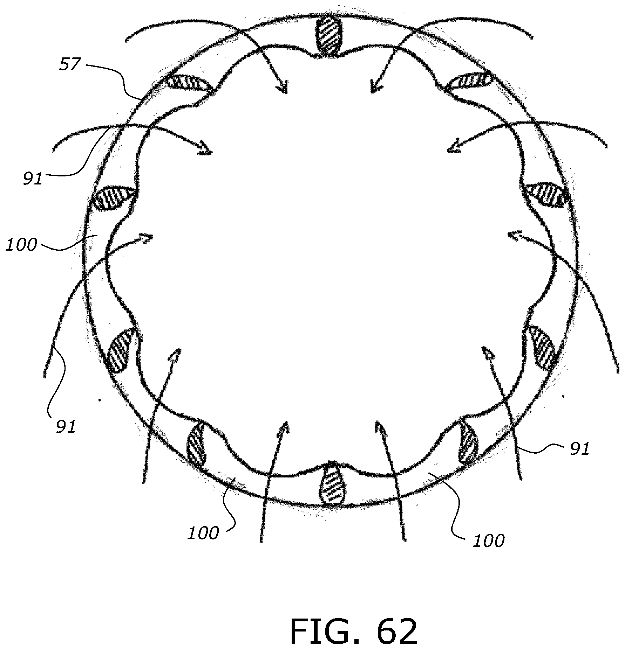

**Figure 62** Shows a cross section of a non-sealing cage, without a cylindrical (circular in this figure) inner wall to provide sealability as would be present in typical cage guided globe valves, the windows are large and the remaining material can be shaped in such a way to condition the flow or protect the valve member by moving flow away from the vanes / fins, and

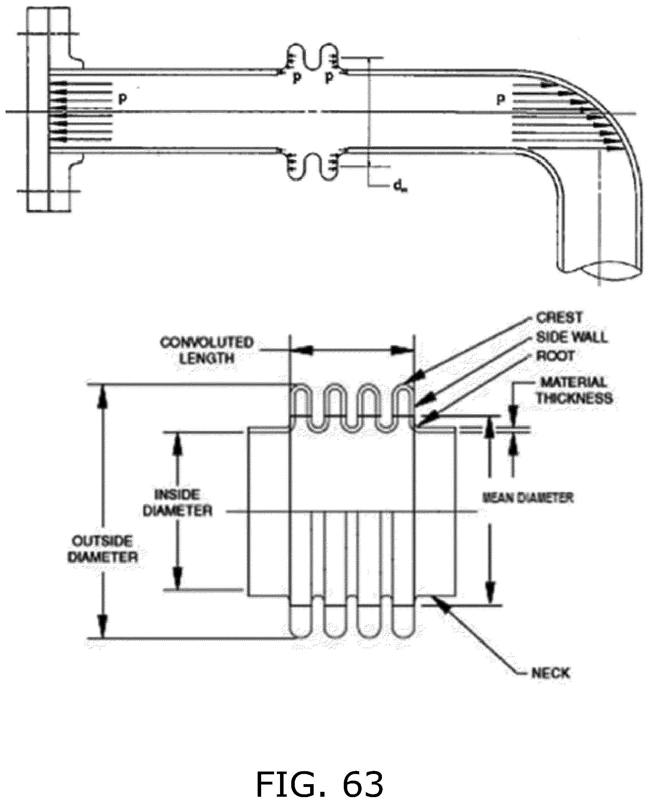

**Figure 63** Shows the defining dimensions for a flexible diaphragm when it is a bellows to calculate the effective sealing diameter.

## DETAILED DESCRIPTION OF THE INVENTION

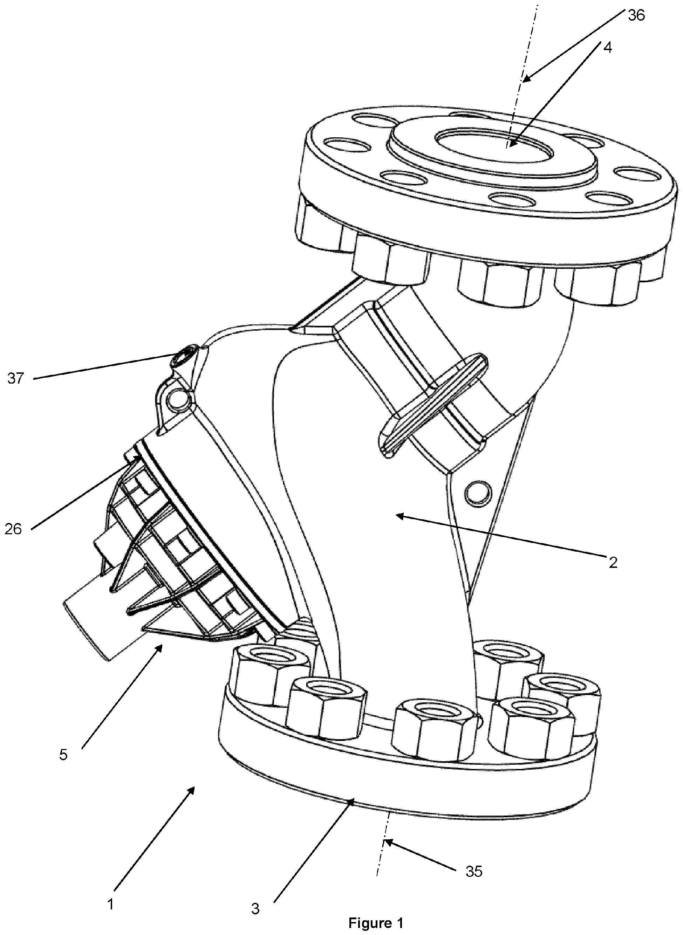

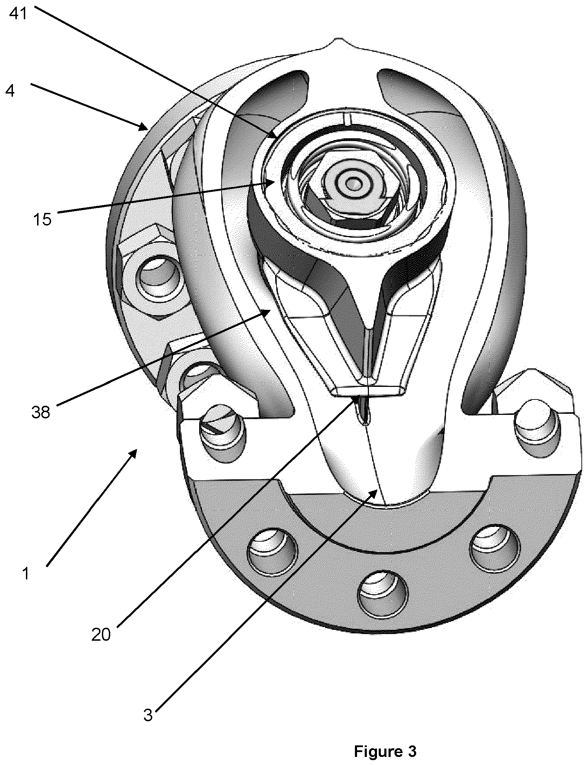

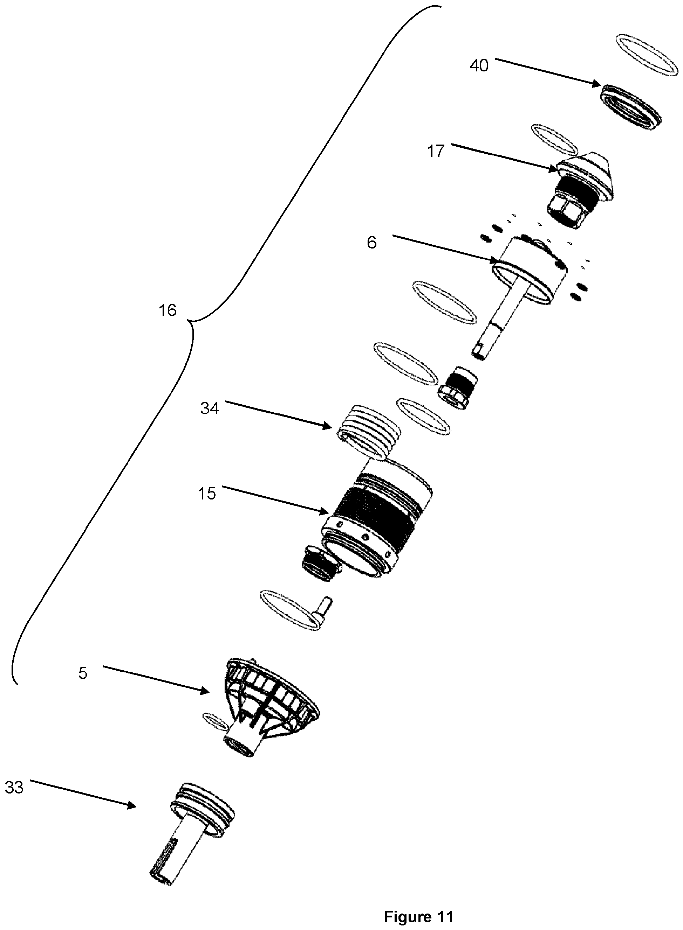

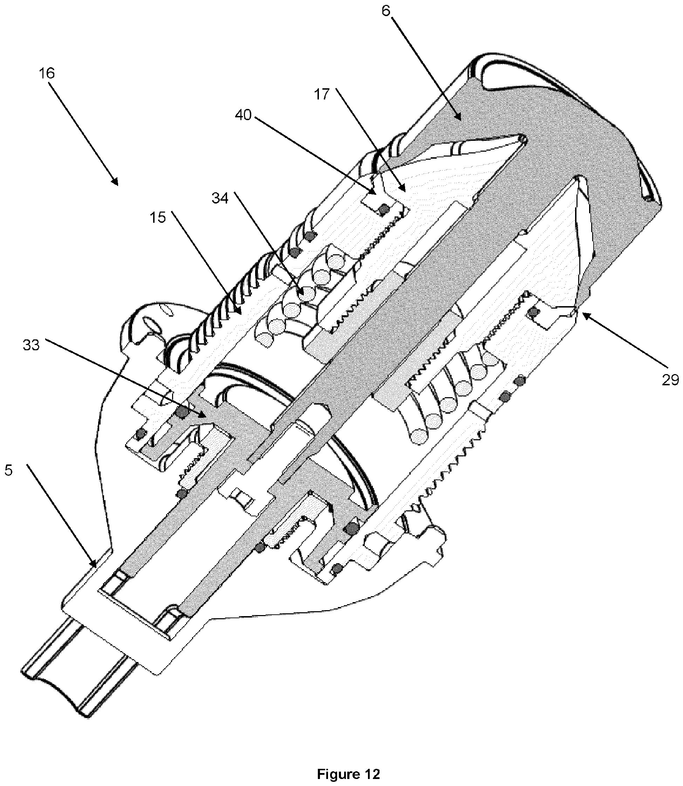

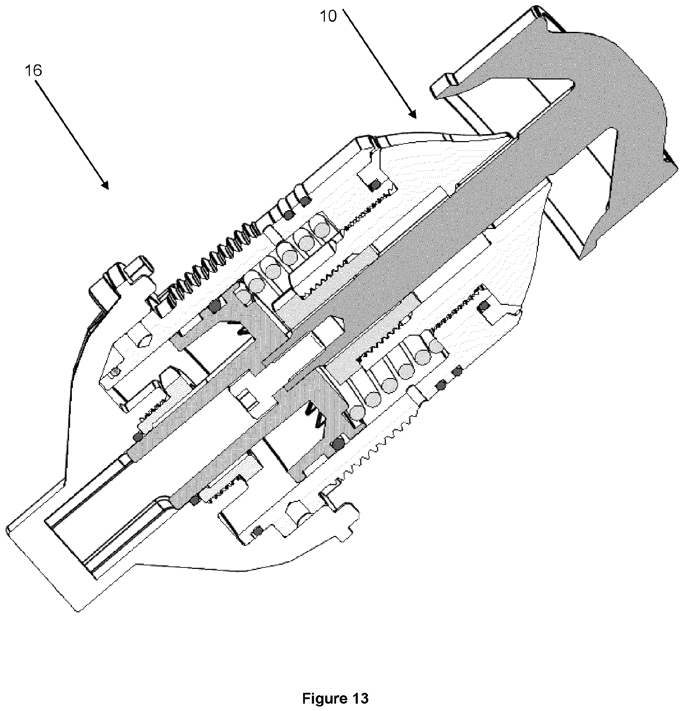

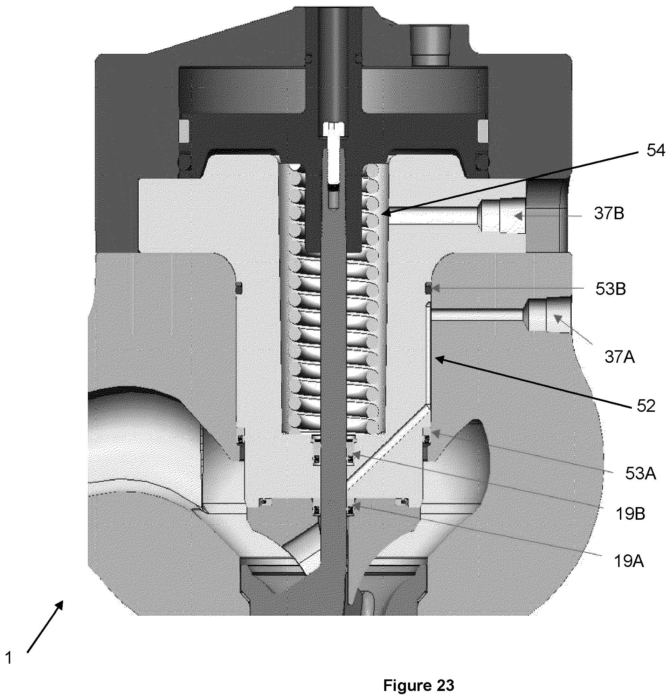

Preferred embodiments of the present invention will now be described with reference to Figures 1 through 63.

The valve of the present invention may be used in many areas including sanitary conditions such as food and beverage, pharmaceuticals and life science, potable water, and building technology, hydrogen, semiconductor/electronics, fine chemicals, liquified natural gas, offshore oil and gas, and basic chemicals, and for gases, fluids and mixed media. As such, there is a wide variety of uses and applications of providing an improved valve, in particular one which is easier to clean, compact, easy to service, small overall size, and reduces build-up of materials in the valve.

The valve 1 is capable of controlling the flow of a fluid from a first port 3, for example as an inlet, to a second port 4, for example as an outlet. The fluid may be a liquid, gas, or combination of both, and may contain solids depending on the situational needs.

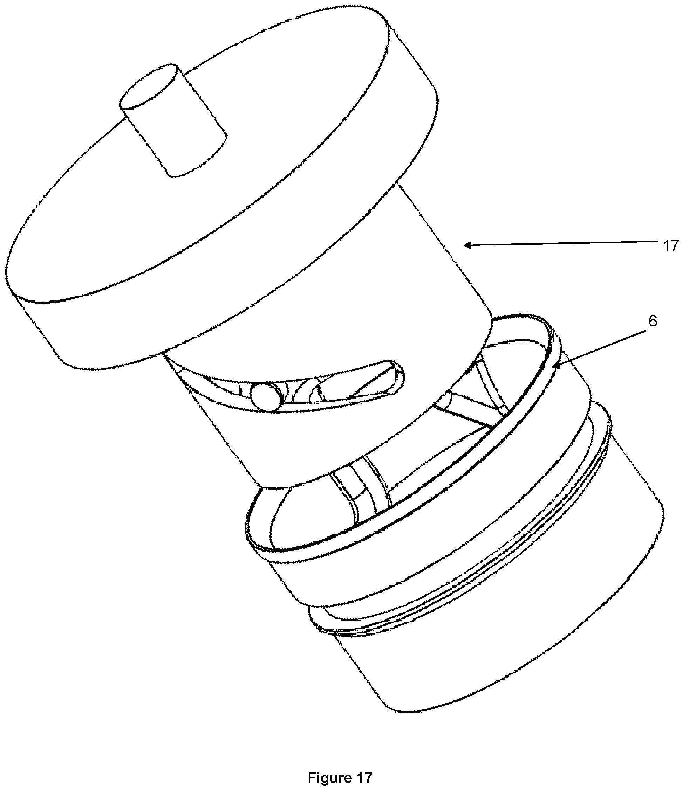

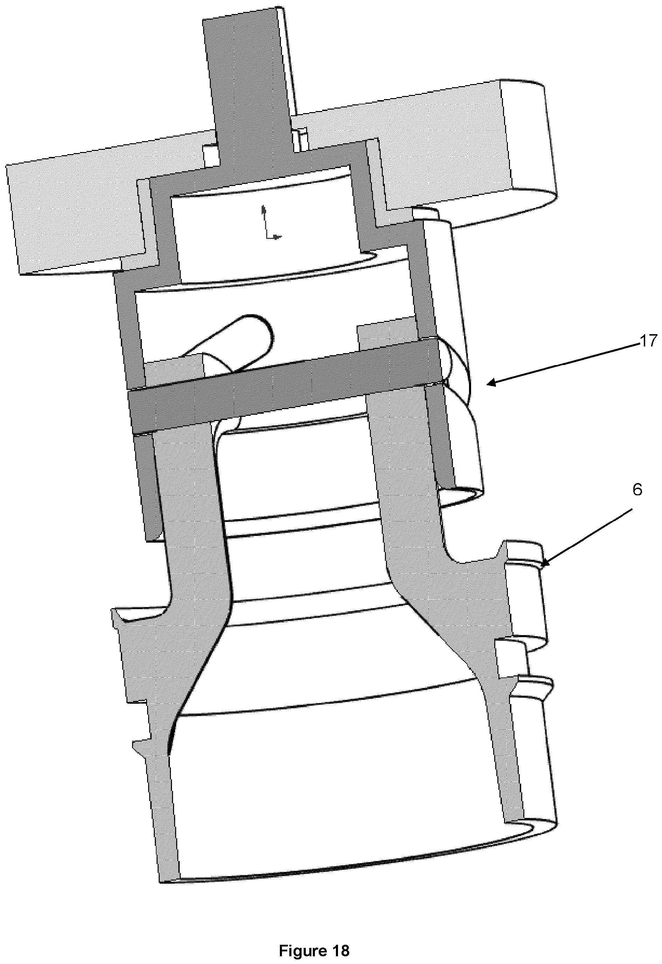

The valve 1 may be used as an on or off valve. That is, it either permits full flow of the fluid under control, or it prevents fluid flow. In this form the valve 1 does not throttle the flow of the fluid, except when it is moving from an open position 28 to a closed position 27, or vice versa, but normally in this configuration it cannot stop in between. In other forms the valve 1 may be used as control valve, whereby it can control the flow of fluid between the first port 3 and second port 4, that is the valve member 6 can be controlled to stop in any position from fully closed position 27 to the fully open position 28. This may be achieved in a number of ways, not least of all for example by using an actuator 15 that can be stopped in any position in its range of travel. For example the rotary actuator 15 of Figures 17 and 18, or via a standard position feedback system paired with a pneumatic or hydraulic actuator for example. The actuator may be fully within the valve bonnet 5, such as shown in Figure 6, and thus also fully within the valve body 2, or may be partially within the valve bonnet and or valve body, and partially outside, such as shown in Figure 14, or may exist fully outside the valve bonnet and valve body, such as shown in Figure 31, and only a bias or similar is located within the valve bonnet or valve body.

It is to be understood that the valve 1 is omnidirectional in the sense that the fluid may flow through the valve 1 in either direction. As a result, it is to be understood that first port 3 can act as either an inlet or outlet and, similarly, second port 4 can act as either an inlet or outlet, depending on the direction of the flow. For clarity throughout the specification, the first port 3 and second port 4 may have been used to provide a flow direction to clearly describe the invention, however the flow direction through the valve 1, including the features within, is not to be constrained to the direction used herein.

In the version of the valve 1 shown in Figures 1 to 15 the valve 1 in inline, that is the first port 3 is in line with the second port 4. The valve body 2 may also be angled such that the first port 3 is angled vertically from the second port 4. The angle of the valve body may vary between 0 degrees, that is, in line as shown, and 180 degrees, that is the outlet faces in the same but opposing direction as the inlet. An example of a ninety-degree between the first port 3 and second port 4 valve 1 is shown in Figure 16. The valve 1 shown here is a two-way valve but is not intended to be limiting and the invention described could also be used for a three or more way valve.

The inlet and outlet may be joined in any conventional way to a fluid conduit, for example a pipe or similar, to carry the fluid to and from the valve. In the examples shown the inlet and outlet are bolted to the conduit using a bolted flange. However, in other forms the valve 1 may be welded in place, use collars or similar.

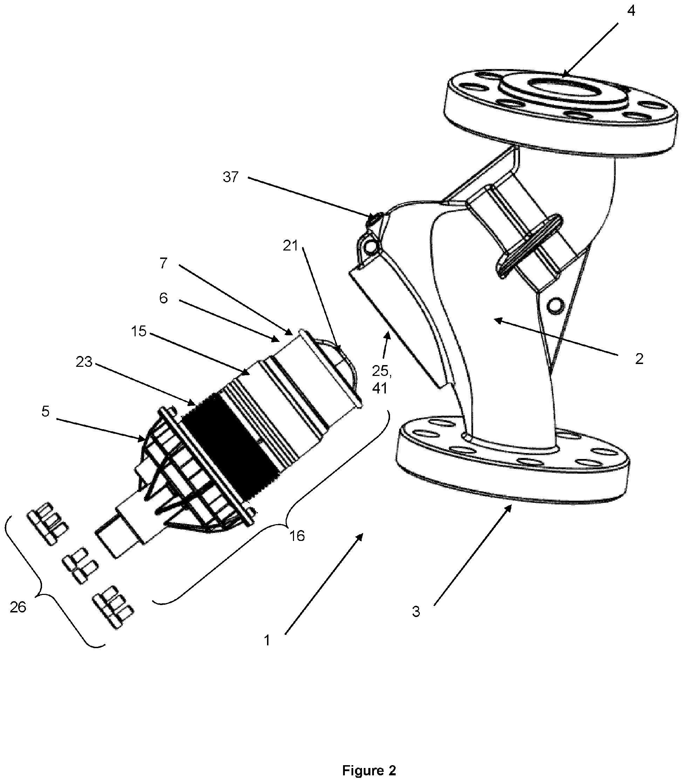

The valve comprises a valve body 2 which has the first port 3 and second port 4 through which the fluid enters and exits, or vice versa, the valve 1, respectively. The valve body 2 has a valve bonnet aperture 41, which leads to the cavity 25 as shown in Figure 2 and in more detail in Figure 5. In one variation of the invention the interior of the valve bonnet aperture 41 is threaded to receive a complimentary thread 23 of the actuator (discussed below). The valve 1 has a valve bonnet 5 which in the preferred form is housed substantially within the valve bonnet aperture, and thus the valve body. The valve bonnet 5 is removably engaged with the valve body 2 between the inlet 3 and the outlet 4 and closes off the valve bonnet aperture to define a cavity 25 through which the fluid is controllably passed through.

The valve bonnet 5 is removably engaged within the cavity 25, the retention may be in any way necessary, and in the variation shown, for example in Figure 2 there are a series of bolts 26, that pass through the bonnet and thread into the body 2.

Other methods of attachment are shown in Figures 29 to 33. In one method shown in Figures 29, 30A and 30B an internal circlip 59 is used. The valve bonnet as a unitary assembly 16 is located into the valve bonnet aperture 41 in the valve body 2 as shown in Figure 30B. After locating in place, the internal circlip 59 is located in place to locate over the valve bonnet 5, and under-engage a groove 66. The interface of one or more of the surfaces of the circlip, valve bonnet or groove may be tapered to increase the force holding the unitary assembly 16 in place. Another variation is shown in Figure 31A and B where the unitary assembly 16 is threaded into place to a mating thread in the valve body and aperture 41. This may be used there the size of at least part of the actuator as shown is greater than the diameter of the valve, preventing use of a circlip or similar. A further attachment method is shown in Figure 32 A and B where an external collar 60 is used. Again, the unitary assembly is located in place in the aperture 41 and then the collar 60 shown in two pieces here is located to under-engage the valve body 2 and over engage the assembly 16. Collar fasteners 67 on each side (four are used as shown) connect between the collars are used to tighten the collar 60 into place. Again, one or more of the surfaces of the collar, assembly or valve body may be tapered to increase the force of the assembly 16 into the valve body as the collar fasteners are tightened. While a two-piece collar 60 is shown here, they could also be more than two, and there may be hinges in place of fasteners, or the collar may be flexible and have only tensioning fasteners to tighten its diameter and hold the assembly in place. A further attachment method is shown in Figures 33 A and B. This uses an internal collar 61, which again is multipiece. The assembly 16 has the internal collar assembled in place about it. The collar 61 has a collar bias 63 in the form of a spring that sits over the collar 61 pieces as shown and contracts them around the assembly 16. The assembly is located in the aperture 41 and rotated until threaded apertures in the collar align with holes in the valve body. Collar fasteners 62 are then passed through the holes to then thread into the collar pieces and expand it. The collar will then under engage the valve body and over engage the assembly 16. Again, one or more of the surfaces of the collar, assembly or valve body may be tapered to increase the force of the assembly 16 into the valve body as the collar fasteners 62 are tightened.

The bonnet 5 is located in and attached to the body 2 as described above. Thus, the bolts 26 or other fastening components described above must be removed before the bonnet can be removed from the valve body 2. However, other systems to retain the bonnet 5 to the body 2 may be used, for example bolting only, clamping, threading or other methods or combination known in the art. In the preferred form the sub-assembly of the valve bonnet, actuator and valve member are at an angle to the inlet axis 35 and outlet axis 36 of between 15 degrees and 75 degrees.

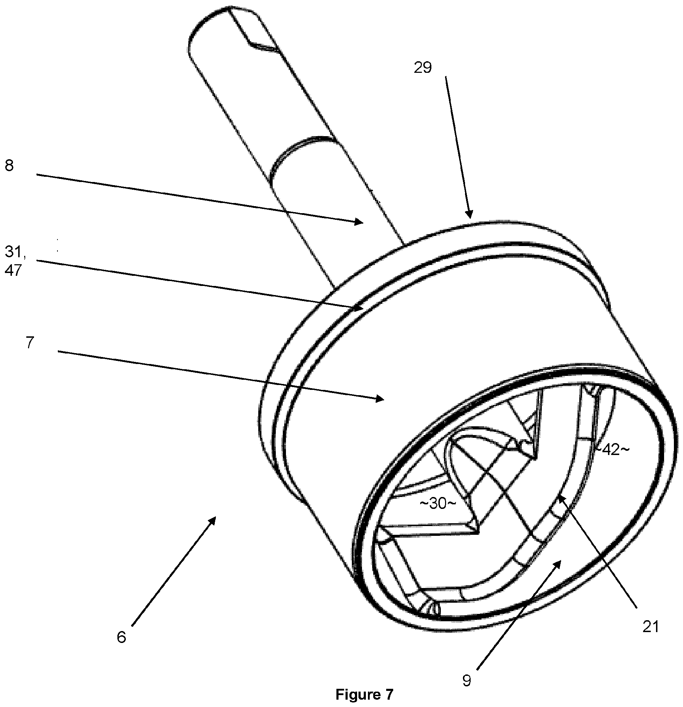

The valve 1 has a valve member 6, shown for example in Figures 2, and 5 through 7, which can translate between a closed position 27 as shown in Figure 5, and an open position 28 as shown in Figure 6. The valve member 6, shown in detail in Figure 7 is mounted from a central stem 8. The central stem 8 is in sliding and sealing engagement with the valve bonnet 5, via flow conditioner 17 and controlled by the actuator 15. Optionally the stem 8 may be hollow and allow the, or another, fluid to flow through its interior, into, or towards, the interior diameter. This may allow for mixing or otherwise.

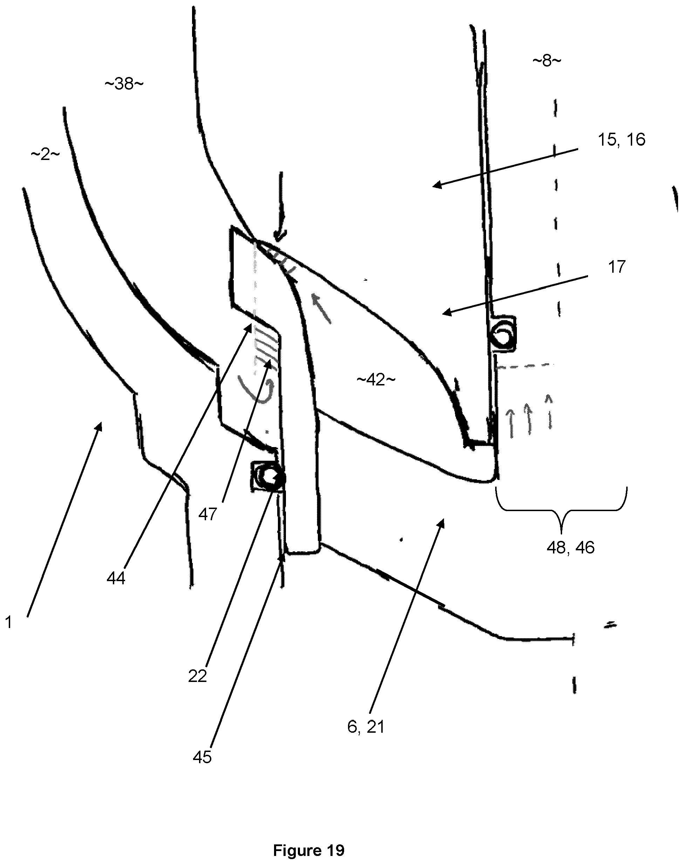

The actuation of the stem 8 and valve member 6 may be achieved through a number of mechanisms. The actuator may be linear as shown in for example in Figures 2, 5 and 6, or may be a rotary actuator as shown in Figure 18. The example in Figures 18 and 19 uses a non-rising stem actuator, and a radial stem seal can be used - for example where there is a rotating element in the actuator, actuatable from outside the wetted valve interior, that acts on the valve member via a cam or screw profile, for example on the stem. The valve member being linearly guided within the valve body.

The valve member 6 is shown in more detail in Figure 7. The valve member 6 has an endless skirt 7 supported from the central stem 8 from one or more vane(s) 21. The vanes in the preferred variation are shaped to produce as little drag on the fluid flow as possible and may be for example be a low drag profile such as, but not limited to aerofoil or other shape in cross section. The endless skirt 7 defines, at or toward, and preferably at, its uppermost edge a sealing edge or periphery 29. It is this periphery 29, when in the closed position that seals on the flow conditioner 17, actuator, bonnet or parts thereof to seal off the fluid flow, such as shown in Figure 5.

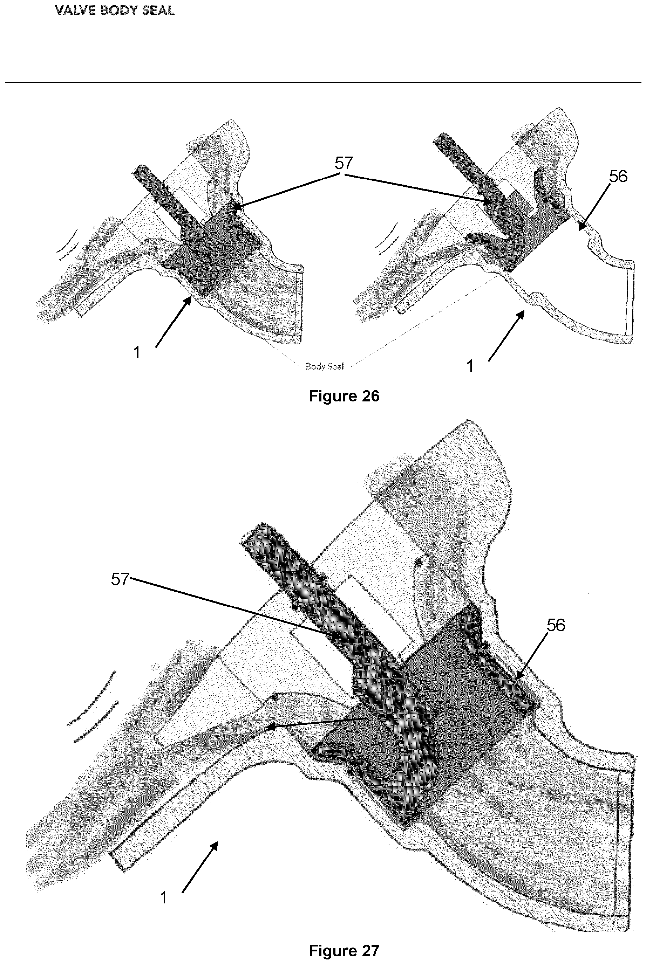

When the valve member is in the open position as shown in Figure 6 the fluid can flow over this periphery 29 and through the interior diameter 30 of the endless skirt 7 into the inner chamber 42 to the outlet volume 39 and through to the outlet 4. The interior diameter 30 defines at least in part the inner chamber 42 of the valve member 6. Visible in Figure 6 in areas A is the clear and smooth tangential edge transition from the annular chamber 38 to the valve member 6, over the sealing periphery 29, into the interior of the endless skirt 7, and to the inner chamber 39. It is clear there are no sharp edges or sharp changes in curvature over at least this region, and preferably over the whole flow path from inlet to outlet (or may be reversed if fluid is flowing in the opposite direction), such that the fluid moving through the region sees smooth surfaces and gradual changes. The leading edge (if fluid flow is from bottom to top) of the sealing periphery 29 is contained in a recess of the internal periphery 9 of the cavity 25. Likewise, the trailing edge (again if fluid flow is from bottom to top) of the endless skirt 7 locates into a complimentary recess in the internal periphery 9 as shown in Figure 6, the shape of these recesses being visible in Figure 5 when the valve is closed. Thus, the external shapes of the valve member fit into complimentary forms in the internal periphery of the cavity when in the open position, to present the lowest flow obstruction to the fluid, presenting smooth tangential surfaces and continuous curvature from one component to the next. The additional effect of this is that there are no, or very few cavities for liquid or other deposits to pool or build up. This leads to a valve that has reduced maintenance because of less build-up internally, and a more hygienic valve that is easily cleaned in place and flushed. In the situation where Clean In Place (CIP, where the valve is cleaned without removing or largely disassembling, normally achieved with no disassembly and passing fluids through the pipes/conduits the valve is connected to) is necessary to either remove particulates or to sterilise all fluid contact area of the valve flushing channels 56 as shown in Figures 24 through 28 may be present. These may be provided by a removable insert 57 that is located in place prior to the assembly 16 being inserted into the valve body such as shown in Figure 24. The insert 57 may be retained by any number of ways, such as, but not limited to being threaded or a push fit. The insert can be removed and installed through the aperture 41. The insert provides one or more flushing channels 56 to allow the fluid, or a CIP fluid to pass through them when the valve member 6 is in the open position and allows for removal of debris, particulates and sanitising. In other forms there is no insert, but a pathway as shown in Figures 25 and 26 as a flushing channel is provided between the valve member 6 exterior periphery and the valve body when the valve member is open to allow fluid or CIP fluid to pass through and remove debris and clean such as shown in Figure 27.

The flow conditioner 17, again visible in area A in Figure 6 is shaped to present a smooth steady tangential transition for the flow to move over (or from) the diameter of the actuator and bonnet subassembly 16 onto the stem 8 and through the endless skirt. In one variation the stem is recessed as shown to provide a lip to lie against the end of the flow conditioner to smooth the flow in that region. The result is the valve member when in the open position presents a tangential edge between any one or more of, the edges of the endless skirt (that is the sealing periphery 29), and/or the edges of the valve bonnet/flow conditioner transition to the stem. This results in a valve that has a smooth flow through the cavity and valve member.

More detail of the flow conditioner 17 is shown in Figure 35, where the flow conditioner 17 has extensions 64 that pass either side of the vanes 21 of the valve member 6, and form reliefs 65 for the vanes 21. These finger like extensions 64 smooth the fluid flow and keep it as attached as possible when moving from the actuator through the valve member, thus aiding in the efficiency of the valve.

In the preferred variation no part of the annular cavity resides within the diameter of a seal between the valve body and valve member, this allows for easy withdrawal of the subassembly 16 from the cavity as one unit with no operating parts left behind, and only in some instances is a seal or an insert left inside that can then be easily removed.

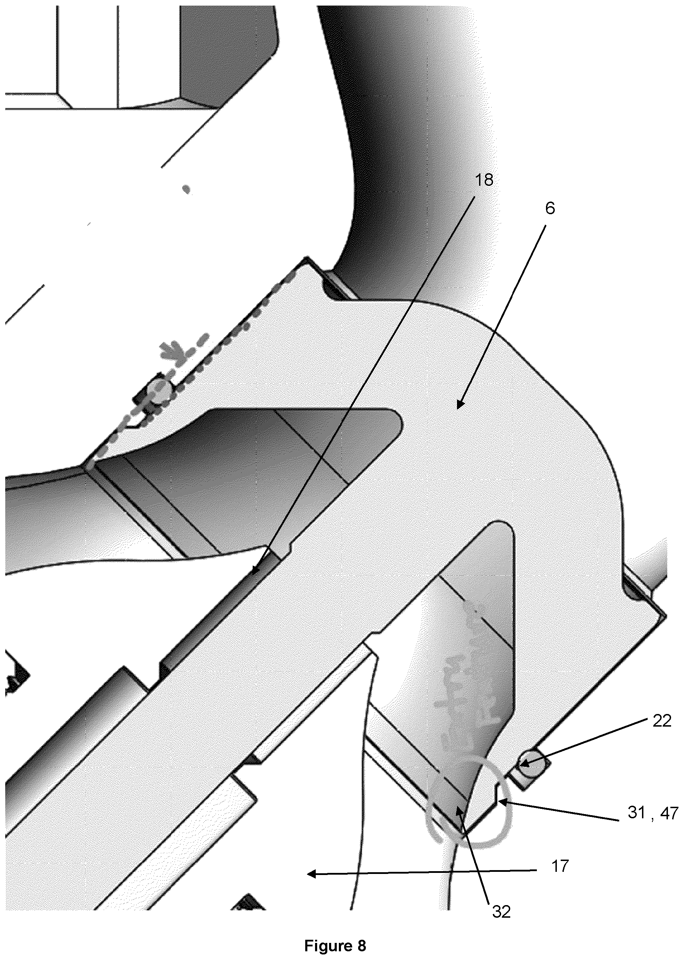

The exterior surface 31 of the endless skirt is in a sliding and sealing engagement with an interior of the cavity, this will be described in more detail below. The exterior surface 31 is parallel to the movement of the stem to present and allow a smooth action. In the preferred form this seal 22, shown in Figure 8 for example, is an O ring, though any form of suitable seal may perform this function. The endless skirt 7 presents this exterior sealing surface to engage and seal to a cavity interior presenting surface of the valve bonnet when in the closed position as described. While the endless skirt is shown as circular, any form of constant cross section that can slide and seal throughout that sliding with the cavity interior may be used.

The valve bonnet 5 has or contains an actuator 15, which typically forms a unitary assembly 16 for the stem 8 to at least open and close the valve 1 by moving the valve member via its stem. The actuator 15 may be actuated by any one or more of the following: gas, fluid, magnetic, mechanical, or electrical means. The actuator 15 is held or contained on or within the valve bonnet 5 as earlier described and extends at least in part into the cavity or duct 25 of the valve body 2. The actuator 15 may be formed integrally with the valve bonnet 5 and/or the valve member 6 or may extend outside of the valve bonnet 5. The actuator 15, valve bonnet 5, and valve member 6, may be a unitary subassembly 16 that is removable from the valve body 2 as an assembly 16 (whether it can be further disassembled further later). Importantly, this allows easy maintenance, inspection and repair of these components. Removal of the bonnet 5 with or without the actuator, or removal of the actuator 15 and valve bonnet 5 as a unitary assembly 16, allows access into the interior of the valve body 2, and the sub-assembly if necessary, can easily be replaced, and later repaired as needed. The bonnet 5 or unitary assembly 16 is a 'cartridge' which can be swapped quickly and easily. In addition, such easy removal allows access to the flow conditioner and seal of the stem from the flow or wetted side of the valve. This removes the need for traditional stuffing box systems that are normally accessed from above and external of the valve member in prior art systems. Access from the interior or wetted side by removal of the sub-assembly, easy replacement in situ with a replacement sub-assembly, and servicing of the removed subassembly at a later point, for example in a workshop allows for better sealing and servicing and a more sophisticated energised, whether by pressure fluid, or static seal pressure system can be used as shown to seal the stem to the actuator, flow conditioner. Simple removal of the valve member 6 and then the flow conditioner allows access to the stem seal 19 for maintenance or replacement.

A further advantage of this removable subassembly is the ability to manufacture a valve body 2, into which a range of subassemblies 16 can be installed depending on the end use of the valve, for example operating pressure and fluid type to be controlled. Thus, a wide range of valve applications can be achieve from the one valve body casting pattern and choosing the subassembly to fit the end use. Also, a valve 1 that has been installed can also be changed in this way when in situ also if necessary.

The removability of the unitary subassembly 16 can provide the advantage of providing an ease of cleaning if necessary, of the unitary subassembly, its components and the valve body 2. Further, the removability allows for simple replacement, repair, or other maintenance of the components of the unitary subassembly 16.

The valve 1 may also be biased to a certain position by the pressure of the fluid, in addition to actuator.

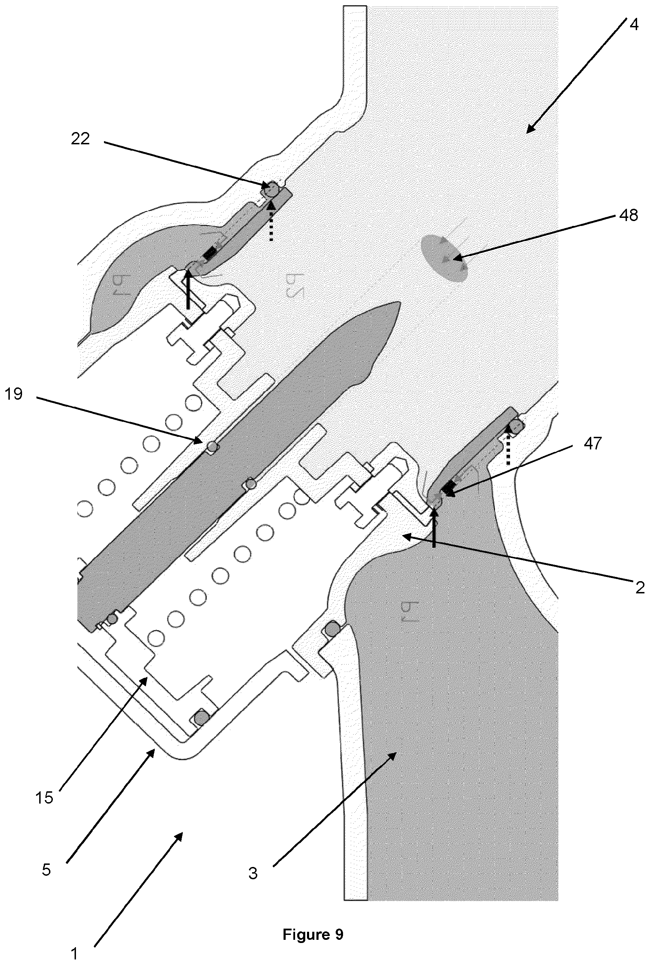

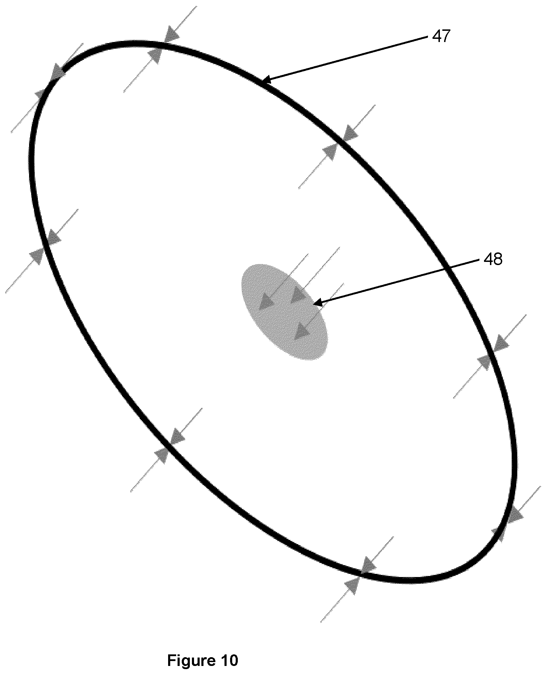

The pressure of the fluid acts on the valve member 6 and its surfaces shown in Figure 8. One simplified way to consider it is via the overall net balance of pressure surfaces that experience pressure from the fluid and hence develop a force to open or close the valve 6. An overall downstream (in this configuration) 31 facing surface, as a first pressure area 47 is shown in Figure 8 which acts to bias the valve element 6 to a closed position. This pressure differential is shown in more detail in Figures 9 and their resultant overall forces in Figure 10.

As shown in Figure 8 through 10, a first pressure area 47 of the valve member 6 can act to seal the valve 1. The valve member 6 is biased closed via the net effect of a first pressure area 47 and a second pressure area 48. The first pressure area 47 is defined between the sealing of the endless skirt 7 (or extension thereof to the valve bonnet 5 defining a first effective sealing diameter 44 (D1) and at least one seal located between the valve body and the endless skirt 7 (shown as D2) defining a second effective sealing diameter 45. The stem 8 has a second pressure area 48 also (shown as PA2) and this will add to the overall force on the valve member 6 such that the valve will be held closed. As such, the valve member 6 will remain in a closed position in the absence of action by the actuator, that is it will fail closed, or fail safe. In this configuration there is no positive pressure state in which the valve will open by itself, it must be actuated to open. This is a failsafe feature of the valve in that should the actuator or signal/supply to it fail the valve will close and hold closed.

The second pressure area 48 defined by the third effective sealing diameter 46 (D3) of the valve stem can be larger than the first pressure area 47 defined between the seal of the bonnet to valve member as the first effective sealing diameter 44 and the seal between the body and endless skirt as the second effective sealing diameter 45 to ensure pressure assisted closing when the larger pressure is on either side of the valve.

In the preferred variation the valve 1 is pressure biased closed. This is beneficial due to the safety benefit of the valve naturally wanting to close unless acted on by the actuator. Technically it is 'unbalanced' pressure-wise, but it is more accurate to say it 'is balanced, but with a tuned pressure bias closed'.

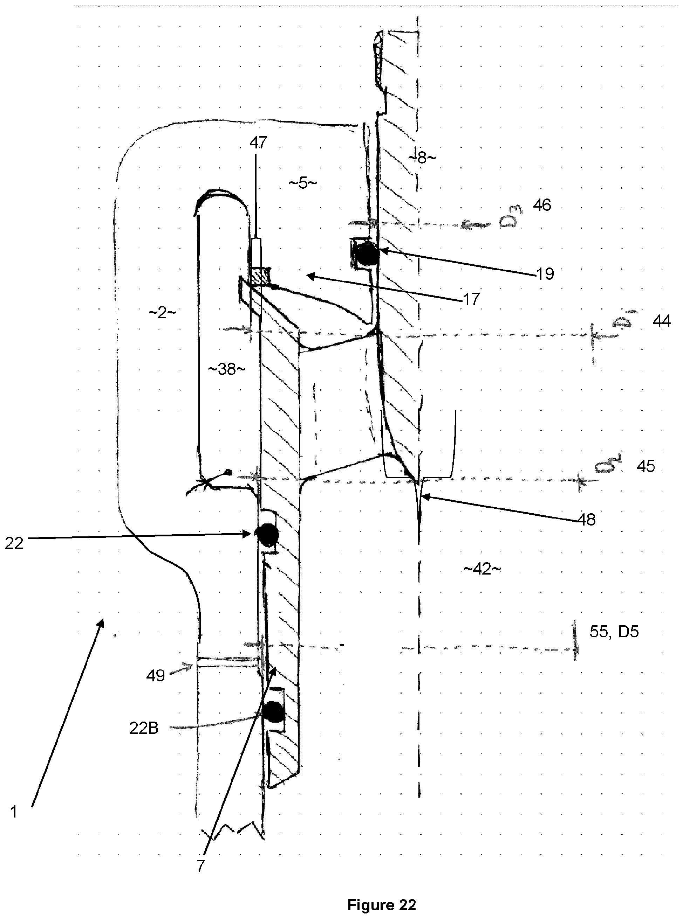

How this is achieved is further set out schematically in Figure 22 being a close up vertical cross section of one half of the valve actuator axis, with variations of it shown in Figures 19 through 21 and is better described below. Referring to Figure 22 the first sealing diameter or periphery D1 44 is defined by the sealing diameter or periphery of the endless skirt 7 when sealed against the valve bonnet 5 (or extension thereof, such as the flow conditioner 17.

The second sealing diameter or periphery 45 D2 is the periphery defined between the valve body 2 and external periphery of the valve skirt 7.

When D1 is greater than D2, as shown in Figure 22 and 19 this creates a first pressure area 47 (previously referred to as upstream facing pressure area), which is acted upon by the fluid pressure from the first port 2 and inlet volume 38 (annular chamber) to close the valve member 6 (and hence the valve). When there is higher pressure in the annular chamber 38 than in the inner chamber 42, there is a closing force generated on the upstream side of the first pressure area. When there is lower pressure in the annular chamber 38 than in the inner chamber 42, there is an opening force generated on the downstream side of the first pressure area - however, the stem seal 19 defines a sealing periphery or diameter D3 and defines a second pressure area 48 which is acted upon by the inner chamber 42 pressure. This creates a force in the closing direction for the valve member 6, which is larger than the opening force the first pressure area can generate.

If the inner chamber 42 pressure drops below atmospheric pressure there can be a net opening force generated, however the valve seating spring /actuator bias 34 or other bias is selected to accommodate/overwhelm this pressure force to ensure valve closure is maintained, if opening under vacuum conditions is seen as detrimental.

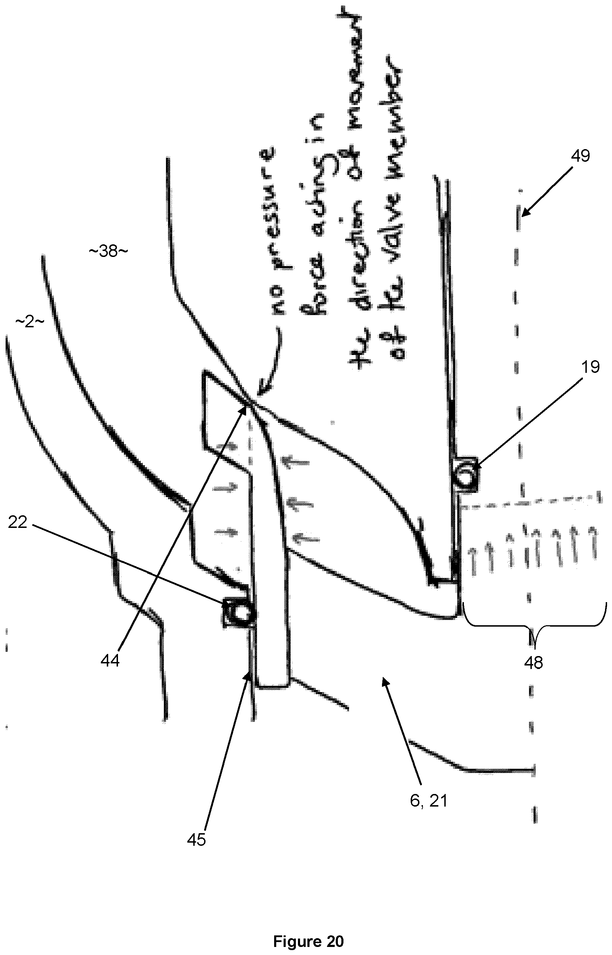

An alternative configuration of the invention is where there is no net first pressure area, that is D1 and D2 are equal as shown in Figure 20, the only net pressure is that supplied by D3 defining the second pressure area 48. The annular chamber 38 can be fully balanced as to enable easier opening, which can be referred to as neutral annular chamber balancing.

The stem seal diameter D3 forming the second pressure area 48 (downstream facing pressure area) is still acted upon by the inner chamber 42 pressure, and always in the closing direction when there is positive pressure present. If the inner chamber pressure drops below atmospheric pressure there can be a net opening force generated, however the valve seating spring/other bias would be selected to accommodate/overwhelm this pressure force to ensure valve closure is maintained, if opening under vacuum conditions is seen as detrimental.

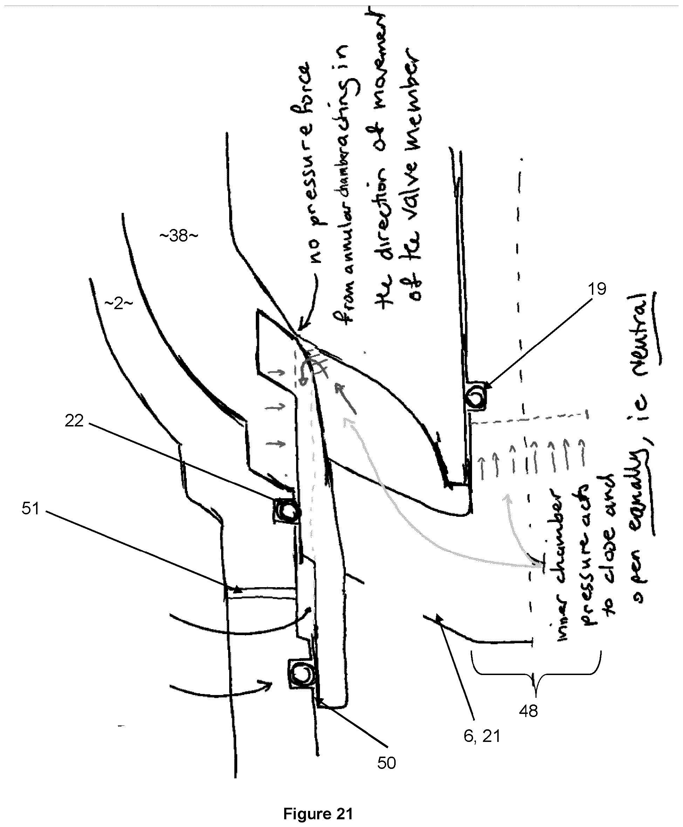

A further configuration of the present invention is what could be termed "fully neutrally balanced". The schematic for this is shown in Figure 21. This is achieved by the sealing diameters between the body and valve member D2, and the valve member and the bonnet D1, to form a first pressure area 47 equal to but opposite to second pressure are 48 defined by the third sealing diameter or perimeter D3 of the stem. This results in the valve member neither opening or closing under operating conditions and requires the actuator to move it.

The stem seal pressure area contributes to the downstream facing pressure area as in the Neutral annular chamber balancing option, but an additional seal is added (D4 in Fig 22). This, when present, adds an annular pressure area which acts in the opposite direction, resulting in NO net downstream facing pressure area. With no net upstream or downstream facing pressure areas, the valve is fully balanced.

The term here overall is taken to mean a net difference, either facing upstream or downstream.

A preferred embodiment for an optimal bidirectional sealing actuated valve system, is one where the effective sealing diameters are manufactured such that first pressure area 47 is between 30%-70%, and preferably about 50% of the second pressure area 48. This enables even energising of the seat against differential pressure in both directions and optimal seat and actuator design.

A further embodiment of the present invention in the preferred form is the second pressure area 48 is larger, but not more than 20% larger, than the first pressure area 47, paired with a closing or actuator bias that is of sufficient force to hold the valve closed against a vacuum condition in the inner chamber 42.

The closing pressure at the sealing periphery 29 between the endless skirt 7 of the valve member 6 and the sealing surface of the valve bonnet or actuator, in this case the sealing surface is on the flow conditioner 17 can be varied, especially when that sealing interface between the valve member and flow conditioner is considered as a sealing surface 29A, rather than as a line or periphery, as shown in Figure 34.

In Figure 34 there is a fourth sealing diameter or periphery 50, D4 which with the first sealing diameter or periphery 44, D1 defines the sealing periphery surface 29A. The angle of this surface Alpha $\alpha$ is the angle this surface 29A presents to the longitudinal actuator axis 49. The total area of surface 29A for a given pressure of the fluid being controlled, and the material hardness of the endless skirt 7 and flow conditioner 17 that engage to form the surface 29A (or other components that form that interface surface 29A) can be varied to allow either, or both, on sealing, to undergo elastic, transient, or plastic deformation. Transient deformation is when any highs present at the interface surface 29A are plastically deformed.

The actuator 15 in one variation may have a piston 33 on which upper surface a pressurised control fluid may act. The piston in turn is connected to the stem 8. Control fluid, e.g. air or liquid, will act on the piston 33 and against a bias 34, for example a return spring. When the pressure acting on the piston 33 can overcome the bias 34 and any net pressure acting on the valve element, the control pressure will move the valve element 6 from the closed position to the open position. When it is desired to close the valve the control fluid pressure is reduced and the bias 34 and any net pressure on the valve element from the fluid it is controlling will move the valve element to the closed position. This is for a biased closed valve. The surface the control fluid acts on, and the direction of the bias may be swapped to have a biased open valve. Other forms of actuator may also be used. One such version is shown in Figures 18 and 19 which uses a rotary action inside the actuator to move the valve member 6.

In a different embodiment, as a 'fail open' design, the actuator 15 would bias the valve to an open position, for example with a spring moved to the underside of the actuator 15. In this configuration the pressure bias to close the valve would still be present to assist with sealing once the actuator has been energized to close the valve - but the bias would be sufficiently strong to drive the valve open upon loss of energy and force to the actuator.

There is a flow conditioner 17 shown in close up in Figure 35 as described which can provide the tangential edge between the valve bonnet 5 or actuator 15 and the stem 8. The flow conditioner 17 can be selected depending on the fluid type. As an example, the selection of flow conditioner 17 can depend on at least the viscosity, phase, inclusions, of the fluid. Further, the selection of the flow conditioner 17 can also be for the desired purpose of the flow conditioner 17 for example to keep the flow laminar, keep the flow turbulent, remove or add cavitation, improve mixing of the fluid, or similar. As such, the flow conditioner 17 may be altered to vary the effect the flow condition has on the flow. The flow conditioner 17 has an aperture 18 through which the stem 8 extends into the actuator and bonnet, and out of the actuator and bonnet to the vanes 21 and endless skirt 7. The aperture 18 also holds, in the preferred form, the stem seal 19 which can slidingly seal the stem. The stem seal 19 may be positioned near the actuator 15, to provide a more compact design. The stem seal may be actively energised by the pressure of the fluid passing through the valve, the control fluid, or may be statically energised.

In an open position, an opening is defined between the endless skirt 7 and the valve bonnet 5 such that the fluid can flow through the opening and through the interior diameter of the endless skirt 7, as described. Further, the open position provides a tangential edge 11 between an uppermost stream edge 12 of the endless skirt 7, a downmost stream edge 13 of the endless skirt 7, and/or a downstream edge of the valve bonnet 14 transition to the central stem 8. The tangential edge is provided as a primarily smooth surface such that the flow through the cavity of the valve 1, in particular the valve member 6, is smooth. The primarily smooth surface is advantageous as may provide increased efficiency of the valve 1 due to a reduction of friction, turbulence, or other deterrents. The primarily smooth surface also provides the advantage of less protrusions within the flow path and therefore a reduction in the potential disadvantages of these protrusions which may include build-up of material from the flow, additional cleaning requirements, dead zones of flow, or otherwise.

Likewise, the flow conditioner 17 may aid in in directing the fluid flow through the endless skirt 7 and keeps the flow attached. The flow path through the valve body 2 from inlet 3 to outlet 4 may be a constant cross section.

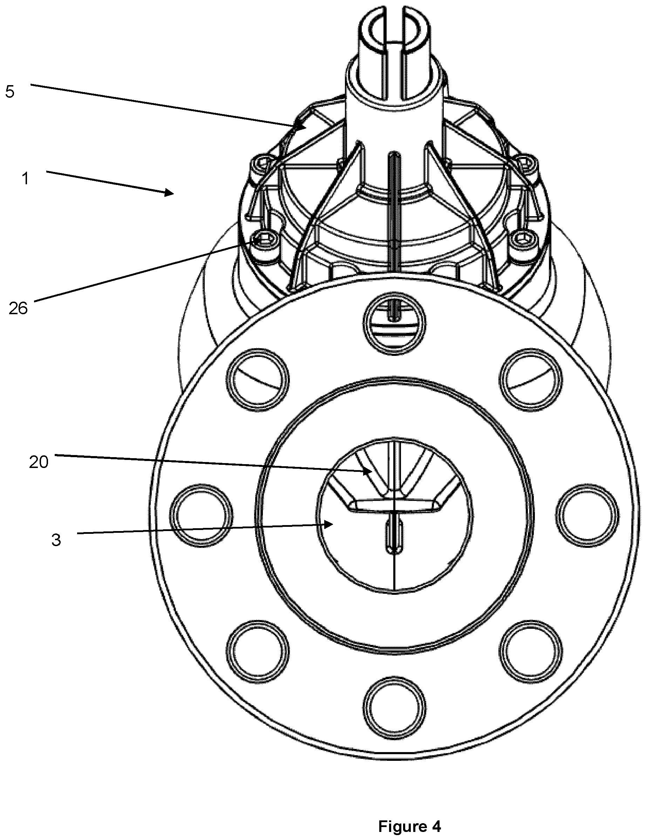

There is a flow splitter 20 downstream from the inlet 3 prior to the valve member, in the annular chamber 38 as shown in Figures 6 and 4. The flow splitter 20 may be capable of splitting the flow of the incoming fluid vertically, horizontally, or both. The flow splitter 20 may assist with diverting the flow to improve the flow through the endless skirt 7.

Whilst the valve has been described as flowing from the inlet to outlet as described it may also control flow of fluid in the other direction, such that what was the outlet is now the inlet, and what was the inlet is now the outlet.

A clear additional advantage of the present invention is the location of the majority, or all of the actuator within the valve body and only a comparatively valve bonnet extending therefrom. This provide a compact and versatile valve 1.

The invention provides for valves that have flexible pressure balancing options, the actuation force requirements of the valve are decoupled from the operating pressure and flow capacity, and the chamber layout options allow high flow capacity for the size.

Further, only part of the valve 1 needs to be removed to be serviced - the unitary assembly 16 the valve bonnet forms, and such "through bonnet" servicing is often faster than full valve disassembly from its connected pipework - meaning that bench servicing time can be shorter and therefore cheaper. Servicing and repairing this way leaves the valve body 2 connected to the pipe work, the valve bonnet is removed as a unitary assembly 16, a new or working unitary assembly 16 can then be installed back into the still installed valve body 2 and the valve 1 can then be re-commissioned without lengthy delay. No re-sealing or reconnecting of the valve body 2 is needed. The removed unitary assembly 16 can then be bench service and put back into stock as necessary.

The architecture of the present valve when viewed for example in Figure 5 is one that has no through wall thickness surfaces that are in contact with the fluid on both sides. Valve body 2 is defined by a wall as shown that has external surfaces defining the exterior 68 of the valves, and interior surfaces that define the duct or cavity within the valve body. There are no intermediate walls in contact with the fluid on both their sides internally of the valve body. The external surfaces are directly opposed to a mating internal surface through the thickness of the wall. Unlike prior art valve, there are no through wall opposing internal surfaces of the valve body that are in contact with the controlled fluid under pressure on both sides, there is only a continuous internal surface, no surface that doubles back on itself, so it is in contact with the controlled fluid on both sides. This leads to a valve that can be more easily manufactured and the fluid when moving through the valve sees a continuous smooth path. The valve body, in so far as surfaces the fluid can contact is only defined by the outer wall of the valve body.

Shown in Figure 36 is a close up of a partial valve body 2 and a valve member 6 of a valve 1 in the closed position. The endless skirt 7 is shown that can move as previously described relative to the valve body 2 via a sliding interface between the outer periphery 101 of the endless skirt 7 and the interior diameter 9 of the valve body such that it is retained co-axially within the valve body 2. The valve member 6 is sealed to the valve body 2 as previously described. In this variation the sealing is achieved with a flexible diaphragm 69 sealed to the outer periphery 101 of the valve body and sealed to the valve body. Again, the result being that when the valve body is in the closed position and sealed against the valve bonnet at sealing periphery 29 as shown no fluid can pass from the inlet volume 38 to the inner chamber 42, or vice versa. The flexible diaphragm 69, in this embodiment being a bellows, determines the second effective sealing diameter 45 or D2, that with the first effective sealing diameter 44 or D1 forms the first pressure area 47. The second effective sealing diameter 45 D2 is determined by the mean diameter of the flexible diaphragm 69.

In conjunction with Figure 63 the effective diameter of a flexible diaphragm, as a bellows in this example, is calculated by

I. Definitions

A$_e$:    Bellows Effective Area
D$_m$:    Bellows Mean Diameter
F:    Pressure Thrust Force
ID:    Bellows Inside Diameter
p:    Pressure
OD:    Bellows Outside Diameter

(1) Effective area:

$$A_e = (\pi/4)Dm^2$$

(2) Mean diameter:

$$Dm = (ID + OD)/2$$

(3) Pressure Thrust Force:

$$F = p * A_e$$

The central stem 8 is also co-axially engaged to the valve bonnet so it is supported and restrained to only move axially (up and down in the Figure shown). The central stem 8 is engaged to a stem seal 19 that in this variation performs the dual role of sealing and co-axially supporting the central stem from the valve bonnet 5. The stem seal 19 determines the third effective sealing diameter 46 or D3 and the second pressure area 48. Use of a bellows in this configuration is desirable for very high temperatures, for example in the range of 400°C to 2000°C and ideally around 900°C to 1000°C. Fluid examples here may be high pressure high temperature oil or gas, for example but not limited to hydrogen.

A bellows as a flexible diaphragm 69 is also desirable at very low temperatures for example in the range of -60°C to near absolute zero, -273°C. Fluid examples here may be low temperature liquid or near liquid gases such as but not limited to hydrogen, helium, oxygen or nitrogen. Plastics and rubbers at these extremes of temperature are not suitable as above 250°C, and below -60°C they tend to crack, embrittle, erode, decompose or otherwise fail in their ability to seal.

Flexible diaphragms such as bellows or a rolling diaphragm are also desirable where complete hermetic sealing is necessary, for example difficult to seal fluids such as hot oils, hydrogen or toxic or dangerous substances.

Figure 37 shows a variation of that shown in Figure 36, again in the closed position preventing flow, where the endless skirt 7 acts as a structure for sealing to the valve bonnet 5, connecting to a flexible diaphragm 69, and connecting to the vanes 21 and central stem 8. The flexible diaphragm 69 performs the function of separating the inlet volume 38 from the inner chamber 42. The flexible diaphragm 69 performs some co-axial support of the central stem and endless skirt, but the main co-axial support (and in this case sealing also) is provided by the stem seal 19 between the valve bonnet 5 and the central stem 8. The valve performs in the same way as previously described, movement of the central stem 8 moves the endless skirt away from sealing engagement with the valve bonnet to allow for flow of fluid from the first port and inlet volume 38 to the inner chamber 42 and then to the second port 4, or vice versa. The first effective sealing diameter 44, second effective sealing diameter 45 and third effective sealing diameter 46 are shown.

Shown in Figure 38 is a cross section of the valve shown in Figure 16 that uses a solenoid to actuate the central stem 8. A closing spring 70 is shown within the valve bonnet 5 that acts on the central stem 8 to draw the stem and valve member upwardly to seal on the valve bonnet 5 and thus close the valve 1 as shown. The actuator 15 in this form is an electrically actuated solenoid to move between only two positions to open and close the valve respectively as an on/off valve, or that can be controlled to any position therebetween including on and off to act as a control valve for the fluid. A composite valve bonnet 5 is shown that has a valve bonnet hat 71 that is fastened to the valve bonnet and between them they retain a valve bonnet seal 40 to seal to the valve member in the closed position. The seal 40 may be hard or soft depending on the application.

A hard seal is useful for applications where soft sealing is either not beneficial or not practical, typically these are applications where soft seal inserts would cost more and are unnecessary, or for high temperature, corrosive or abrasive media applications where soft seals would degrade, decompose, or burn. For example in valves utilised in chemical processing plants, metal refining and smelting, power generation plants, mining and mineral processing, oil and gas production at temperatures above 250°C, and typically above 50 bar would likely make use of hard seals, while soft seals would be preferable for lower temperature applications, even at high pressures where sealing performance is highly critical such as some clean fluid (e.g. hydrogen, LNG) services up to high pressures well above 50 bar, for example 700 bar, especially where harder soft seal materials such as PEEK (PolyEthyl Ethyl Ketone) are used. There are also laminated graphite seal inserts which may be considered in-between hard and soft in their performance and characteristics and are typically suitable for conical sealing valves such as TOVs (Triple Offset Butterfly Valve).

The valve 1 shown in Figure 39 is a variation having different sealing on the valve member, which in this variation is a U shaped cup seal as the main seal 22 determining the second effective seal diameter and has separate sliders 72 (as a circular ring) to co-axially guide the movement of the valve member 6. The valve bonnet seal 40 is again retained by a valve bonnet hat 71 and sets the first effective seal diameter. The stem seal 19 is located on the valve bonnet as an o-ring or similar engaged on the stem 8 to seal it and determine the third effective sealing diameter 46. The co-axial support for the stem is also supplied by the stem seal.

Figure 40 shows a similar cross section to Figure 14, showing separation of the co-axial guide for movement of the stem from the sealing of the stem. A flexible diaphragm 69 is used to provide the third effective seal diameter 46. The main stem constraint 73 is on the actuator provided by the actuator piston 33.

A variation shown in Figure 41 as a front on sectional view has a detail of the valve bonnet 5, actuator 15, central stem 8, valve member 6 and endless skirt 7. The sealing of the endless skirt 7 to the valve body 2, and hence the second effective sealing diameter 45 is achieved and defined by a first flexible diaphragm 69A. The sealing of the central stem 8 to the valve bonnet 5, and hence the third effective sealing diameter 46 is achieved by another flexible diaphragm 69B. A third flexible diaphragm 69C is present in the actuator 15 to act as the seal for that component. The flexible diaphragms 69A, 69B and 69C here are shown as bellows, they equally could be a rolling diaphragm or similar. The endless skirt 7 is co-axially aligned with the major (vertical as shown in this figure) axis 49 of the valve 1, actuator 15, and central stem 8 and its moves along this axis. The surrounding valve body 2 (partially shown) and the annular chamber 38 it forms about the endless skirt 7 provides a supporting engagement, which in this view prevents lateral movement of the endless skirt. While the flexible diaphragm provides some lateral support, for example during initial assembly, the main and operational support to resist pressure loading is provided by the sliding engagement of the outer periphery 42 of the endless skirt 7 to the valve body, directly, or indirectly, for example via an insert as shown in Figure 57A, B and Figure 60.

Likewise, the central stem 8 is in co-axial moving supported engagement with the valve bonnet 5 at stem constraint 73, it can slide relative to the constraint 73, but is not sealed at this diameter, this is achieved by flexible diaphragm 69B. Again, while some support is provided by the flexible diaphragm 69B, for example for assembly, the main operative support including when actuated and under operational pressure from the fluid, is provided by this constraint 73.

It is therefore clear that sealing can occur at one diameter and co-axially moving supported engagement can occur at another.

Additional shown is use of a flexible diaphragm 69C to seal the actuator 15 and provide a space internal 88 of the diaphragm 69C and external 89 of the diaphragm 69C. In this configuration actuator pressure applied to the space external 89 of the diaphragm 69C and internal of the valve bonnet hat 71 will provide a force that will drive the actuator piston 33 downwardly against the actuator bias 34, a spring as shown. This will in turn move the stem 8 downwardly, unseating the endless skirt 7 or extension thereof from sealing with the valve bonnet 5 to open the valve and allow flow of fluid under pressure. Removal of the actuator pressure will allow the actuator bias 34 to close the valve. Should there be a control failure and the actuator pressure fails, then the valve in this configuration will fail closed, that is in the event of a failure the valve will close automatically.

Alternatively, the valve can be configured as a fail open valve where the bias acts to push the actuator piston 33 downwardly, For example by being located between the actuator piston 33 and the interior of the valve bonnet hat 71, and the actuator pressure acts on the space internal 88 of the flexible diaphragm 69C driving the actuator piston 33 upwardly against the bias. Failure of control or the actuator pressure will result in the bias driving the actuator piston 33 and thus the stem 8 and endless skirt 7 downwardly, thus opening the valve 1.

Figure 42 shows a right-angle valve similar to Figure 16 from a side on sectional perspective, with a similar flexible diaphragm 69B sealing arrangement of the stem 8 as shown in Figure 41. The endless skirt 7 seals to the valve body 2 at the second effective sealing diameter 45 and is partially guided in its axial movement by the seal 22. However, the main axial support while the valve 1 opens and closes for the endless skirt 7 is supplied by the sliders 72 which as can be seen are at a different diameter to the second effective sealing diameter 45, in this case less than to facilitate ease of removal and maintained of the valve bonnet 5 and valve member 6 assembly. A similar functional separation is shown in Figure 44 where the seal function is separated from the movement guiding functions with separate seal 22 and sliders 72. The stem 8 in Figure 42 is sealed using a flexible diaphragm 69B similar to that of Figure 41 forming the third effective sealing diameter 46. The support for axial movement however is supplied at a different diameter by stem bush 74, and also by the actuator piston 33 in the actuator 15 contained in the valve bonnet. This provides the advantage of hermetic sealing by the flexible diaphragm, and larger diameters for movement support and lower friction.

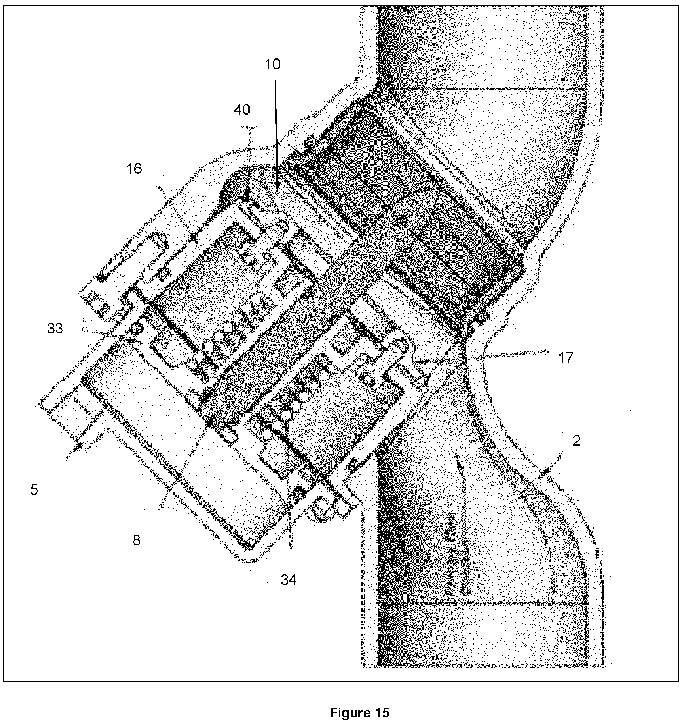

Figure 43 shows a valve 1 similar in layout to that shown in Figure 15, in this configuration the valve member 6 is a two-part configuration with the endless skirt 7 retained to the stem 8 by a stem fastener 75. This allows ease of servicing, for example removal and replacement of the stem, or endless skirt, and use of different materials for each. The flow conditioner 17 also is detachable from the valve bonnet 5 for servicing and also to allow for variation to the valve bonnet assembly dependent on the application the valve is being put into. This is shown likewise in Figure 44, the flow conditioner 17 being held to the valve bonnet 5 by fasteners.

The stem 8 here is stepped 90 going from a larger diameter toward the endless skirt 7 to a smaller diameter going toward the valve bonnet 5. This increased diameter will still locate within the valve bonnet aperture 18. 41, but is greater than the reduced diameter internal of the valve bonnet 5 and so will prevent stem 8 ejection through the valve bonnet should the stem 8 separate from the endless skirt 7. This approach to preventing stem ejection is shown in Figure 44 also.

An insert 57 sealed to the valve body 2 by an insert seal 58 is held in place by the valve bonnet 2 and can be removed when the valve bonnet is removed. This holds the seal 22 between the endless skirt 7 and the valve body 2 in place creating the second effective sealing diameter 45. The endless skirt is supported in its axial movement by the inner diameter of the insert 57, again at a diameter different to that of the second effective sealing diameter.

A stem seal cap 76 is also accessible in the valve bonnet 5 when the actuator 15 is removed. The stem seal cap 76 once removed allows for servicing of the stem seal 19 to allow for in situ servicing. The stem cap seal 76 also retains the flow conditioner 17 as it is threadedly connected to the rear of the flow conditioner 17. Thus, the flow conditioner can also be replaced for different valve scenarios or for maintenance. The flow conditioner 17 also retains the seal 40 that seals the endless skirt 7 to the valve bonnet 5, by sandwiching the seal 40 between the flow conditioner 17 and the valve bonnet 5.

The axial support for the stem 8 is supplied by the actuator piston 33 at the piston diameter and then at an actuator piston stem 77.

A further variation is shown in Figure 45 where the valve bonnet 5 is elongated and puts the actuator 15 some distance from the valve body 2 and fluid 91 under control. This allows for thermal separation of the actuator 15, for example when there are extreme temperature differences between the fluid 91 under pressure and control and the external atmosphere the actuator 15 or valve 1 is located in.

A manually activated valve 1 is shown in Figure 46 and with variations of the manual activation shown in Figures 47A and 47B. The valve 1 in Figure 46 is biased closed by actuator bias 34. A user can activate the valve 1 by depressing manual control 78, represented by a button here, to open the valve 1. The valve 1 will close again once the manual control 78 is released under action of the bias 34. Alternatively, the manual control 78 may be latched permanently open, or latched temporarily such that once activated the valve stays open, either until the user releases the latching, or an external control does so. Sliding 72 and sealing 40 separation is also shown on the endless skirt 7. Manual control 78 as a lever connected via a hinge is shown in Figure 47A, and further manual controls are shown as a wheel 78A driving a thread, rack and pinion 78B, latch 78C, cam and roller profile 78D and cam 78E options are shown in Figure 47B.

Figure 48 shows a valve 1 in the closed position 27 with valve bonnet 5 keyed rotationally 93 to the valve body 2 so it cannot rotate, and the actuator 15 is threaded into the valve body 2. The actuator 15 bears on the valve bonnet 5 as it is threaded in to hold it in place. On removal the process is reversed and a circlip 94 on the valve bonnet 5 (accessible when the actuator 15 is disassembled) catches the actuator 15 to pull the valve bonnet 5 out of the valve body 2.

Fig 49 shows a valve 1 in the closed position 27 with a multiturn electrical actuator 15 which drives a threaded portion which in turn acts on a threaded upper region 95 of the stem 8 to open and close the valve 1, this threaded connection 95 turns rotation of the actuator 15 into linear movement of the valve member 6. The stem 8 or endless skirt 7 is keyed to prevent rotation, e.g. using one or more of the vanes 21 of the valve member and an extension of the flow conditioner 17 (such as shown in Figure 35), a further detail of this is shown in Fig 56 showing the vanes 21 nesting within recesses (thus forming extensions) of the flow conditioner 17. A bearing 96 supports the threaded interface between the actuator and stem 8 and is sandwiched between the actuator 15 and valve bonnet 5. A valve bonnet fastener 26 retains the flow conditioner 17 to the valve bonnet 5.

Fig 50 shows a variation of the valve 1 in the open position 28 of the present invention, with orientation similar to that of Figure 16, and where the valve body 1 has threaded connections at the first port 3 and second port 4, then in turn will connect to conduits (not shown) for the fluid under pressure to arrive at the valve 1, be controlled, and then leave the valve 1. The threaded connection may be of any type, and in this case is a tapered pipe style engagement. Actuation here is via a piston 33 style actuator 15, that using a control fluid under pressure, for example air, gas, water or similar and acts against a closing spring 34, such that control fluid acts against the top side of the piston 33 against the closing force of the spring 34, to open the valve 1, and is therefore a fail closed valve configuration. Again, it could be configured to be fail open, by the control fluid acting on the underside of the piston 33, and the spring 34 action on the topside of the piston (or similar) to open the valve 1.

A valve 1 in the closed position 27 configured for controlling fluid at high temperature is shown in Figure 51 and is a similar orientation valve to that in Figure 14. The actuator 15 is a piston 33 on which a control fluid (e.g. a gas such as air, or carbon dioxide, or a fluid such as water or oil) operates - the volume above the piston 33 being encased in a flexible diaphragm 69, in this case a bellows. The control fluid therefore when acting on the piston 33 in the space internal 88 of the flexible diaphragm 69 will drive the piston down toward the valve body 2, and via the stem 8 connected thereto will open the endless skirt 7 away from the valve bonnet 5 and flow conditioner 17 to allow flow of fluid. An actuator bias 34 acts against the force of the control fluid to close the valve 1. Thus, in the absence of sufficient control fluid pressure to overcome the bias 34 the valve will close, again in the event of a failure the valve is failsafe and will close. As described above the valve can be set to a fail open configuration with the spring acting on top of the piston 33 and the bellows enclosing a control fluid pressurisable space 89 below the piston 33. A port 37 is also shown that can detect leaks of the seal 53 between the valve bonnet 5 and valve body 2, and or the stem seal 19. A similar valve to that of Figure 51 is shown in Figure 52, where the flexible diaphragm 69 is a high temperature graphite bellows instead of a polymer seal or rolling diaphragm. The advantage of a high temperature graphite is that it will not decompose at high temperature whereas a rubber material would. The seals 19, 22 in Figures 51 and 52 are all shown as square in cross section and also are a hard seal, for high temperature material, as earlier described.

A range of valves with variations in the valve member are described and shown in Figures 53A to 55.

The variation shown in Figures 53A and B has a solid connection to the stem 8 rather than a plurality of vanes. The stem 8 here having an increase in diameter 90 prior to the valve bonnet 5 to reduce or remove the chance of stem ejection. The endless skirt 7 shown here is sealed at shoulder seal 80, which can be any form of seal necessary, and as a solid uninterrupted skirt 7 is presented to the fluid in either chamber 38 or 42 then no fluid can flow.

The endless skirt 7 has at least one passage 81, and preferably a plurality of passages 81 running from the outer periphery 101 to the interior periphery 9. These may be linear as shown or may take on any pathway shape and cross section as necessary for the application. Thus, they may curve to align flow, or be tortuous to slow flow.

As best shown in Figure 53B, as the endless skirt 7 moves downwardly successive passages 81 are exposed to the fluid under pressure and the fluid can then flow through the passages 81. This type of obturator or valve member 6 is useful when there is a very high (200bar or more) difference between the upstream (e.g. in chamber 38) and downstream fluids (e.g. in chamber 42) under control. The slow exposure of the passageways 81 as flow paths reduces shock as only small volumes of fluid may flow through the endless skirt 7 of the valve member 6. The endless skirt 7 is sealed at first effective sealing diameter 44 and second effective sealing diameter 45 which are differing again to produce first pressure area 47, and also the stem 8 is sealed at third effective pressure diameter 46, creating the second pressure area 48, again the effect being the fluid under pressure and control biasing the valve to a closed position.

A variation of the valve member 6 of Figure 53 is shown in Figure 54 in the open position 28, where the interior diameter of the endless skirt 7 is partially closed by a plate 97, in this case with a plurality of passages 81 of desired shape through it. This partially obscured or closed endless skirt 7 outflow produces a drag force that counters or overcomes the pressure bias closed formed by the first and second pressure areas. Visible is the threaded connected 95 such as may occur between a rotary actuator 15 and the threaded stem to turn rotary action into linear action to open and close the valve member 6. The vanes 21 in this case engage with the flow conditioner 17 to prevent rotation of the valve member. A port 52 is also present from the inner chamber 42 to the stem seal 19 to energise the seal with the fluid pressure.

A variation with further flow control is shown in Figure 55 to control, reduce or remove cavitation. The valve 1 still operates on the same inventive principle and has a valve body 2, valve bonnet 5 incorporating an actuator 15 to move the stem 8 and hence endless skirt 7 via vanes 21. The endless skirt 7 in turn seals to the valve bonnet 5 at a first effective sealing diameter 44, alternatively the interior of the endless skirt may seal to the puck 82 above the passages 81, is in supported moving engagement with the valve body 2 and in sealing engagement also at the second effective sealing diameter 45. The stem 8 is sealing 19 to the valve bonnet at the third effective sealing diameter 46. Within the endless skirt 7 there is a puck 82, which is sealed by a puck seal 83 to the inner periphery of the endless skirt 7. The puck 82 has again a plurality of passages 81 from an outer diameter of the puck to the lower portion of the puck 82 and may take any path necessary. For example, as shown they have a final shape that causes the flow through the passages to converge in the centre of the second port 4.

The endless skirt 7 can move up and down in the previously described way and as it moves downwardly in the Figure as shown it progressively exposes more and more passages 81.

A valve 1 in the closed position 27 with spring-controlled sealing pressure is shown in Figure 56. A rotary actuator 15 acts via a threaded portion 95 between it and the stem 8 to move the valve member 6 open and closed as previously described, with first, second and third effective sealing diameters, and the endless skirt 7 supported as it moves by the valve body 2, a flow conditioner 17 is present and engages with the vanes 21 to prevent rotation of the valve member due to the rotary action. A port 52 is present to allow for pressure balancing within the actuator 15 and leak detection.

As the stem 8 moves to open the valve member (downwardly) under action of the actuator 15 the stem 8 acts against a first bias or spring 84 of comparatively low spring force, compared to a second spring 85. The first spring 84, will ensure the stem 8 and valve member 6 move downwardly and open the valve. The second bias or spring 85 acts as a force limit to closing of the valve, and has a higher spring force than the first spring, a preferred ratio is a seating force of between 400N and 800N with a spring rate of 20-40N/mm (At nominal valve size 0.75", approximately 1.9cm, and pressure class ANSI 600 correlating with a working pressure of approximately 100 bar, with a soft seat insert and fluid media 91 of water, and with a bonnet length allowing for an ideal spring free length between 40 and 80mm). As the rotary actuator acts to close the valve member 6, and the valve seats against the valve bonnet 5, the rotary actuator will start to wind itself down the threaded engagement 95 with the stem 8. The second bias 85 will then be compressed by the rotary actuator action acting through bearing 86 and bush 87 to compress spring 85. This will limit the seating force applied by the endless skirt 7 to the valve bonnet 2, the second bias 85 is chosen to provide the desired seating force. Such a spring biased valve is useful to limit the sealing force and prevent over stressing of the valve should for any reason the actuator overdrive the stem. This arrangement will work with other actuators also, such as piston or solenoid operated linear actuators, again to control the sealing force.

A variation to allow flushing of the endless skirt 7 is shown in Figures 57A where the valve member is in the closed position, and Figure 57B in the open position. There are no enclosed volumes around the external periphery 101 of the endless skirt 7. There is an open void 98 present behind the endless skirt 7 external periphery 101 and this will flush by low pressure being formed when the valve is just opening, then as the valve opens there is large flow moving past the void 98 to remove anything in the region about the endless skirt 7.

A seal retaining variation is shown in Figure 58 where the valve bonnet seal 40 is retained by a cap 86 on the outer diameter of the valve bonnet 5 which is a useful configuration when the valve is getting small for example in a 6mm diameter valve member 6 here, there may also be sealing of the endless skirt 7 to the cap 86 when in the closed position, and a removable cap 86 as part of the valve bonnet 5 allows for easy replacement of the cap and seal 40.An energised stem seal 19 is also shown to provide the third effective sealing diameter. This variation can be made to be fire-safe, or high temperature safe, due to having both the soft seal insert 40, and the hard-face seals of the cap 86 available between the bonnet 5 and valve member 6 so that in the case that the soft seal were to fail at high temperature the hard seal is still present and functioning.

Figure 59 shows further detail of Figure 56 non ejection stem 8 due to the increased diameter or step 90 as previously described, and a second port adapter 99 to shape the flow, in this case out, of the second port 4.

Shown in Figure 60 is a valve 1 with additional detail of Figures 24 and 57. In Figure 60 an insert 57 is used to carry the seal 22 of the endless skirt 7 to the valve body 2. The insert can also be shaped as shown to control the outflow of the valve. The seal 22 as shown in Figures 57A, 57B and 60 is retained via a recess into the insert 57 shown in Figure 60. In this variation the sealing between the endless skirt 7 and valve body 2 is still present, it is just indirect via the insert 57. Insert seal 58 seals between the insert and the valve body 2. The insert seal 58 between the insert 57 and valve body 2 is of an arbitrary diameter, provided it still enables the second effective sealing diameter 45 (D2) of the seal 22 to the endless skirt 7, as this is important for valve pressure balancing as previously described.

Two differing valve 1 variations are shown either side of the halfway line 49 in Figure 61. Both are piston 33 actuated opening and closing, the left-hand view is one is configured to fail open by the actuator bias 34 acting to open the valve, the right hand one being in fail closed configuration by the actuator bias 34 acting to close the valve. A windowed valve bonnet 5 is also shown. The seals 19 and 40 in the left hand half are multi-element seals. The stem 8 can easily be detached from the actuator 15 by use of a circlip or similar. Ports are also present for leak detection and actuator breathing. The seat design for the endless skirt 7 against the valve bonnet 5 uses a convex conical surface of the valve member 6 to seat against a concave conical surface in the bonnet or flow conditioner 17. The valve bonnet 5 can house any size actuator 15 internally, while allowing for a bolted mounting system without restriction of access to fasten or unfasten the bolts 26 as shown. An insert 57 is also shown in the left hand half that has the seal 40 mounted on it, and is retained by the valve bonnet and can be removed with the valve bonnet, or can easily be slid out after valve bonnet removal.

Figure 62 shows a cross section of the insert 57 with windows 100 showing the shape of the windows 100 that can be used to control the flow of the fluid 91 as it passes through across the insert 57. The insert 57 can be sacrificial in that should it be damaged, it can be removed without further damage to the valve.

The foregoing description of the invention includes preferred forms thereof. Modifications may be made thereto without departing from the scope of the invention.

Whilst the invention has been disclosed in the context of a number of sperate aspects or embodiments and preferred features thereof, it will be apparent to the skilled person that features from one embodiment or aspect may be combined with features from another embodiment or aspect in any operable combination.

## Claims

1. **A valve** to control flow of a fluid under pressure, comprising,

A valve body with a first port, and a second port, to, in part, define a duct therebetween, to duct the flow of the fluid between the first port and the second port,

A valve bonnet removably engaged to the valve body between the first port and the second port, to further define the duct, the valve bonnet having a valve end interior to the duct, and an opposing actuator end exterior to the duct,

A valve member having an endless skirt at least in part controlled by a central stem within the duct from the valve bonnet, the endless skirt having an outer periphery, which the valve body defines an annular chamber about, and the endless skirt having an inner periphery which defines an inner chamber, the valve member having a closed position to prevent flow of fluid, and an open position to allow flow of fluid,

The endless skirt, when in the closed position, sealing against the valve bonnet at a first effective sealing diameter, the endless skirt in co-axially moving supported engagement with the valve body or a part thereof, and the endless skirt in sealing engagement with an interior periphery of the annular chamber at a second effective sealing diameter, the first effective sealing diameter greater than the second effective sealing diameter, a first pressure area defined between the first effective sealing diameter and the second effective sealing diameter, the first pressure area on receipt of fluid under pressure providing a bias toward the closed position,

The endless skirt when in the open position defining an opening between the valve bonnet and endless skirt to allow fluid flow between the first port, via the opening and at least an interior diameter of the endless skirt, and the second port,

the central stem in co-axially moving supported engagement with the valve bonnet or part thereof and the central stem in sealing engagement with the valve bonnet at a third effective sealing diameter, less than the second effective sealing diameter, the third effective sealing diameter defining a second pressure area, the second pressure area on receipt of fluid under pressure providing a bias toward the closed position,

such that a valve is provided that is biased at least by the fluid under pressure towards the closed position when at and in between the open position or closed position when positive pressure is present within the duct.

2. A valve as claimed in claim 1 wherein the endless skirt is in sealing engagement at the closed position and with an interior periphery of the annular chamber at a second effective sealing diameter.

3. A valve as claimed in either claim 1 or 2 wherein the valve bonnet has an actuator therein for external control of the valve member position.

4. A valve as claimed in any of the preceding claims where in the first pressure area is between 30% and 70% of the second pressure area.

5. A valve as claimed in any one of the preceding claims wherein the first pressure area is approximately 50% of the second pressure area.

6. A valve as claimed in any one of the preceding claims wherein the endless skirt is in sealing engagement at, and between, the open position and the closed position, with the interior periphery of the annular chamber.

7. A valve as claimed in any one of the preceding claims wherein the first pressure area on receipt of fluid under pressure from the outer chamber provides a bias toward the closed position.

8. A valve as claimed in any one of the preceding claims wherein an extension there of the endless skirt seals to the flow conditioner, actuator, bonnet or parts thereof to seal off the fluid flow.

9. A valve as claimed in any one of the preceding claims wherein the valve body has a valve bonnet aperture to which the valve bonnet is operatively connected to seal the duct, other than the first port and second port.

10. A valve as claimed in any one of the preceding claims wherein the seal providing the sealing of, the valve bonnet to the central stem, and or, the endless skirt to the valve body, is achieved by any one or more of a resilient member in sliding sealing engagement with the central stem, or endless skirt, or a flexible diaphragm sealing between the valve bonnet and the central stem, and or, the endless skirt and the valve body.

11. A valve as claimed in any one of the preceding claims wherein the valve bonnet including any actuator therein, and valve member are a unitary subassembly that is removable from the valve body.

12. A valve as claimed in any one of the preceding claims wherein, the valve member and sealing elements alone separate the inlet and outlet volumes.

13. A valve as claimed in any one of the preceding claims wherein the endless skirt extends in an axis parallel to a main axis of the central stem and actuator.

14. A valve as claimed in any one of the preceding claims wherein the endless skirt presents an annular sealing surface to engage and seal to a duct interior presenting surface of the valve bonnet when in the closed position or there is a flexible diaphragm.

15. A valve as claimed in any one of the preceding claims wherein the endless skirt is supported from the central stem by at least one vane.

16. A **method of providing a valve** to control flow of a fluid under pressure, comprising,

Providing a valve body with a first port, and a second port, to, in part, define a duct therebetween, to duct the flow of the fluid between the first port and the second port,

Providing a valve bonnet removably engaged to the valve body between the first port and the second port, to further define the duct, the valve bonnet having a valve end interior to the duct, and an opposing actuator end exterior to the duct,

Providing a valve member having an endless skirt supported by a central stem within the duct from the valve bonnet, the endless skirt having an outer periphery, which the valve body defines an annular chamber about, and the endless skirt having an inner periphery which defines an inner chamber, the valve member having a closed position to prevent flow of fluid, and an open position to allow flow of fluid,

Configuring the endless skirt or an extension thereof, when in the closed position, to seal against the valve bonnet at a first effective sealing diameter, providing the endless skirt with coaxially moving supported engagement with the valve body or a part thereof, and the endless skirt sealing engagement at the closed position, with an interior periphery of the annular chamber at a second effective sealing diameter, the first sealing diameter greater than the second sealing diameter, defining a first pressure area between the first effective sealing diameter and the second effective sealing diameter, the first pressure area on receipt of fluid under pressure providing a bias toward the closed position,

The endless skirt when in the open position defining an opening between the valve bonnet and endless skirt to allow fluid flow between the first port, via the opening and at least an interior diameter of the endless skirt, and the second port,

Providing the central stem with co-axially moving supported engagement with the valve bonnet or part thereof and the central stem being in sealing engagement with the valve bonnet at a third effective sealing diameter, less than the second effective sealing diameter, the third effective sealing diameter defining a second pressure area, the second pressure area on receipt of fluid under pressure providing a bias toward the closed position,

such that a valve is provided that is biased at least by the fluid under pressure towards the closed position when in either the open position or closed position when positive pressure is present within the duct.

**Figure 1**

**Figure 2**

41

4

15

38

1

20

3

**Figure 3**

**Figure 4**

4

27

16

37

~39~

34

25

33

15

6

29

40

2

5

1

3

~38~

**Figure 5**

Figure 6

8

31,
47

7

29

~42~

~30~

21

6

9

Figure 7

Figure 8

Figure 9

47

48

Figure 10

**Figure 11**

Figure 12

16

10

Figure 13

Figure 14

Figure 15

Figure 16

17

6

Figure 17

Figure 18

Figure 19

~38~

~2~

no pressure
force acting in
the direction of movement
of the valve member

49

19

22

44

45

6, 21

48

**Figure 20**

Figure 21

**Figure 22**

**Figure 23**

REPLACEABLE WEAR INSERT

Figure 24

VALVE BODY FLUSHING CHANNEL

Figure 25

VALVE BODY SEAL

Figure 26

Figure 27

Figure 28

**Figure 29**

Figure 30

B)

A)

16

23

1

23

16

1

Figure 31

**Figure 32**

**Figure 33**

Figure 34

Figure 35

FIG. 36

FIG. 37

FIG. 38

FIG. 39

FIG. 40

FIG. 41

FIG. 42

FIG. 43

FIG. 44

FIG. 45

FIG. 46

**(A)**

**(B)**

# FIG. 47

FIG. 48

# FIG. 49

FIG. 50

FIG. 51

FIG. 52

FIG. 53A

FIG. 53B

FIG. 54

FIG. 55

FIG. 56

FIG. 57A

FIG. 57B

FIG. 58

FIG. 59

FIG. 60

FIG. 61

FIG. 62

# FIG. 63

Europäisches
Patentamt

European
Patent Office

Office européen
des brevets

# EUROPEAN SEARCH REPORT

**Application Number**

EP 24 16 3559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 077 425 A (DRORI MORDEKI) 7 March 1978 (1978-03-07) * claim 7; figures 1-3 * | 1-16 | INV. F16K3/26 F16K3/24 F16K41/10 |
| X | GB 1 038 161 A (NAKSKOV SKIBSVAERFT AS) 10 August 1966 (1966-08-10) | 1-10, 12-14,16 | |
| A | * claim 1; figures 2, 4 * | 11,15 | |
| X | US 3 251 376 A (WORDEN DONALD A) 17 May 1966 (1966-05-17) | 1-9, 12-14,16 | |
| A | * column 2, line 28; figure 1 * | 10,11,15 | |
| X | US 2 970 806 A (REXFORD DONALD L ET AL) 7 February 1961 (1961-02-07) | 1-9, 11-14,16 | |
| A | * column 6, line 46; figures 1-2 * | 10,15 | |

**TECHNICAL FIELDS
SEARCHED (IPC)**

F16K

The present search report has been drawn up for all claims

| Place of search | Date of completion of the search | Examiner |
|---|---|---|
| The Hague | 30 August 2024 | Regaud, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 24 16 3559

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| US 4077425 | A | 07-03-1978 | NONE | | |
| GB 1038161 | A | 10-08-1966 | NONE | | |
| US 3251376 | A | 17-05-1966 | NONE | | |
| US 2970806 | A | 07-02-1961 | GB | 961977 A | 24-06-1964 |
| | | | US | 2970806 A | 07-02-1961 |

EPO FORM P0459

For more details about this annex : see Official Journal of the European Patent Office, No. 12/82